(19) Europäisches Patentamt
European Patent Office
Office européen des brevets

(11) EP 2 961 167 A1

(12) EUROPEAN PATENT APPLICATION
published in accordance with Art. 153(4) EPC

(43) Date of publication:
30.12.2015 Bulletin 2015/53

(51) Int Cl.:
H04N 19/187 (2014.01)　　　H04N 19/30 (2014.01)

(21) Application number: 14754280.7

(86) International application number:
PCT/KR2014/001516

(22) Date of filing: 25.02.2014

(87) International publication number:
WO 2014/129872 (28.08.2014 Gazette 2014/35)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 25.02.2013 US 201361768838 P

(71) Applicant: Samsung Electronics Co., Ltd.
Gyeonggi-do 16677 (KR)

(72) Inventors:
• ALSHINA, Elena
Suwon-si, Gyeonggi-do 443-739 (KR)
• ALSHIN, Alexander
Suwon-si, Gyeonggi-do 443-739 (KR)

(74) Representative: Appleyard Lees
15 Clare Road
Halifax HX1 2HY (GB)

(54) **DEVICE AND METHOD FOR SCALABLE VIDEO ENCODING CONSIDERING MEMORY BANDWIDTH AND COMPUTATIONAL QUANTITY, AND DEVICE AND METHOD FOR SCALABLE VIDEO DECODING**

(57)　　Provided are scalable video encoding and decoding methods for optimization of a memory bandwidth and a computational quantity when inter-layer prediction is performed.

The scalable video encoding method includes determining a reference layer image from among base layer images so as to perform inter-layer prediction on an enhancement layer image, determining, using the enhancement layer image, not to perform inter prediction on enhancement layer images when an upsampled reference layer image is determined by performing inter-layer (IL) interpolation filtering on the reference layer image, and encoding a residue component between the upsampled reference layer image and the enhancement layer image.

FIG. 2

**Description**

TECHNICAL FIELD

The present disclosure relates to scalable video encoding and decoding methods. In more detail, the present disclosure relates to scalable video encoding and decoding methods for optimization of a memory bandwidth and a computational quantity when inter-layer prediction is performed.

BACKGROUND ART

As hardware for reproducing and storing high resolution or high quality video content is being developed and supplied, a need for a video codec for effectively encoding or decoding the high resolution or high quality video content is increasing. According to a video codec of the related art, a video is encoded according to a limited encoding method based on a macroblock having a predetermined size.

Image data of a spatial domain is transformed into coefficients of a frequency domain via frequency transformation. According to a video codec, an image is split into blocks of predetermined size, discrete cosine transformation (DCT) is performed on each block, and frequency coefficients are encoded in block units, for rapid calculation of frequency transformation. Compared with image data of a spatial domain, coefficients of a frequency domain are easily compressed. In particular, since an image pixel value of a spatial domain is expressed according to a prediction error via inter prediction or intra prediction of a video codec, when frequency transformation is performed on the prediction error, a large amount of data may be transformed to 0. According to a video codec, an amount of data may be reduced by replacing data that is consecutively and repeatedly generated with small-sized data.

A multilayer video codec encodes and decodes a base layer video and one or more enhancement layer videos. By removing temporal/spatial redundancies of each of a base layer video and an enhancement layer video, amounts of data of the base layer video and the enhancement layer video may be reduced. According to a reproduction capability of a receiving terminal, only the base layer video may be decoded, or all of the base layer video and the enhancement layer video may be decoded.

DETAILED DESCRIPTION OF THE INVENTIVE CONCEPT

TECHNICAL PROBLEM

The present disclosure provides one or more exemplary embodiments of a scalable video encoding method and apparatus therefor that limit the number of times interpolation filtering is performed, so as to minimize an increase in a memory bandwidth and a computational quantity which occurs when the interpolation filtering is performed for inter-prediction and inter-layer prediction. The present disclosure provides one or more exemplary embodiments of a scalable video decoding method and apparatus therefor in which inter-prediction and inter-layer prediction for an enhancement layer are limited according to a predetermined condition.

TECHNICAL SOLUTION

According to an aspect of the inventive concept, there is provided a scalable video encoding method including determining a reference layer image from among base layer images so as to perform inter-layer prediction on an enhancement layer image; generating an upsampled reference layer image by performing inter-layer (IL) interpolation filtering on the determined reference layer image; and when the upsampled reference layer image is determined via the IL interpolation filtering, determining not to perform inter prediction using enhancement layer images for the enhancement layer image, and encoding a residue component between the upsampled reference layer image and the enhancement layer image.

ADVANTAGEOUS EFFECTS

A scalable video encoding apparatus and a scalable video decoding apparatus according to exemplary embodiments may selectively determine whether or not to perform inter prediction in a single layer or to perform inter-layer prediction by using a reference layer image, based on at least one of a partition size, a partition shape, and a prediction mode with respect to a block.

Accordingly, compared to a single-layer prediction structure in which base layer images and enhancement layer images are reconstructed respectively, according to an inter-layer prediction structure, base layer images and enhancement layer images may be reconstructed without an increase in a memory bandwidth and computational quantity.

## DESCRIPTION OF THE DRAWINGS

FIG. 1 illustrates a block diagram of a scalable video encoding apparatus, according to an exemplary embodiment.

FIG. 2 illustrates a block diagram of a scalable video decoding apparatus, according to an exemplary embodiment.

FIG. 3 illustrates in detail a structure of the scalable video encoding apparatus, according to an exemplary embodiment.

FIG. 4 illustrates base layer images and enhancement layer images in an individual layer prediction structure.

FIG. 5 illustrates base layer images and enhancement layer images in an inter-layer prediction structure.

FIG. 6 illustrates a bandwidth of a memory which is for interpolation filtering with respect to a block.

FIG. 7 illustrates a memory access pattern.

FIG. 8 illustrates a memory bandwidth for motion compensation (MC) interpolation filtering that is changed according to an inter prediction mode and a block size.

FIG. 9 illustrates a memory bandwidth for inter-layer (IL) interpolation filtering that is changed according to a block size, according to an exemplary embodiment.

FIG. 10 illustrates the number of times interpolation filtering is performed in base layer encoding and enhancement layer encoding, with the limit condition.

FIG. 11 illustrates the number of times interpolation filtering is performed in base layer encoding and enhancement layer encoding, under a predetermined condition, according to an exemplary embodiment.

FIG. 12 illustrates combinations of MC interpolation filtering and IL interpolation filtering that may be performed under a predetermined condition, according to an exemplary embodiment.

FIG. 13 illustrates a flowchart of a scalable video encoding method, according to an exemplary embodiment.

FIG. 14 illustrates a flowchart of a scalable video decoding method, according to an exemplary embodiment.

FIG. 15 is a block diagram of a video encoding apparatus based on coding units of a tree structure, according to an exemplary embodiment.

FIG. 16 is a block diagram of a video decoding apparatus based on coding units of a tree structure, according to an exemplary embodiment.

FIG. 17 is a diagram for describing a concept of coding units according to an exemplary embodiment.

FIG. 18 is a block diagram of an image encoder based on coding units, according to an exemplary embodiment.

FIG. 19 is a block diagram of an image decoder based on coding units, according to an exemplary embodiment.

FIG. 20 is a diagram illustrating deeper coding units according to depths, and partitions, according to an exemplary embodiment.

FIG. 21 is a diagram for describing a relationship between a coding unit and transformation units, according to an exemplary embodiment.

FIG. 22 illustrates a plurality of pieces of encoding information according to depths, according to an exemplary embodiment.

FIG. 23 is a diagram of deeper coding units according to depths, according to an exemplary embodiment.

FIGS. 24, 25, and 26 are diagrams for describing a relationship between coding units, prediction units, and transformation units, according to exemplary embodiments.

FIG. 27 is a diagram for describing a relationship between a coding unit, a prediction unit, and a transformation unit, according to encoding mode information of Table 1.

FIG. 28 is a diagram of a physical structure of a disc in which a program is stored, according to an exemplary embodiment.

FIG. 29 is a diagram of a disc drive for recording and reading a program by using the disc.

FIG. 30 is a diagram of an overall structure of a content supply system for providing a content distribution service.

FIGS. 31 and 32 illustrate external and internal structures of a mobile phone to which a video encoding method and a video decoding method are applied, according to exemplary embodiments.

FIG. 33 illustrates a digital broadcasting system employing a communication system, according to an exemplary embodiment.

FIG. 34 is a diagram illustrating a network structure of a cloud computing system using a video encoding apparatus and a video decoding apparatus, according to an exemplary embodiment.

## BEST MODE

The present disclosure provides one or more exemplary embodiments of a scalable video encoding method and apparatus therefor that limit the number of times interpolation filtering is performed, so as to minimize an increase in a memory bandwidth and a computational quantity which occurs when the interpolation filtering is performed for inter-

prediction and inter-layer prediction. The present disclosure provides one or more exemplary embodiments of a scalable video decoding method and apparatus therefor in which inter-prediction and inter-layer prediction for an enhancement layer are limited according to a predetermined condition.

According to an aspect of the inventive concept, there is provided a scalable video encoding method including determining a reference layer image from among base layer images so as to perform inter-layer prediction on an enhancement layer image; generating an upsampled reference layer image by performing inter-layer (IL) interpolation filtering on the determined reference layer image; and when the upsampled reference layer image is determined via the IL interpolation filtering, determining, using the enhancement layer image, not to perform inter prediction on enhancement layer images, and encoding a residue component between the upsampled reference layer image and the enhancement layer image.

A computational quantity of the interpolation filtering for the inter-layer prediction using the enhancement layer image may be limited not to be greater than a total sum of a first computational quantity of MC interpolation filtering for inter prediction using the base layer images and a second computational quantity of MC interpolation filtering for inter prediction using the enhancement layer images.

The encoding of the residue component may include encoding a reference index indicating that a reference image user for the enhancement layer image is the upsampled reference layer image, and encoding a motion vector to indicate 0, wherein the motion vector is for the inter prediction using the enhancement layer images.

The number of times of the MC interpolation filtering and the number of times of the IL interpolation filtering may be limited, based on at least one of the number of taps of an MC interpolation filter for the MC interpolation filtering for the inter prediction using the enhancement layer image, the number of taps of an IL interpolation filter for the IL interpolation filtering, and a size of a prediction unit of the enhancement layer image.

According to another aspect of the inventive concept, there is provided a scalable video decoding method including obtaining a reference index indicating a residue component and a reference layer image for inter-layer prediction using an enhancement layer image; based on the reference index, determining not to perform inter-prediction on enhancement layer images and determining the reference layer image from among base layer images; generating an upsampled reference layer image by performing IL interpolation filtering on the determined reference layer image; and reconstructing the enhancement layer image by using the residue component with respect to the inter-layer prediction and the upsampled reference layer image.

When a reference index of the enhancement layer image indicates the upsampled reference layer image, the determining of the reference layer image may include determining a motion vector as 0, wherein the motion vector is for inter prediction using the enhancement layer images.

According to another aspect of the inventive concept, there is provided a scalable video encoding apparatus including a base layer encoder configured to perform inter prediction on base layer images; and an enhancement layer encoder configured to determine, using an enhancement layer image, not to perform inter prediction on enhancement layer images when an upsampled reference layer image is determined by performing IL interpolation filtering on a determined reference layer image, and to encode a residue component between the upsampled reference layer image and the enhancement layer image.

According to another aspect of the inventive concept, there is provided a scalable video decoding apparatus including a base layer decoder configured to reconstruct base layer images by performing motion compensation; and an enhancement layer decoder configured to obtain a reference index indicating a residue component and a reference layer image for inter-layer prediction using an enhancement layer image, to determine, based on the reference index, not to perform inter-prediction on enhancement layer images, to generate an upsampled reference layer image by performing IL interpolation filtering on the reference layer image determined from among the base layer images, and to reconstruct the enhancement layer image by using the residue component with respect to the inter-layer prediction and the upsampled reference layer image.

According to another aspect of the inventive concept, there is provided a computer-readable recording medium having recorded thereon a computer program for executing the scalable video encoding method.

According to another aspect of the inventive concept, there is provided a computer-readable recording medium having recorded thereon a computer program for executing the scalable video decoding method.

MODE OF THE INVENTIVE CONCEPT

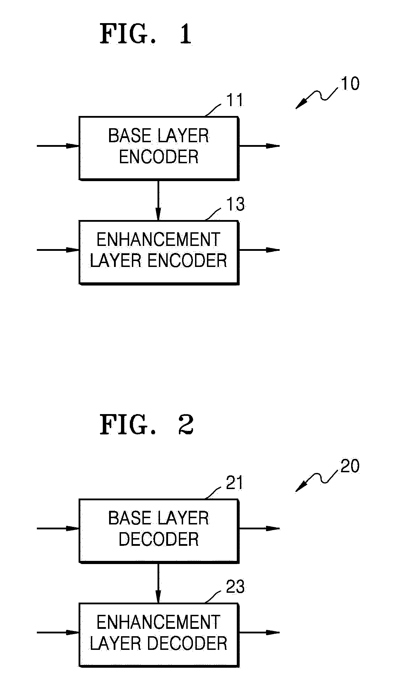

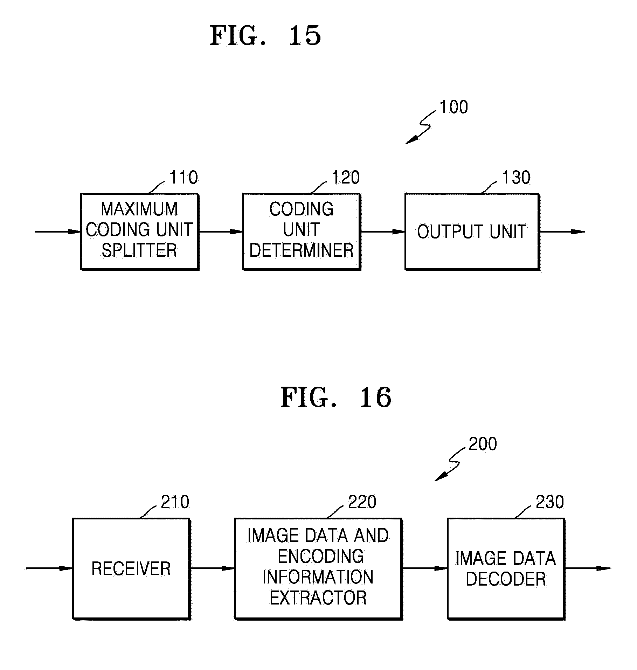

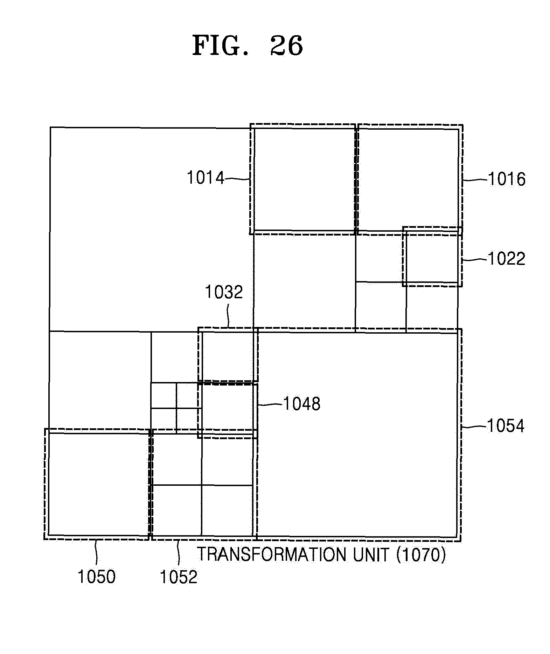

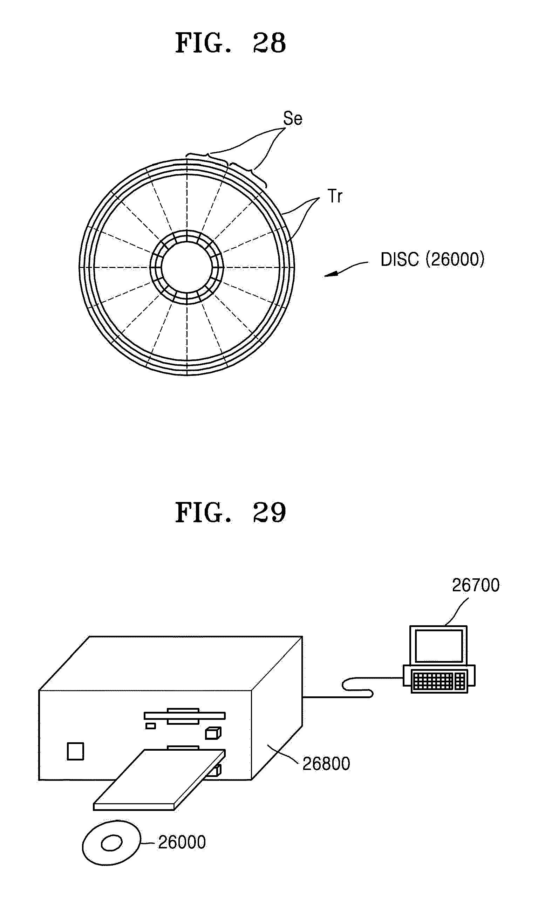

Hereinafter, a scalable video encoding apparatus, a scalable video decoding apparatus, a scalable video encoding method, and a scalable video decoding method according to exemplary embodiments are provided with reference to FIGS. 1 through 14. Also, a video encoding apparatus and a video decoding apparatus, and a video encoding method and a video decoding method based on coding units of a tree structure according to exemplary embodiments are provided with reference to FIGS. 15 through 27. Also, various embodiments to which the scalable video encoding method, the scalable video decoding method, the video encoding method and the video decoding method may be applied are provided with reference to FIGS. 28 through 34.

Hereinafter, an 'image' may indicate a still image of a video or a moving picture, i.e., the video itself.

Hereinafter, a 'sample' means data that is allocated to a sampling position of an image and is a processing target. For example, pixel values that are allocated to pixels in an image in a spatial domain may be samples.

Hereinafter, a symbol means a value of each syntax that is determined by performing encoding on an image. A bitstream may be generated in a manner that bit sequences that are generated by performing entropy encoding on symbols are sequentially output. Images may be reconstructed in a manner that the symbols are reconstructed by performing entropy decoding and parsing on the bit sequences from the bitstream, and then decoding is performed by using the symbols.

First, with reference to FIGS. 1 through 14, a scalable video encoding apparatus and a scalable video encoding method, and a scalable video decoding apparatus and a scalable video decoding method according to an exemplary embodiment are provided.

FIG. 1 illustrates a block diagram of a scalable video encoding apparatus 10, according to an exemplary embodiment.

The scalable video encoding apparatus 10 according to the present exemplary embodiment includes a base layer encoder 11 and an enhancement layer encoder 13.

The scalable video encoding apparatus 10 according to the present exemplary embodiment may encode each of a plurality of image sequences according to layers by using a scalable video coding method, and may output a separate stream including encoded data of each of the layers. The scalable video encoding apparatus 10 may encode a base layer image sequence and an enhancement layer image sequence to different layers.

The base layer encoder 11 may encode base layer images, and may output a base layer stream including encoded data of the base layer images.

The enhancement layer encoder 13 may encode enhancement layer images, and may output an enhancement layer stream including encoded data of the enhancement layer images.

For example, according to the scalable video coding method based on spatial scalability, low resolution images may be encoded as the base layer images, and high resolution images may be encoded as the enhancement layer images. An encoding result of the base layer images may be output as a base layer stream, and an encoding result of the enhancement layer images may be output as an enhancement layer stream.

As another example, according to a scalable video coding method based on Signal-Noise Ratio (SNR) scalability, the base layer images and the enhancement layer images are same in resolutions and sizes and are different in a quantization parameter (QP) in encoding. When the QP is increased, a quantization section is increased, such that a quality of a reconstructed image deteriorates. The low resolution images having a relatively high QP applied thereto may be encoded as the base layer images, and the high resolution images having a relatively low QP applied thereto may be encoded as the enhancement layer images.

As another example, a multiview video may be encoded according to the scalable video coding method. Left-view images may be encoded as the base layer images, and right-view images may be encoded as the enhancement layer images. Alternatively, each of center-view images, left-view images, and right-view images may be encoded, and among these images, the center-view images may be encoded as the base layer images, the left-view images may be encoded as first enhancement-layer images, and the right-view images may be encoded as second enhancement-layer images.

As another example, the scalable video coding method may be performed according to temporal hierarchical prediction based on temporal scalability. A base layer stream including encoding information may be output, wherein the encoding information is generated by encoding images with a base frame rate. Temporal levels may be classified according to frame rates, and may be encoded to layers, respectively. By further encoding images with a high speed frame rate by referring to the images of the base frame rate, an enhancement layer stream including encoding information about the high speed frame rate may be output.

The scalable video encoding apparatus 10 according to the present exemplary embodiment may perform inter prediction by which a current image is predicted by referring to images of a single layer. Via the inter prediction, a motion vector indicating motion information between the current image and a reference image, and a residue component between the current image and the reference image may be generated.

Also, the scalable video encoding apparatus 10 may perform inter-layer prediction by which enhancement layer images are predicted by referring to base layer images. Here, a current layer image to which the inter-layer prediction is performed may be an enhancement layer image, and a reference layer image that is used for the inter-layer prediction may be a base layer image. Via the inter-layer prediction, a location difference component between a reference image of another layer and the current image, and a residue component between the reference image of the other layer and the current image may be generated.

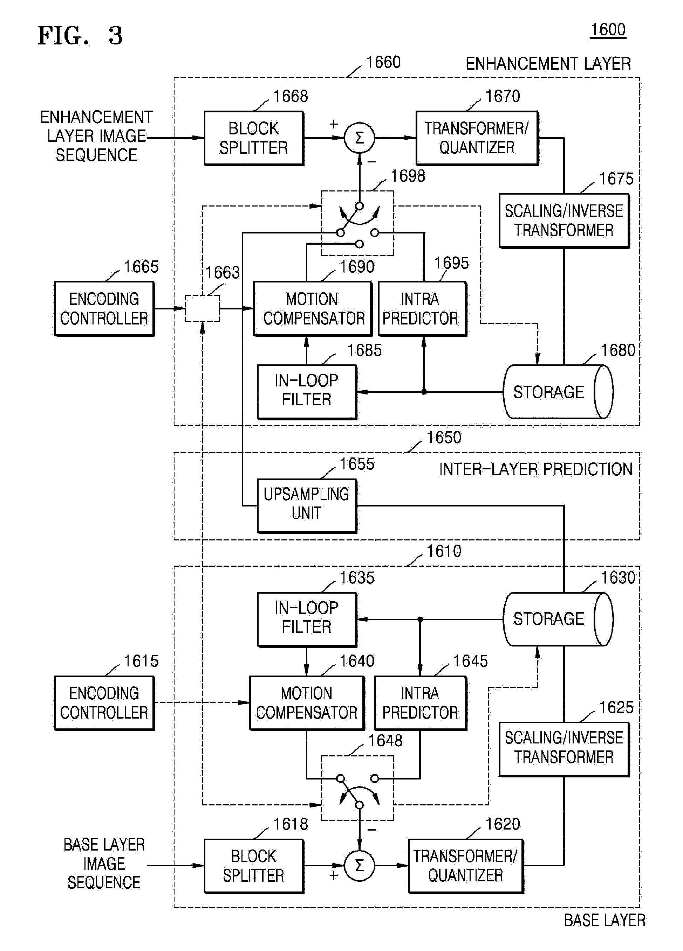

An inter-layer prediction structure will be described in detail with reference to FIG. 3.

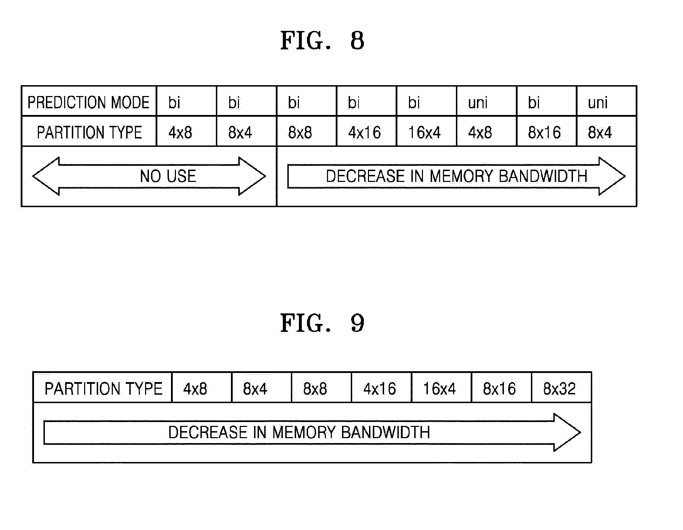

The scalable video encoding apparatus 10 according to the present exemplary embodiment encodes each of blocks of each of images of a video according to layers. A type of a block may be a square, a rectangle, or a random geometric shape. A block according to an exemplary embodiment is not limited to a data unit of a constant size. The block may be a maximum coding unit, a coding unit, a prediction unit, a transformation unit, etc. from among coding units of a tree structure. A maximum coding unit including coding units of a tree structure may be variously called a coding block tree, a block tree, a root block tree, a coding tree, a coding root, or a tree trunk. Video encoding and decoding methods using the coding units of the tree structure will be described with reference to FIGS. 8 through 20.

The inter prediction and the inter-layer prediction may be performed by using a data unit of the coding unit, the prediction unit, or the transformation unit.

The base layer encoder 11 according to the present exemplary embodiment may generate symbol data by performing source coding operations including the inter prediction or intra prediction on the base layer images. For example, the base layer encoder 11 may generate the symbol data by performing the inter prediction or intra prediction, transformation, and quantization on samples of a data unit of the base layer images, and may generate the base layer stream by performing entropy encoding on the symbol data.

The enhancement layer encoder 13 may encode the enhancement layer images, based on the coding units of the tree structure. The enhancement layer encoder 13 may generate symbol data by performing the inter/intra predictions, the transformation, and the quantization on samples of an encoding unit of an enhancement layer image, and may generate the enhancement layer stream by performing entropy encoding on the symbol data.

The enhancement layer encoder 13 according to the present exemplary embodiment may perform inter-layer prediction to predict the enhancement layer image, by using a reconstructed sample of the base layer image. In order to encode an enhancement layer original image among the enhancement layer image sequence via the inter-layer prediction structure, the enhancement layer encoder 13 may generate an enhancement layer prediction image by using a reconstructed base layer image, and may encode a prediction error between the enhancement layer original image and the enhancement layer prediction image.

The enhancement layer encoder 13 may perform the inter-layer prediction on the enhancement layer image according to blocks such as the coding unit or the prediction unit. A block of the base layer image to be referred to by a block of the enhancement layer image may be determined.

For example, a reconstructed image of a base layer image to which a same Picture Order Count (POC) as the enhancement layer image is applied may be determined as a reference image. Also, a block that is from among blocks of the reconstructed base layer image and is positioned while corresponding to a position of a current block in the enhancement layer image may be determined as a reference block. The enhancement layer encoder 13 may determine an enhancement layer prediction block by using a reconstructed base layer block corresponding to an enhancement layer block.

The enhancement layer encoder 13 may encode a current layer image sequence by using reconstructed base layer images via the inter-layer prediction structure. Also, the enhancement layer encoder 13 according to the present exemplary embodiment may encode the enhancement layer image sequence according to a single layer prediction structure, without using other layer samples. As another example, the enhancement layer encoder 13 may combine inter prediction and inter-layer prediction in a single layer.

Hereinafter, an example in which the enhancement layer images are encoded by using the base layer images, according to inter-layer prediction.

The base layer encoder 11 may decode encoded samples in each of coding units of a tree structure of a base layer image by performing inverse-quantization, inverse-transformation, inter prediction, or motion compensation, and thus may reconstruct samples included in a current maximum coding unit. A reconstructed image of a previous slice may be generated by performing encoding samples in the previous slice and then decoding on the encoded samples. In order to perform inter prediction on a current slice, a reconstructed image of the previous slice may be referred to.

The enhancement layer encoder 13 according to the present exemplary embodiment may use the enhancement layer prediction block as a reference image for inter-layer prediction using an enhancement layer original block, wherein the enhancement layer prediction block is determined by using the reconstructed base layer block via the inter-layer prediction structure. The enhancement layer encoder 13 may encode an error between a sample value of the enhancement layer prediction block and a sample value of the enhancement layer original block by using the reconstructed base layer block, i.e., may encode a residue component according to the inter-layer prediction.

As spatial scalability, when resolution varies in a base layer image and an enhancement layer image, image sizes are also different. Therefore, in order to generate a reference layer image for the enhancement layer image, the enhancement layer encoder 13 may perform interpolation filtering to upsample a reconstructed base layer image to a resolution of the enhancement layer image.

In general, the interpolation filtering may be performed so as to determine a reference block according to each sub-pixel unit when inter-prediction is performed according to each sub-pixel unit.

Hereinafter, interpolation filtering for inter-prediction according to each coding unit is referred to as 'motion compensation (MC) interpolation filtering', and interpolation filtering for inter-layer prediction is referred to as 'inter-layer (IL) interpolation filtering'. The MC interpolation filtering and the IL interpolation filtering are collectively referred to as 'interpolation filtering'.

In general, the interpolation filtering is performed by using samples adjacent to a current sample, thus, in order to perform the interpolation filtering on a current block, not only block samples but also some samples of adjacent blocks are required. Therefore, when the number of times the interpolation filtering is performed for inter prediction and inter-layer prediction is increased, a memory bandwidth and a computational load quantity are significantly increased.

Therefore, in order to decrease the memory bandwidth and the computational load quantity, the enhancement layer encoder 13 according to the present exemplary embodiment may selectively determine whether to perform the inter prediction in a single layer or to perform the inter-layer prediction by using a reference layer image.

For the inter-layer prediction structure according to an exemplary embodiment, an upsampled reconstructed base layer image that is the reference layer image is required. Thus, the base layer encoder 11 may perform inter-prediction on base layer images and thus may generate reconstructed base layer images.

In order to inter-layer predict an enhancement layer image, the enhancement layer encoder 13 may determine the reference layer image from among the base layer images. The enhancement layer encoder 13 may perform the IL interpolation filtering on the determined reference layer image and thus may generate an upsampled reference layer image.

For example, it is required for a computational load quantity required for the scalable video encoding apparatus 10 according to the present exemplary embodiment to perform inter prediction on a base layer and to perform inter-layer prediction on an enhancement layer is not greater than a computational load quantity required for the scalable video encoding apparatus 10 to perform only inter prediction on each of the base layer and the enhancement layer.

In order to evaluate a memory bandwidth or a computational quantity required for the inter prediction or the inter-layer prediction, the number of times the MC interpolation filtering and the IL interpolation filtering are performed may be used. Hereinafter, throughout the specification, the number of times of filtering indicates the number of times interpolation filtering is performed when to generate one sample to be referred for the inter prediction or the inter-layer prediction.

As described above, in order to perform the inter-layer prediction one time on the enhancement layer image, basically, the MC interpolation filtering may be performed one time for the inter prediction performed on the base layer, and the IL interpolation filtering may be performed one time so as to upsample the reconstructed base layer image for the inter-layer prediction.

According to a general individual layer prediction structure, if the inter prediction is performed one time on the base layer, and the inter prediction is performed one time on the enhancement layer, each of the MC interpolation filtering and the IL interpolation filtering is performed one time so that interpolation filtering may be performed at least two times.

Therefore, comparing the inter-layer prediction structure with the individual layer prediction structure, when the inter-layer prediction is performed on an enhancement layer image, any other interpolation filtering should not be added, other than the MC interpolation filtering for the inter prediction using the base layer and the IL interpolation filtering for the inter-layer prediction using the reconstructed base layer image.

Therefore, when the upsampled reference layer image is determined via the IL interpolation filtering, the enhancement layer encoder 13 may determine not to perform inter prediction on enhancement layer images for the enhancement layer image. Thus, the enhancement layer encoder 13 may encode a residue component between the upsampled reference layer image and the enhancement layer image by performing only the inter-layer prediction without performing the inter prediction.

Thus, the enhancement layer encoder 13 may encode a reference index indicating that a reference image used for the enhancement layer image is an upsampled reference image, and may encode a motion vector to 0, wherein the motion vector is for inter prediction using the enhancement layer images.

The scalable video encoding apparatus 10 according to another exemplary embodiment may limit the number of times of the MC interpolation filtering and the number of times of the IL interpolation filtering, based on at least one of the number of taps of an MC interpolation filter for the MC interpolation filtering using the enhancement layer image, the number of taps of an IL interpolation filter for the IL interpolation filtering, and a size of a prediction unit of the enhancement layer image.

For example, interpolation filtering on a block having a size of 8x8 or larger may be limited to i) a combination of 8-tap MC interpolation filtering performed two times or ii) a combination of 8-tap MC interpolation filtering performed one time and 8-tap IL interpolation filtering performed one time.

As another example, interpolation filtering on a block having a size of 4x8 or larger may be limited to iii) 8-tap IL interpolation filtering performed one time, iv) a combination of 6-tap IL interpolation filtering performed two times, v) a combination of 4-tap IL interpolation filtering performed two times, or vi) a combination of 2-tap IL interpolation filtering performed three times.

As another example, interpolation filtering on a block having a size of 8x16 or larger may be limited to vii) a combination of 8-tap MC interpolation filtering performed two times and 4-tap IL interpolation filtering performed one time, viii) a combination of 2-tap MC interpolation filtering performed four times and 2-tap IL interpolation filtering performed four times, ix) a combination of 8-tap MC interpolation filtering performed two times and 2-tap IL interpolation filtering performed two times, or x) a combination of 8-tap MC interpolation filtering performed two times and 8-tap IL interpolation filtering performed one time.

The scalable video encoding apparatus 10 according to the present exemplary embodiment may include a central processor (not shown) that generally controls the base layer encoder 11 and the enhancement layer encoder 13. Alternatively, each of the base layer encoder 11 and the enhancement layer encoder 13 may be driven by its own processor (not shown), and the processors may interoperate with each other, so that the scalable video encoding apparatus 10 may operate. Alternatively, according to control by an external processor (not shown) of the scalable video encoding apparatus 10, the base layer encoder 11 and the enhancement layer encoder 13 may be controlled.

The scalable video encoding apparatus 10 may include one or more data storage units (not shown) for storing input and output data of the base layer encoder 11 and the enhancement layer encoder 13. The scalable video encoding apparatus 10 may include a memory controller (not shown) that manages an input and output of data of the one or more data storage units.

The scalable video encoding apparatus 10 may interoperate with an internal video encoding processor that is internally embedded or an external video encoding processor so as to output a video encoding result, so that the scalable video encoding apparatus 10 may perform a video encoding operation including transformation. The internal video encoding processor of the scalable video encoding apparatus 10 may perform, as a separate processor, a video encoding operation. Also, the scalable video encoding apparatus 10 may correspond to a case in which a central processing unit (CPU) or a graphical operational unit of the scalable video encoding apparatus 10 includes a video encoding processing module and thus performs a basic video encoding operation.

Therefore, the base layer encoder 11 of the scalable video encoding apparatus 10 may generate a base layer bitstream by encoding a base layer image sequence, and an enhancement layer decoder 26 may generate an enhancement layer bitstream by decoding an enhancement layer image sequence.

A scalable video decoding apparatus 20 that receives and decodes the base layer bitstream and the enhancement layer bitstream generated by the scalable video encoding apparatus 10 is described below with reference to FIG. 2.

FIG. 2 illustrates a block diagram of a scalable video decoding apparatus 20, according to an exemplary embodiment.

The scalable video decoding apparatus 20 according to the present exemplary embodiment includes a base layer decoder 21 and an enhancement layer decoder 23.

The scalable video decoding apparatus 20 according to the present exemplary embodiment may receive bitstreams according to layers, based on a scalable encoding method. The number of layers of the bitstreams that the scalable video decoding apparatus 20 receives is not limited. However, for convenience of description, hereinafter, in an exemplary embodiment, the base layer decoder 21 of the scalable video decoding apparatus 20 receives and decodes a base layer stream, and the enhancement layer decoder 23 receives and decodes an enhancement layer stream.

For example, the scalable video decoding apparatus 20 based on spatial scalability may receive a stream in which image sequences having different resolutions are encoded to different layers. A low resolution image sequence may be reconstructed by decoding a base layer stream, and a high resolution image sequence may be reconstructed by decoding an enhancement layer stream.

As another example, the scalable video decoding apparatus 20 based on SNR scalability may receive an image bitstream in which a base layer and an enhancement layer are encoded by using different QPs. Low resolution images to which relatively high QP is applied may be decoded from a base layer bitstream, and high resolution images to which relatively low QP is applied may be decoded from an enhancement layer bitstream.

As another example, a multiview video may be decoded by using a scalable video coding method. When a stereoscopic video stream having a plurality of layers is received, left-view images may be reconstructed by decoding a base layer stream. By further decoding an enhancement layer stream in addition to the base layer stream, right-view images may be reconstructed.

Alternatively, when a multiview video stream having a plurality of layers is received, center-view images may be reconstructed by decoding a base layer stream. By further decoding a first enhancement layer stream in addition to the base layer stream, left-view images may be reconstructed. By further decoding a second enhancement layer stream in addition to the base layer stream, right-view images may be reconstructed.

As another example, a scalable video coding method based on temporal scalability may be performed. By decoding the base layer stream, images with a base frame rate may be reconstructed. By further decoding the enhancement layer stream in addition to the base layer stream, images with a high speed frame rate may be reconstructed.

The scalable video decoding apparatus 20 may obtain encoded data of the base layer images and the enhancement layer images from the base layer stream and the enhancement layer stream, and may further obtain a motion vector generated by inter prediction, and prediction information generated by inter-layer prediction.

For example, the scalable video decoding apparatus 20 may decode inter-predicted data of each of layers, and may decode data that is inter-layer predicted between a plurality of layers. The reconstruction may be performed by using motion compensation and inter-layer decoding, based on a coding unit or a prediction unit.

Images of each layer stream may be reconstructed by performing motion compensation for a current image by referring to reconstructed images that are predicted via inter prediction using a same layer. The motion compensation means an operation of reconstructing a reconstructed image of the current image by synthesizing a reference image and a residue component of the current image, wherein the reference image is determined by using a motion vector of the current image.

Also, the scalable video decoding apparatus 20 may perform the inter-layer decoding by referring to the base layer images, so as to reconstruct the enhancement layer image predicted via the inter-layer prediction. The inter-layer decoding means an operation of reconstructing a reconstructed image of the current image by synthesizing a reference image of another layer and the residual component of the current image, wherein the reference image is determined to predict the current image.

An inter-layer prediction structure will be described in detail with reference to FIG. 3.

The scalable video decoding apparatus 20 decodes each of blocks of each of images of a video. The block according to the present exemplary embodiment may be a maximum coding unit, a coding unit, a prediction unit, a transformation unit, etc. from among coding units of a tree structure.

The base layer decoder 21 may decode the base layer image by using encoding symbols of a parsed base layer image. If the scalable video decoding apparatus 20 receives streams that are encoded based on the coding units of the tree structure, the base layer decoder 21 may perform decoding on each maximum coding unit of the base layer stream, based on the coding units of the tree structure.

The base layer decoder 21 may perform entropy decoding on each maximum coding unit, and thus may obtain encoding information and the encoded data. The base layer decoder 21 may perform inverse-quantization and inverse-transformation on the encoded data obtained from the stream, and thus may reconstruct a residue component. The base layer decoder 21 according to another exemplary embodiment may directly receive a bitstream of quantized transform coefficients. As a result of the inverse-quantization and the inverse-transformation that are performed on the quantized transform coefficients, a residue component of images may be reconstructed.

The base layer decoder 21 may reconstruct the base layer images by combining a prediction image and the residue component, via motion compensation on same layer images.

The enhancement layer decoder 23 may perform inter-layer prediction on the enhancement layer image according to blocks such as a coding unit or a prediction unit. A block of the base layer image which is to be referred to by a block of the enhancement layer image may be determined. For example, a reconstructed block of the base layer image that is positioned while corresponding to a position of a current block in the enhancement layer image may be determined. The enhancement layer decoder 23 may determine an enhancement layer prediction block by using a reconstructed base layer block corresponding to an enhancement layer block.

In more detail, the base layer decoder 21 may decode encoded samples in each of coding units of a tree structure of a base layer image by performing inverse-quantization, inverse-transformation, inter prediction, or motion compensation, and thus may reconstruct samples included in a current maximum coding unit. A reconstructed image of a previous slice may be generated by performing encoding samples in the previous slice and then decoding the encoded samples. In order to perform inter prediction on a current slice, a reconstructed image of the previous slice may be referred to. Thus, the reconstructed image of the previous slice may be used as a prediction image for a current slice.

According to the inter-layer prediction structure, the enhancement layer decoder 23 may generate an enhancement layer prediction image by using samples of the reconstructed base layer image. The enhancement layer decoder 23 may decode the enhancement layer stream, and may obtain a prediction error due to the inter-layer prediction. The enhancement layer decoder 23 may generate the reconstructed enhancement layer image by combining the enhancement layer prediction image with the prediction error.

As described above, the enhancement layer decoder 23 may reconstruct the enhancement layer images by referring to reconstructed base layer images via the inter-layer prediction structure. Alternatively, the enhancement layer decoder 23 according to the present exemplary embodiment may reconstruct the enhancement layer images via a single layer prediction structure, without referring to other layer samples. The enhancement layer decoder 23 according to another exemplary embodiment may combine inter prediction (motion compensation) in a single layer and inter-layer prediction.

Hereinafter, an example in which the enhancement layer images are decoded by using the reconstructed base layer images, according to inter-layer prediction.

The base layer decoder 21 may decode encoded symbols in each of coding units of a tree structure of a base layer image by performing inverse-quantization, inverse-transformation, inter prediction, or motion compensation, and thus may reconstruct samples included in a current maximum coding unit. A reconstructed image may be generated by performing decoding on a previous slice. In order to perform motion compensation on a current slice, a reconstructed image of the previous slice may be referred to.

The enhancement layer decoder 23 according to the present exemplary embodiment may use the enhancement layer prediction block as a reference image for inter-layer prediction of an enhancement layer original block, wherein the enhancement layer prediction block is determined by using the reconstructed base layer block according to the inter-layer prediction structure. The enhancement layer decoder 23 may reconstruct the enhancement layer block by synthesizing a reconstructed base layer image and a residue component obtained via the inter-layer prediction, wherein the residue component corresponds to an error between a sample value of the enhancement layer prediction block and a sample value of the enhancement layer original block.

As spatial scalability, when resolution varies in a base layer image and an enhancement layer image, image sizes are also different. Therefore, in order to generate a reference layer image for the enhancement layer image, the enhancement layer decoder 23 may perform interpolation filtering to upsample a reconstructed base layer image to a resolution of the enhancement layer image.

Also, the interpolation filtering may be performed so as to determine a reference block according to each sub-pixel unit when inter-prediction is performed according to each sub-pixel unit.

Therefore, in order to decrease the memory bandwidth and the computational load quantity, the enhancement layer decoder 23 according to the present exemplary embodiment may selectively determine whether to perform the inter prediction in a single layer or to perform the inter-layer prediction by using a reference layer image.

As described above, for the inter-layer prediction structure, an upsampled reconstructed base layer image that is the reference layer image is required. Thus, the enhancement layer decoder 23 may perform motion compensation on base layer images and thus may generate reconstructed base layer images.

The enhancement layer decoder 23 may determine a reference layer image from among reconstructed base layer images so as to perform inter-layer prediction on the enhancement layer image. For example, a reconstructed base layer image having the same POC as the enhancement layer image may be determined as the reference layer image. The enhancement layer decoder 23 may perform the IL interpolation filtering on the determined reference layer image and thus may generate an upsampled reference layer image.

It is required for a computational load quantity required for the scalable video decoding apparatus 20 according to the present exemplary embodiment to perform inter prediction on a base layer and to perform inter-layer prediction on an enhancement layer is not greater than a computational load quantity required for the scalable video decoding apparatus 20 to perform only inter prediction on each of the base layer and the enhancement layer.

As described with reference to FIG. 1, comparing the inter-layer prediction structure with the individual layer prediction structure, when the inter-layer prediction is performed on the enhancement layer image, any other interpolation filtering should not be added, other than MC interpolation filtering for the inter prediction using the base layer and IL interpolation filtering for the inter-layer prediction using the reconstructed base layer image.

Therefore, when the upsampled reference layer image is determined via the IL interpolation filtering, the enhancement layer decoder 23 may determine not to perform inter prediction on enhancement layer images for the enhancement layer image.

For example, the enhancement layer decoder 23 may obtain a reference index indicating a residue component and the reference layer image for the inter-layer prediction using the enhancement layer image. Based on the reference index, the enhancement layer decoder 23 may determine not to perform the inter-prediction on the enhancement layer images, and may determine the reference layer image from among the reconstructed base layer images.

Thus, the enhancement layer decoder 23 may perform the IL interpolation filtering on the reference layer image and thus may obtain the upsampled reference layer image. The enhancement layer decoder 23 may reconstruct an enhancement layer block by synthesizing the residue component and a reference block of the reference layer image that is upsampled according to blocks. The residue component between the enhancement layer images is synthesized with the upsampled reference layer image, so that the enhancement layer image may be reconstructed.

The scalable video decoding apparatus 20 according to another exemplary embodiment may limit the number of times of the MC interpolation filtering and the number of times of the IL interpolation filtering, based on at least one of the number of taps of an MC interpolation filter for the MC interpolation filtering for the inter prediction using the enhancement layer image, the number of taps of an IL interpolation filter for the IL interpolation filtering, and a size of a prediction unit of the enhancement layer image.

For example, interpolation filtering on a block having a size of 8x8 or larger may be limited to i) a combination of 8-tap MC interpolation filtering performed two times or ii) a combination of 8-tap MC interpolation filtering performed one time and 8-tap IL interpolation filtering performed one time.

As another example, interpolation filtering on a block having a size of 4x8 or larger may be limited to iii) 8-tap IL interpolation filtering performed one time, iv) a combination of 6-tap IL interpolation filtering performed two times, v) a combination of 4-tap IL interpolation filtering performed two times, or vi) a combination of 2-tap IL interpolation filtering performed three times.

As another example, interpolation filtering on a block having a size of 8x16 or larger may be limited to vii) a combination of 8-tap MC interpolation filtering performed two times and 4-tap IL interpolation filtering performed one time, viii) a combination of 2-tap MC interpolation filtering performed four times and 2-tap IL interpolation filtering performed four times, ix) a combination of 8-tap MC interpolation filtering performed two times and 2-tap IL interpolation filtering performed two times, or x) a combination of 8-tap MC interpolation filtering performed two times and 8-tap IL interpolation filtering performed one time.

Therefore, the base layer decoder 21 of the scalable video decoding apparatus 20 may reconstruct a base layer image sequence by decoding the base layer stream, and the enhancement layer decoder 23 may reconstruct an enhancement layer image sequence by decoding the enhancement layer stream.

The scalable video decoding apparatus 20 according to the present exemplary embodiment may include a central processor (not shown) that generally controls the base layer decoder 21 and the enhancement layer decoder 23. Alternatively, each of the base layer decoder 21 and the enhancement layer decoder 23 may be driven by its own processor (not shown), and the processors may interoperate with each other, so that the scalable video decoding apparatus 20 may operate. Alternatively, according to control by an external processor (not shown) of the scalable video decoding apparatus 20 according to the present exemplary embodiment, the base layer decoder 21 and the enhancement layer decoder 23 may be controlled.

The scalable video decoding apparatus 20 according to the present exemplary embodiment may include one or more data storage units (not shown) for storing input and output data of the base layer decoder 21 and the enhancement layer decoder 23. The scalable video decoding apparatus 20 may include a memory controller (not shown) that manages an input and output of data of the one or more data storage units.

The scalable video decoding apparatus 20 according to the present exemplary embodiment may interoperate with an internal video decoding processor that is internally embedded or an external video decoding processor so as to reconstruct a video via video decoding, so that the scalable video decoding apparatus 20 may perform a video decoding operation including inverse-transformation. The internal video decoding processor of the scalable video decoding apparatus 20 according to the present exemplary embodiment may correspond to not only a separate processor but also may correspond to a case in which a CPU or a graphical operational unit of the scalable video decoding apparatus 20 includes a video decoding processing module and thus performs a basic video decoding operation.

As described above, according to the scalable video encoding apparatus 10 and the scalable video decoding apparatus 20 according to the exemplary embodiments, the scalable video encoding apparatus 10 and the scalable video decoding apparatus 20 may selectively determine whether to perform the inter prediction in a single layer or to perform the inter-layer prediction by using the reference layer image, based on at least one of a partition size, a partition shape, and a prediction mode of a block.

Therefore, even if the scalable video encoding apparatus 10 according to the previous exemplary embodiment encodes the enhancement layer image according to the inter-layer prediction structure, a memory bandwidth and a computational quantity may not be increased, compared to a case in which prediction is performed on each single layer.

Similarly, the scalable video decoding apparatus 20 according to the present exemplary embodiment may decode the base layer images and the enhancement layer images according to the inter-layer prediction structure without an increase in a memory bandwidth and a computational quantity, compared to a prediction structure in which base layer images and enhancement layer images are reconstructed with respect to each single layer.

FIG. 3 illustrates in detail a structure of the scalable video encoding apparatus 10, according to an exemplary embodiment.

An inter-layer encoding system 1600 includes a base layer encoding terminal 1610, an enhancement layer encoding terminal 1660, and an inter-layer prediction terminal 1650 between the base layer encoding terminal 1610 and the enhancement layer encoding terminal 1660. The base layer encoding terminal 1610 and the enhancement layer encoding terminal 1660 may exhibit particular configurations of the base layer encoder 11 and the enhancement layer encoder 13, respectively.

The base layer encoding terminal 1610 receives an input of a base layer image sequence and encodes each image. The enhancement layer encoding terminal 1660 receives an input of an enhancement layer image sequence and encodes each image. Operations that overlap in operations of the base layer encoding terminal 1610 and operations of the enhancement layer encoding terminal 1660 are simultaneously described below.

A block splitter 1618 or 1668 splits an input image (a low resolution image or a high resolution image) to a maximum coding unit, a coding unit, a prediction unit, a transformation unit, etc. In order to encode the coding unit that is output from the block splitter 1618 or 1668, intra prediction or inter prediction may be performed with respect to each prediction unit of the coding unit. A prediction switch 1648 or 1698 may perform the inter prediction by referring to a reconstructed previous image output from a motion compensator 1640 or 1690 or may perform the intra prediction by using a neighbouring prediction unit of a current prediction unit in a current input image output from an intra predictor 1645 or 1695, based on whether a prediction mode of the prediction unit is an intra prediction mode or an inter prediction mode. Residual information may be generated with respect to each prediction unit via the inter prediction.

A residue component between the prediction unit and a peripheral image is input to a transformer/quantizer 1620 or 1670, according to each prediction unit of the coding unit. The transformer/quantizer 1620 or 1670 may perform transformation and quantization with respect to each transformation unit, based on the transformation unit of the coding unit, and may output a quantized transformation coefficient.

A scaling/inverse transformer 1625 or 1675 may perform scaling and inverse-transformation on the quantized transformation coefficient, according to each transformation unit of the coding unit, and may generate a residue component of a spatial domain. When it is controlled to an inter mode due to the prediction switch 1648 or 1698, the residue component may be synthesized with the reconstructed previous image or the neighbouring prediction unit, so that a reconstructed image including the current prediction unit may be generated and a reconstructed current image may be stored in a storage 1630 or 1680. The reconstructed current image may be transferred to the intra predictor 1645 or 1695 / the motion compensator 1640 or 1690, according to a prediction mode of a prediction unit to be next encoded.

In particular, during the inter mode, an in-loop filter 1635 or 1685 may perform at least one of deblocking filtering and Sample Adaptive Offset (SAO) filtering on the reconstructed image stored in the storage 1630 or 1680, according to each coding unit. At least one of the deblocking filtering and the SAO filtering may be performed on the coding unit and at least one of a prediction unit and a transformation unit included in the coding unit.

The deblocking filtering is filtering for smoothing a blocking phenomenon of a data unit, and the SAO filtering is filtering for compensating for a pixel value that has been corrupted while data is encoded and decoded. Data that is filtered by the in-loop filter 1635 or 1685 may be transferred to the motion compensator 1640 or 1690, according to each prediction unit. In order to encode a next coding unit output from the block splitter 1618 or 1668, a residue component between the reconstructed current image and the next coding unit may be generated, wherein the reconstructed current image is output from the motion compensator 1640 or 1690 and the next coding unit is output from the block splitter 1618 or 1668.

In this manner, the aforementioned encoding procedure may be repeated with respect to each coding unit of the input image.

Also, for inter-layer prediction, the enhancement layer encoding terminal 1660 may refer to the reconstructed image stored in the storage 1630 of the base layer encoding terminal 1610. An encoding controller 1615 of the base layer encoding terminal 1610 may control the storage 1630 of the base layer encoding terminal 1610, and may transfer the reconstructed image of the base layer encoding terminal 1610 to the enhancement layer encoding terminal 1660. The transferred reconstructed base layer image may be used as a prediction image of the enhancement layer.

When the base layer and the enhancement layer have different resolutions, an upsampling unit 1655 of the inter-layer prediction terminal 1650 may upsample the reconstructed base layer image and may transfer an upsampled reconstructed base layer image to the enhancement layer encoding terminal 1660. Therefore, the upsampled reconstructed base layer image may be used as the prediction image of the enhancement layer.

When the inter-layer prediction is performed in a manner that an encoding controller 1665 of the enhancement layer encoding terminal 1660 controls the switch 1698, the enhancement layer image may be predicted by referring to the reconstructed base layer image that is transferred via the inter-layer prediction terminal 1650.

In order to encode an image, various encoding modes for a coding unit, a prediction unit, and a transformation unit may be set. For example, as an encoding mode for the coding unit, a depth, split information (e.g., a split flag), or the like may be set. As an encoding mode for the prediction unit, a prediction mode, a partition type, intra direction information, reference list information, or the like may be set. As an encoding mode for the prediction unit, a transformation depth, split information or the like may be set.

The base layer encoding terminal 1610 may perform encoding by using each of various depths for the coding unit, each of various modes for the prediction unit, each of various partition types, each of various intra directions, each of various reference lists, and each of various transformation depths for the transformation unit, and according to results of the performances, the base layer encoding terminal 1610 may determine an encoding depth, a prediction mode, a partition type, intra direction/reference list, a transformation depth, etc. that have the highest encoding efficiency. However, an encoding mode determined by the base layer encoding terminal 1610 is not limited to the aforementioned encoding modes.

The encoding controller 1615 of the base layer encoding terminal 1610 may control various encoding modes to be appropriately applied to operations of each configuring element. Also, for inter-layer encoding in the enhancement layer encoding terminal 1660, the encoding controller 1615 may control the enhancement layer encoding terminal 1660 to determine an encoding mode or a residue component by referring to the encoding results from the base layer encoding terminal 1610.

For example, the enhancement layer encoding terminal 1660 may use an encoding mode of the base layer encoding terminal 1610 as an encoding mode for the enhancement layer image, or may determine the encoding mode for the enhancement layer image by referring to an encoding mode of the base layer encoding terminal 1610. The encoding controller 1615 of the base layer encoding terminal 1610 may use a current encoding mode from the encoding mode of the base layer encoding terminal 1610 so as to determine a current encoding mode of the enhancement layer encoding terminal 1660 by controlling a control signal of the encoding controller 1665 of the enhancement layer encoding terminal 1660.

Similar to the inter-layer encoding system 1600 based on an inter-layer prediction technique shown in FIG. 3, an inter-layer decoding system based on the inter-layer prediction technique may be embodied. That is, the inter-layer decoding system may receive a base layer bitstream and an enhancement layer bitstream. A base layer decoding terminal of the inter-layer decoding system may decode the base layer bitstream and may reconstruct base layer images. An enhancement layer decoding terminal of the inter-layer decoding system for a multilayer video may decode the enhancement layer bitstream by using a reconstructed base layer image and parsed encoding information and may reconstruct enhancement layer images.

If the enhancement layer encoder 13 of the scalable video encoding apparatus 10 according to the previous exemplary embodiment performed the inter-layer prediction, the enhancement layer decoder 23 of the scalable video decoding apparatus 20 may reconstruct the enhancement layer images, according to the inter-layer decoding system.

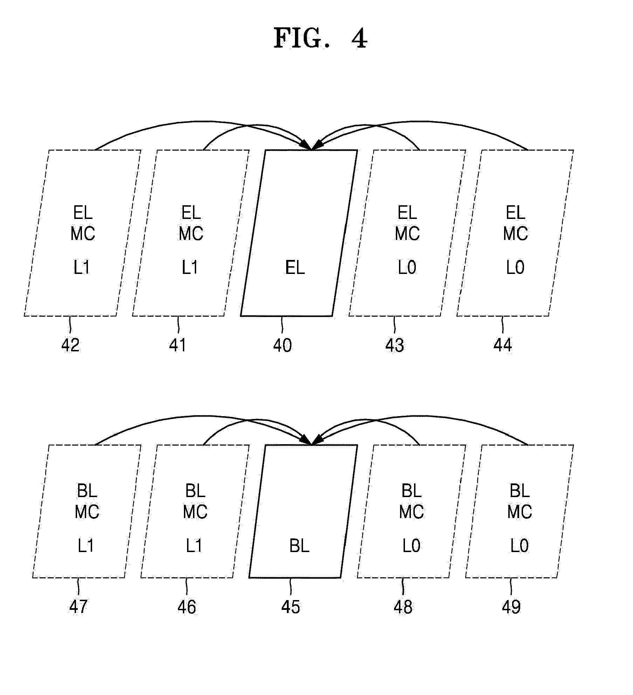

Hereinafter, with reference to FIGS. 4 through 7, a memory bandwidth of an individual layer prediction structure is compared with a memory bandwidth of an inter-layer prediction structure.

FIG. 4 illustrates base layer images and enhancement layer images in an individual layer prediction structure.

According to the individual layer prediction structure, inter prediction may be performed in each of a base layer and an enhancement layer.

That is, in the base layer, by using at least one of reference images 48 and 49 that belong to an L0 reference list and reference images 46 and 47 that belong to an L1 reference list, inter prediction for a base layer image BL 45 may be performed. Also, in the enhancement layer, by using at least one of reference images 43 and 44 that belong to an L0 reference list and reference images 41 and 42 that belong to an L1 reference list, inter prediction for an enhancement layer image EL 40 may be performed.

For motion estimation or motion compensation according to each sub-pixel unit, interpolation filtering on a reference image is required. Therefore, in order to perform inter-prediction on a current image of each layer, MC interpolation filtering may be performed one time in the base layer, and IL interpolation filtering may be performed one time in the enhancement layer.

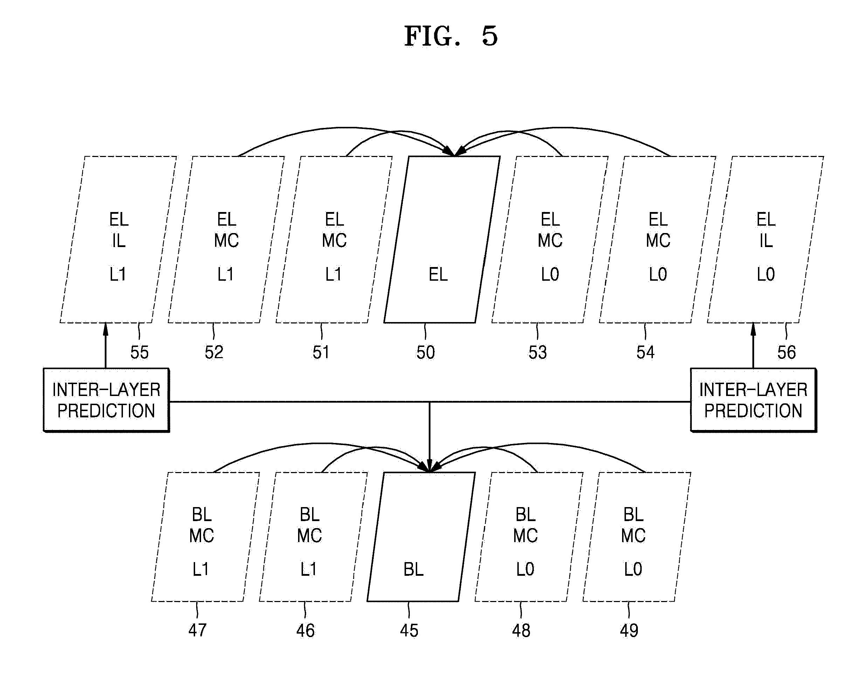

FIG. 5 illustrates base layer images and enhancement layer images in an inter-layer prediction structure.

According to the inter-layer prediction structure, inter prediction may be performed in a base layer, and the inter prediction and inter-layer prediction may be performed in an enhancement layer.

That is, the inter prediction for a base layer image BL 45 may be performed in the base layer. For motion estimation or motion compensation according to each sub-pixel unit in the base layer, MC interpolation filtering may be performed one time.

Also, in the enhancement layer, by using at least one of reference images 53 and 54 that belong to an L0 reference list and reference images 51 and 52 that belong to an L1 reference list, inter prediction for an enhancement layer image EL 50 may be performed. For motion estimation or motion compensation according to each sub-pixel unit in the enhancement layer, MC interpolation filtering may be performed one time.

For the inter-layer prediction, upsampled reference layer images 56 and 55 may be generated by upsampling a reconstructed image of the base layer image BL 45. The upsampled reference layer images 56 and 55 may be used for the inter-layer prediction for the enhancement layer image EL 50. In order to perform the inter-layer prediction, IL interpolation filtering may be performed one time for upsampling the reconstructed image of the base layer image BL 45.

For motion estimation or motion compensation according to each sub-pixel unit, interpolation filtering on a reference image is required. Therefore, in order to encode a current image of each layer, the interpolation filtering may be performed one time for inter prediction with respect to the base layer, and the interpolation filtering may be performed one time for inter prediction with respect to the enhancement layer.

Hereinafter, a computational complexity of an individual layer prediction structure is compared with a computational complexity of an inter-layer prediction structure. The computational complexities may be evaluated, in view of a memory bandwidth required for a computation, the number of times multiplication and addition computations are performed, a dynamic range of a computation target sample, a size of a memory to store a filter coefficient, a computation latency, or the like. Throughout the specification, the computational complexities are evaluated by using the memory bandwidth and a computational quantity (the number of times of computations) that are generally required in performing inter prediction and inter-layer prediction.

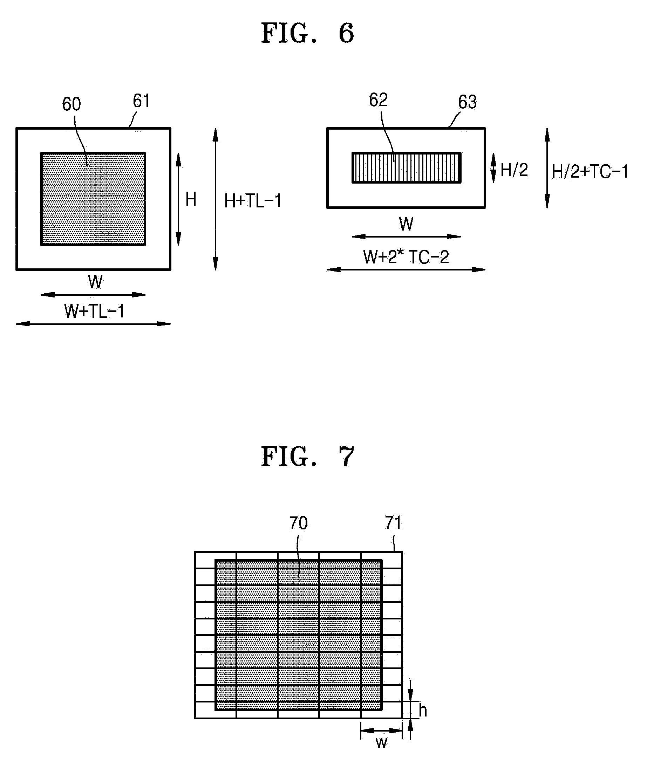

Hereinafter, with reference to FIGS. 6 and 7, a memory efficiency of interpolation filtering that occurs in an individual layer prediction structure and an inter-layer prediction structure is described below.

FIG. 6 illustrates a bandwidth of a memory which is for interpolation filtering with respect to a block.

First, it is determined how many adjacent pixels have to be stored in the memory for inter prediction with respect to one sample in the block.

In a case of uni-directional prediction, interpolation filtering is required in one direction of L0 or L1. In a case of bi-directional prediction, a memory bandwidth where adjacent pixels are to be stored is required, wherein the adjacent pixels are for interpolation filtering in two directions of L0 and L1.

For inter-layer prediction, a memory bandwidth where adjacent pixels are to be stored is required, wherein the adjacent pixels are for interpolation filtering for an upsampling operation from a resolution of a base layer image.

In a case where the inter-layer prediction and the inter prediction (uni-direction or bi-direction) are combined, the memory bandwidth for the interpolation filtering for the inter-layer prediction and the memory bandwidth for the interpolation filtering for the inter prediction are both required.

When prediction between color components is used, it is required to access various color components stored in different positions in the memory, thus, a required memory bandwidth is also increased.

Referring to FIG. 6, a width and a height of an interpolation block including interpolation target samples are marked as W and H, respectively. A width and a height of a memory pattern indicating a sample area to be read at one time by the memory are marked as w and h (referring to FIG. 7), respectively.

A filter length (the number of filter taps) of an interpolation filter for a luma block is marked as TL, and a filter length of an interpolation filter for a chroma block is marked as TC.

A resolution of an enhancement layer that is a prediction target is marked as S_EL, and a resolution of a base layer that is a reference target is marked as S_BL.

A ratio of the enhancement layer and the base layer is marked as S (= S_BL/S_EL). S in x2 spatial scalability may be determined as 1/2, and S in x1.5 spatial scalability may be determined as 2/3. In SNR scalability or motion compensation, S may be determined as 1.

A luma block 60 is a quadrangular block whose width is W and height is H, and a chroma block 62 is a quadrangular block whose width is W and height is H/2. In a color format 4:2:0, a Cb component and a Cr component are arranged in an interleaved manner.

A memory bandwidth means a maximum value of an amount of data to be accessed to and to be read at one time from a memory. When a memory bandwidth required for inter prediction or inter-layer prediction is increased, memory efficiency may deteriorate. For example, when S approaches 1, the memory efficiency deteriorates.

A largest memory bandwidth is required for vertical-direction interpolation filtering and two-dimensional (2D) interpolation filtering via which the vertical-direction interpolation filtering is sequentially performed. For example, a pixel block for the 2D interpolation filtering is determined by extending as a size of an interpolation filter from the luma block 60 and the chroma block 62 in both vertical and horizontal directions. It is requested to have a memory bandwidth for accessing a size of an extended pixel block.

That is, for interpolation filtering with respect to the luma block 60, it is requested to have a memory bandwidth for accessing a memory area 61 with a width (W+TL-1) and a height (H+TL-1), based on TL that is a luma interpolation filter size.

Also, for interpolation filtering with respect to the chroma block 62, it is requested to have a memory bandwidth for accessing a memory area 63 with a width (W+2*TC-2) and a height (H/2+TL-1), based on TC that is a chroma interpolation filter size.

If an enhancement layer block and a reference layer block have different spatial resolutions, scaling according to a resolution ratio is required. That is, a size of a memory area for the interpolation filtering with respect to the luma block 60 may be determined as (W+TL-1)x(H+TL-1)/S/S.

FIG. 7 illustrates a memory access pattern.

Also, it is not that a sample is read one by one from a memory but samples as much as a memory pattern with a width w and a height h may be read from the memory. However, if an upper left corner of a sample area 71 that is accessible according to the memory pattern does not match with an upper left corner of a memory area 70 that is required for interpolation filtering, an unnecessary memory bandwidth is further required such that memory efficiency may deteriorate.

A case in which a memory bandwidth is largest is when a size of a memory pattern is even added to a memory area for interpolation filtering, and in the case, memory efficiency is lowest.

That is, a maximum memory bandwidth required for the interpolation filtering with respect to the luma block 60 may be determined as a width ((W +TL-1)/S+ w-1) and a height ((H +TL-1)/S+ h-1). Similarly, a maximum memory bandwidth required for the interpolation filtering with respect to the chroma block 62 may be determined as a width ((W +2TC-2)/S+ w-1) and a height ((H/2 +TC-1)/S+h-1).

As a result, in the enhancement layer block, a maximum memory bandwidth required for interpolation filtering with respect to a sample including all of YCbCr components may be determined as Equation below.

$$((W+TL-1)/S+ w-1)*((H+TL-1)/S+ h-1) + ((W+2*TC-2)/S+ w-1)*((H/2+TC-1)/S+ h-1)/W/H.$$

The aforementioned memory bandwidth indicates a memory size to be accessed in interpolation filtering for uni-directional inter prediction or inter-layer prediction. For bi-directional inter prediction, a memory bandwidth that is twice as large as the aforementioned memory bandwidth may be required. In a case where the inter-layer prediction and the inter prediction are combined, it is required to have a memory bandwidth with a size as large as a total sum of all memory bandwidths in all interpolation filtering.

Also, according to Equation described above with reference to FIGS. 6 and 7, a memory bandwidth may be changed according to a block size and an inter prediction mode.

Therefore, the scalable video encoding apparatus 10 and the scalable video decoding apparatus 20 according to the exemplary embodiments may adjust the number of times of interpolation filtering according to at least one of a block size and an inter prediction mode so as to prevent an excessive increase in a memory bandwidth and a computational load quantity required for interpolation filtering. Hereinafter, with reference to Tables shown in FIGS. 8 and 9, embodiments in which the number of times of interpolation filtering is limited according to a filter size, a block size, and an inter prediction mode.

FIG. 8 illustrates a memory bandwidth for MC interpolation filtering that is changed according to an inter prediction mode and a block size.

Referring to FIG. 8, a memory bandwidth required for interpolation filtering for prediction with respect to an enhancement layer is decreased from a left side toward a right side.

A partition type of a block indicates a type according to a size and shape of the block.

According to the present exemplary embodiment, bi-directional inter prediction with respect to a 4x8 block and a 8x4 block is limited in the enhancement layer.

On the other hand, in the enhancement layer, bi-directional inter prediction with respect to a 8x8 block, a 4x16 block, and a 16x4 block, uni-directional inter prediction with respect to a 4x8 block, bi-directional inter prediction with respect to a 8x16 block, and uni-directional inter prediction with respect to a 8x4 block are allowed. Also, according to an arranged order, a memory bandwidth required for interpolation filtering for each inter prediction is decreased by degrees.

FIG. 9 illustrates a memory bandwidth for IL interpolation filtering that is changed according to a block size, according to an exemplary embodiment.

When 2D IL interpolation filtering is performed for inter-layer prediction, a memory bandwidth required for IL interpolation filtering is same as a memory bandwidth required for MC interpolation filtering for uni-directional prediction. However, when a size of a prediction target block is decreased, the memory bandwidth required for IL interpolation filtering may be increased.

Referring to FIG. 9, according to an order of a 4x8 block, a 8x4 block, a 8x8 block, a 4x16 block, a 16x4 block, a 8x16 block, and a 8x32 block, the memory bandwidth required for IL interpolation filtering may be decreased.

The scalable video encoding apparatus 10 and the scalable video decoding apparatus 20 according to the exemplary embodiments may set a limit condition about whether or not to perform both inter-layer prediction and inter prediction in the enhancement layer. For example, under a predetermined condition, inter prediction cannot be performed in the enhancement layer, and only inter-layer prediction may be performed.

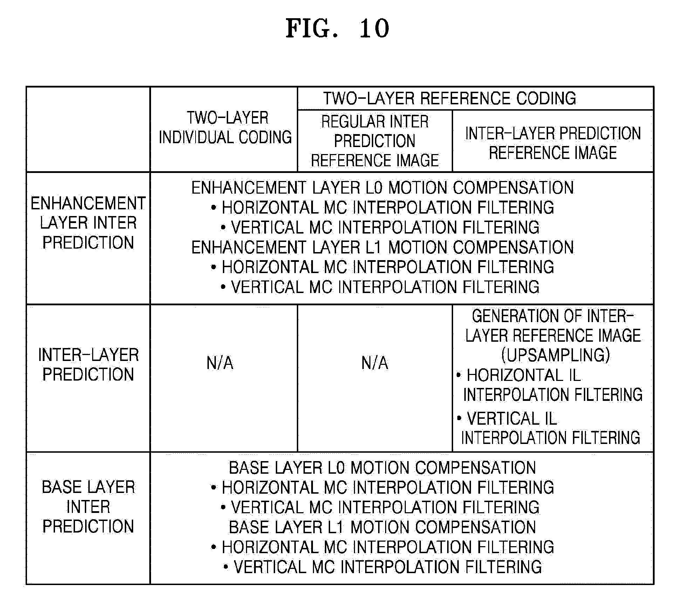

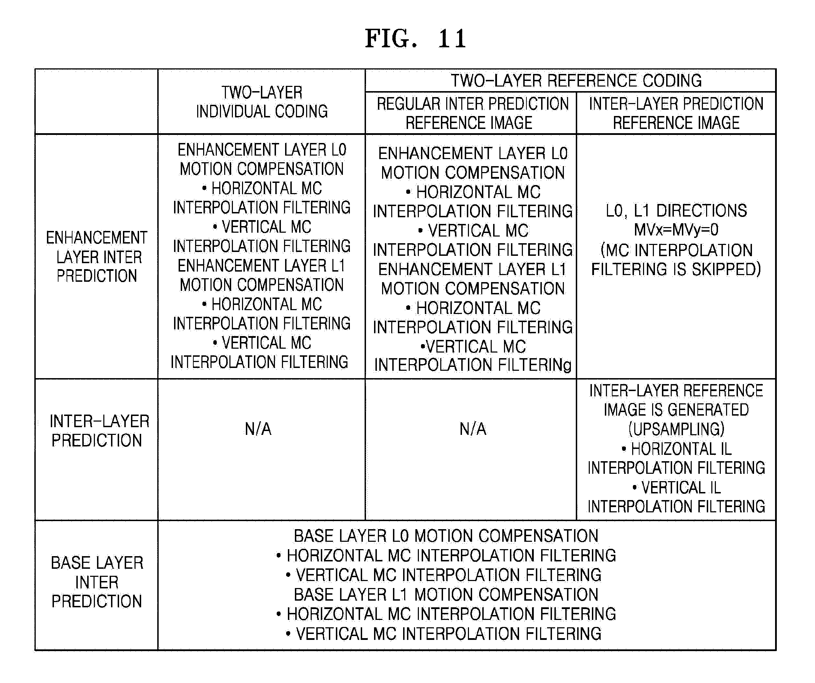

Hereinafter, with reference to FIGS. 10 and 11, the number of times of interpolation filtering required for base layer encoding and enhancement layer encoding is compared in a case without a limit condition and another case with the limit condition.

FIG. 10 illustrates the number of times interpolation filtering is performed in base layer encoding and enhancement layer encoding, with the limit condition.

First, uni-directional prediction or bi-directional prediction may be performed for motion compensation, but a required memory bandwidth is doubled in the bi-directional prediction. In order to introduce a case in which a largest memory bandwidth is required for motion compensation, it is assumed that the motion compensation is performed via the bi-directional prediction.

First, in a two-layer individual coding structure, base layer inter prediction and enhancement layer inter prediction are performed. The motion compensation may be performed in each of the base layer inter prediction and the enhancement layer inter prediction.

Since a reference block for the motion compensation is determined according to each sub-pixel unit, horizontal-direction MC interpolation filtering and vertical-direction MC interpolation filtering are required. Also, for motion compensation in L0 and L1 directions, horizontal-direction MC interpolation filtering and vertical-direction MC interpolation filtering may be performed in each of the directions.

Therefore, for the base layer inter prediction in the two-layer individual coding structure, the horizontal MC interpolation filtering and the vertical MC interpolation filtering may be performed in the L0 direction. Also, for the enhancement layer inter prediction in the two-layer individual coding structure, the horizontal MC interpolation filtering and the vertical MC interpolation filtering may be performed in the L0 direction. Therefore, in the two-layer individual coding structure, a memory bandwidth and a computational load quantity for interpolation filtering that are performed four times are required.

Next, a two-layer reference coding structure, a prediction method may be changed according to whether or not inter-layer prediction is performed.

First, even if it is the two-layer reference coding structure, if the inter-layer prediction is not performed, as in the two-layer individual coding structure, horizontal MC interpolation filtering and vertical MC interpolation filtering may be performed in a L0 direction, and the horizontal MC interpolation filtering and the vertical MC interpolation filtering may be performed in a L1 direction for base layer inter prediction. Also, for enhancement layer inter prediction, horizontal MC interpolation filtering and vertical MC interpolation filtering may be performed in the L0 direction, and the horizontal MC interpolation filtering and the vertical MC interpolation filtering may be performed in the L1 direction. That is, a memory bandwidth and a computational load quantity for interpolation filtering that are performed maximum eight times are required.

However, if the inter-layer prediction is performed in the two-layer reference coding structure, in order to generate an upsampled reference image for the inter-layer prediction, horizontal-direction IL interpolation filtering and vertical-direction IL interpolation filtering may be further performed. Thus, if the inter-layer prediction is performed, a memory bandwidth and a computational load quantity for interpolation filtering that are performed maximum ten times may be required.

FIG. 11 illustrates the number of times interpolation filtering is performed in base layer encoding and enhancement layer encoding, under a predetermined condition, according to an exemplary embodiment.

When an additional memory bandwidth and computational load quantity are required according to inter-layer prediction, the scalable video encoding apparatus 10 and the scalable video decoding apparatus 20 according to the exemplary embodiments may limit inter prediction for enhancement layer prediction.

The scalable video decoding apparatus 20 may perform MC interpolation filtering four times which includes horizontal-direction interpolation filtering and vertical-direction interpolation filtering in each of L0 and L1 directions, using a base layer image. Also, in order to generate an upsampled reference layer image for the inter-layer prediction, the scalable video decoding apparatus 20 may perform IL interpolation filtering two times which include horizontal-direction IL interpolation filtering and vertical-direction IL interpolation filtering, using a reference layer image.

The scalable video decoding apparatus 20 may limit interpolation filtering for the inter-layer prediction to the MC interpolation filtering performed four times for base layer inter prediction and IL interpolation filtering performed two times for the inter-layer prediction. That is, the number of times of the interpolation filtering may be limited to six times.

Therefore, referring to FIG. 11, when the inter-layer prediction is performed, the scalable video decoding apparatus 20 may determine a motion vector for enhancement layer inter prediction as 0. That is, because the motion vector is 0, MC interpolation filtering for inter prediction may be skipped.

Also, when a reference index for a current layer image indicates the upsampled reference layer image, i.e., when the inter-layer prediction is performed, the scalable video decoding apparatus 20 according to another exemplary embodiment may determine all variables related to the motion vector as 0, wherein the variables include a merge index indicating a merge target block, a mvp flag indicating whether a motion vector predictor is used, a reference index of a motion vector, mvd that is motion vector difference information, and a flag (mvd zero flag) indicating whether or not mvd is 0.

Therefore, referring to FIG. 11, a computational quantity of interpolation filtering for inter-layer prediction using an enhancement layer image may not be greater than a total sum of a first computational quantity of MC interpolation filtering for inter prediction using base layer images and a second computational quantity of MC interpolation filtering for inter prediction using enhancement layer images.

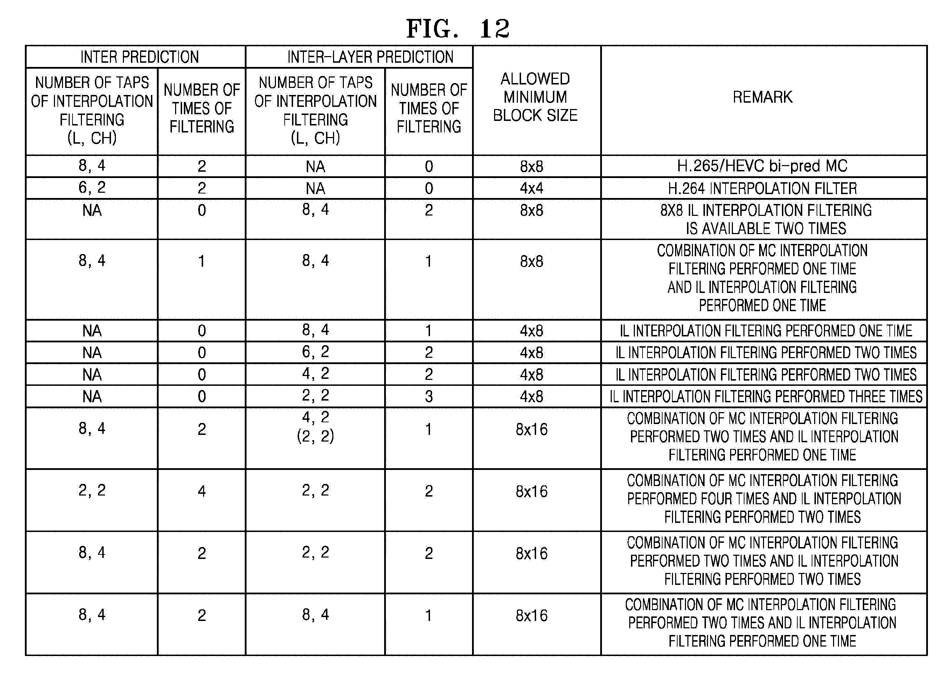

According to another exemplary embodiment, if both inter-layer prediction and inter prediction may be performed using an enhancement layer, the scalable video encoding apparatus 10 and the scalable video decoding apparatus 20 may determine in such a manner that a filter size for IL interpolation filtering is not greater than a filter size for MC interpolation filtering. Hereinafter, with reference to FIG. 12, possible combinations of the MC interpolation filtering and the IL interpolation filtering are presented, provided that a filter size for the IL interpolation filtering is not greater than a filter size for the MC interpolation filtering.

FIG. 12 illustrates combinations of MC interpolation filtering and IL interpolation filtering that may be performed under a predetermined condition, according to an exemplary embodiment.

According to the H.265/HEVC standards, when inter prediction is performed on a block having a size of 8x8 or larger, an 8-tap interpolation filter is used for MC interpolation filtering with respect to a luma block, and a 4-tap interpolation filter is used for the MC interpolation filtering with respect to a chroma block. According to the H.264 standard, when inter prediction is performed on a block having a size of 4x4 or larger, a 6-tap interpolation filter is used for MC interpolation filtering with respect to a luma block, and a 2-tap interpolation filter is used for the MC interpolation filtering with respect to a chroma block.

The scalable video decoding apparatus 20, in order to perform inter-layer prediction, may sequentially perform IL interpolation filtering two times by using an 8-tap interpolation filter for the IL interpolation filtering with respect to a luma block and by using a 4-tap interpolation filter for the IL interpolation filtering with respect to a chroma block. Here, an allowed minimum block size is 8x8.

The scalable video decoding apparatus 20, in order to combine inter prediction and inter-layer prediction for a block having a size of 8x8 or larger, may use an 8-tap MC interpolation filter for the MC interpolation filtering and an 8-tap IL interpolation filter for the IL interpolation filtering with respect to a luma block. The scalable video decoding apparatus 20 may use a 4-tap MC interpolation filter for the MC interpolation filtering and a 4-tap IL interpolation filter for the IL interpolation filtering with respect to a chroma block.

When the scalable video decoding apparatus 20 performs inter-layer prediction on a luma block having a size of 4x8 or larger by using an 8-tap IL interpolation filter, the scalable video decoding apparatus 20 may allow IL interpolation filtering one time and may limit inter prediction. Only 4-tap IL interpolation filtering may be allowed one time with respect to a chroma block of a corresponding block.

When inter-layer prediction is performed on the luma block having a size of 4x8 or larger by using a 6-tap or 4-tap IL interpolation filter, the IL interpolation filtering may be allowed two times but the inter prediction may be limited. 2-tap IL interpolation filtering may be allowed two times with respect to the chroma block of the corresponding block.

When the inter-layer prediction is performed on the luma block having a size of 4x8 or larger by using a 2-tap IL interpolation filter, the IL interpolation filtering may be allowed three times but the inter prediction may be limited. 2-tap IL interpolation filtering may be allowed three times with respect to the chroma block of the corresponding block.

When the scalable video decoding apparatus 20 performs inter-layer prediction on a luma block having a size of 8x16 or larger by using a 4-tap or 2-tap IL interpolation filter, the scalable video decoding apparatus 20 may allow IL interpolation filtering one time and may allow MC interpolation filtering two times using an 8-tap MC interpolation filter. 4-tap MC interpolation filtering may be performed two times and 2-tap IL interpolation filtering may be performed one time for MC interpolation filtering with respect to a chroma block of a corresponding block.

Also, when the scalable video decoding apparatus 20 performs IL interpolation filtering two times on the luma block having a size of 8x16 or larger by using a 2-tap IL interpolation filter, the scalable video decoding apparatus 20 may allow MC interpolation filtering four times using a 2-tap MC interpolation filter. 2-tap MC interpolation filtering may be performed four times and 2-tap IL interpolation filtering may be performed two times for the MC interpolation filtering with respect to the chroma block of the corresponding block.

Also, when the scalable video decoding apparatus 20 performs the IL interpolation filtering two times on the luma block having a size of 8x16 or larger by using the 2-tap IL interpolation filter, the scalable video decoding apparatus 20 may allow MC interpolation filtering two times using an 8-tap MC interpolation filter. 4-tap MC interpolation filtering may be performed two times and 4-tap IL interpolation filtering may be performed two times for the MC interpolation filtering with respect to the chroma block of the corresponding block.

Also, when the scalable video decoding apparatus 20 performs the IL interpolation filtering one time on the luma block having a size of 8x16 or larger by using an 8-tap IL interpolation filter, the scalable video decoding apparatus 20 may allow the MC interpolation filtering two times using the 8-tap MC interpolation filter. the 4-tap MC interpolation filtering may be performed two times and the 4-tap IL interpolation filtering may be performed one time for the MC interpolation filtering with respect to the chroma block of the corresponding block.

According to the aforementioned various combinations of the inter prediction and the inter-layer prediction that may be performed with respect to the enhancement layer, a minimum block size that allows the combination of the inter-layer prediction and the inter prediction is 8x8.

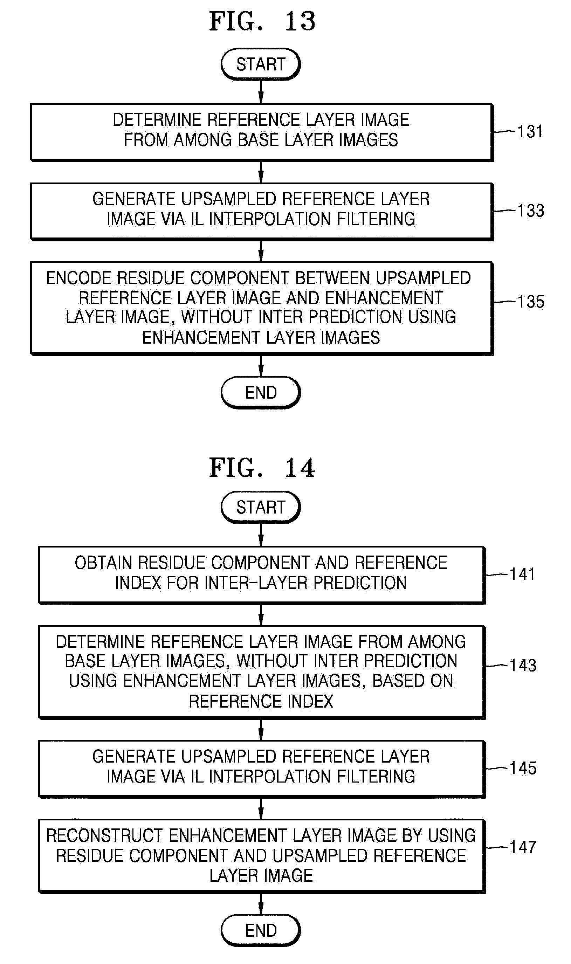

FIG. 13 illustrates a flowchart of a scalable video encoding method, according to an exemplary embodiment.

In operation 131, the scalable video encoding apparatus 10 may determine a reference layer image from among base layer images so as to perform inter-layer prediction on an enhancement layer image.

First, the scalable video encoding apparatus 10 may perform MC interpolation filtering four times which include horizontal-direction interpolation filtering and vertical-direction interpolation filtering in each of L0 and L1 prediction directions, using a base layer image, and thus may perform motion estimation and motion compensation. A reconstructed base layer image may be generated via the motion compensation. The reference layer image of the enhancement layer image may be determined from among reconstructed base layer images.

In operation 133, the scalable video encoding apparatus 10 may perform IL interpolation filtering on the reference layer image and thus may generate an upsampled reference layer image.

The scalable video encoding apparatus 10 may perform, on the reference layer image, the IL interpolation filtering two times which include horizontal-direction IL interpolation filtering and vertical-direction IL interpolation filtering, and thus may generate the upsampled reference layer image.

In order to prevent an increase in a computational quantity, compared to a two-layer individual prediction structure, when the scalable video encoding apparatus 10 performs inter-layer prediction on a sample from among the enhancement layer image, the scalable video encoding apparatus 10 may limit interpolation filtering to MC interpolation filtering performed four times and IL interpolation filtering performed two times.

In operation 135, when the upsampled reference layer image is determined via the IL interpolation filtering, the scalable video encoding apparatus 10 may determine not to perform inter prediction using enhancement layer images for the enhancement layer image. The scalable video encoding apparatus 10 may encode a residue component between the upsampled reference layer image and the enhancement layer image, and thus may output an enhancement layer bitstream.

The scalable video encoding apparatus 10 may encode a reference index indicating a reference image according to each block. For the block to which the inter-layer prediction is performed, the reference index indicating that a reference image used for the enhancement layer image is an upsampled reference image may be encoded. In this case, since the scalable video encoding apparatus 10 skips inter prediction in an enhancement layer, the scalable video encoding apparatus 10 may encode a motion vector in such a manner that the motion vector for the inter prediction in the enhancement layer images indicates 0.

FIG. 14 illustrates a flowchart of a scalable video decoding method, according to an exemplary embodiment.

In operation 141, the scalable video decoding apparatus 20 may obtain a reference index indicating a residue component and a reference layer image for inter-layer prediction using an enhancement layer image.

In operation 143, the scalable video decoding apparatus 20 may determine not to perform inter prediction using enhancement layer images, based on the reference index, and may determine the reference layer image from among base layer images.

When the reference index of the enhancement layer image indicates an upsampled reference image, the scalable video decoding apparatus 20 may determine a motion vector as 0, wherein the motion vector is for the inter prediction using the enhancement layer images.

First, the scalable video decoding apparatus 20 may determine a reference image for motion compensation using a base layer image. In order to determine a reference block in a sub-pixel unit from the reference image, the scalable video decoding apparatus 20 may perform, on the reference image, MC interpolation filtering four times which include horizontal-direction interpolation filtering and vertical-direction interpolation filtering in each of L0 and L1 prediction directions. When motion compensation is performed using the base layer image, a reconstructed base layer image may be generated.

In operation 145, the scalable video decoding apparatus 20 may perform IL interpolation filtering on the previously-determined reference layer image, and thus may generate an upsampled reference layer image.

The scalable video decoding apparatus 20 may perform, on the reference layer image determined from among reconstructed base layer images, the IL interpolation filtering two times which include horizontal-direction IL interpolation filtering and vertical-direction IL interpolation filtering, and thus may generate the upsampled reference layer image.

When inter-layer prediction is performed on a sample from among the enhancement layer image, interpolation filtering may be limited to the MC interpolation filtering performed four times in the operation 143 and the IL interpolation filtering performed two times in the operation 145.

In operation 147, the scalable video decoding apparatus 20 may reconstruct the enhancement layer image by using the residue component of the inter-layer prediction and the upsampled reference layer image.

In order to prevent an increase in a computational quantity of an inter-layer prediction structure, compared to a two-layer individual prediction structure, the scalable video encoding apparatus 10 and the scalable video decoding apparatus 20 according to another exemplary embodiment may limit the number of times of the MC interpolation filtering and the number of times of the IL interpolation filtering, based on at least one of the number of taps of an MC interpolation filter for the MC interpolation filtering using the enhancement layer image, the number of taps of an IL interpolation filter for the IL interpolation filtering, and a size of a prediction unit of the enhancement layer image.

Accordingly, a computational quantity of interpolation filtering for inter-layer prediction using the enhancement layer image may be adjusted not to be greater than a total sum of a first computational quantity of MC interpolation filtering for inter prediction using the base layer images and a second computational quantity of MC interpolation filtering for inter prediction using the enhancement layer images.

As described above, the scalable video encoding apparatus 10 and the scalable video decoding apparatus 20 according to the exemplary embodiments split blocks of divided video data into coding units of a tree structure, and encoding units, prediction units, and transformation units are used for inter-layer prediction or inter-prediction of the coding unit. Hereinafter, with reference to FIGS. 15 through 27, a video encoding method and apparatus therefor, and a video decoding method and apparatus therefor, based on coding units and transformation units of a tree structure, are described.

Basically, in an encoding/decoding procedure for a multilayer video, an encoding/decoding procedure for base layer images, and an encoding/decoding procedure for enhancement layer images are separately performed. That is, when inter-layer prediction occurs in the multilayer video, encoding/decoding results of a single layer video may be mutually referred to, but an encoding/decoding procedure is performed for each of single layer videos.

Therefore, for convenience of description, a video encoding procedure and a video decoding procedure based on coding units of a tree structure that are described layer with reference to FIGS. 15 through 27 are a video encoding procedure and a video decoding procedure for a single layer video, thus, inter-prediction and motion compensation are described in detail. However, as described above with reference to FIGS. 1 through 14, for encoding/decoding a video stream, inter-layer prediction and compensation between base layer images and enhancement layer images are performed.

Therefore, in order for the base layer encoder 11 of the scalable video encoding apparatus 10 according to the present exemplary embodiment to encode a multilayer video, based on coding units of a tree structure, the base layer encoder 11 may include video encoding apparatuses 100 of FIG. 15 corresponding to the number of layers of a multilayer video so as to perform video encoding on each of single layer videos, and may control the video encoding apparatuses 100 to encode the single layer videos, respectively. Also, the scalable video encoding apparatus 10 may perform inter-view prediction by using encoding results with respect to discrete single views obtained by the video encoding apparatuses 100. Accordingly, the base layer encoder 11 of the scalable video encoding apparatus 10 may generate a base layer video stream and an enhancement layer video stream that include an encoding result of each layer.

Similarly, in order for the enhancement layer decoder 23 of the scalable video decoding apparatus 20 to decode a multilayer video, based on coding units of a tree structure, the enhancement layer decoder 23 may include video decoding apparatuses 200 of FIG. 16 corresponding to the number of layers of a multilayer video so as to perform video decoding on each of layers of a received base layer video stream and a received enhancement layer video stream, and may control the video decoding apparatuses 200 to decode single layer videos, respectively. Then, the scalable video decoding apparatus 20 may perform inter-layer compensation by using decoding results with respect to discrete single layers obtained by the video decoding apparatuses 200. Accordingly, the enhancement layer decoder 23 of the scalable video decoding apparatus 20 may generate base layer images and enhancement layer images that are reconstructed for each of the layers.

FIG. 15 is a block diagram of a video encoding apparatus based on coding units of a tree structure 100, according to an exemplary embodiment.

The video encoding apparatus involving video prediction based on coding units of the tree structure 100 includes a coding unit determiner 120 and an output unit 130. Hereinafter, for convenience of description, the video encoding apparatus involving video prediction based on coding units of the tree structure 100 is referred as 'video encoding apparatus 100'.

The coding unit determiner 120 may split a current picture based on a maximum coding unit that is a coding unit having a maximum size for a current picture of an image. If the current

picture is larger than the maximum coding unit, image data of the current picture may be split into the at least one maximum coding unit. The maximum coding unit according to an exemplary embodiment may be a data unit having a size of 32x32, 64x64, 128x128, 256x256, etc., wherein a shape of the data unit is a square having a width and length in squares of 2.

A coding unit according to an embodiment may be characterized by a maximum size and a depth. The depth denotes the number of times the coding unit is spatially split from the maximum coding unit, and as the depth deepens, deeper coding units according to depths may be split from the maximum coding unit to a minimum coding unit. A depth of the maximum coding unit is an uppermost depth and a depth of the minimum coding unit is a lowermost depth. Since a size of a coding unit corresponding to each depth decreases as the depth of the maximum coding unit deepens, a coding unit corresponding to an upper depth may include a plurality of coding units corresponding to lower depths.

As described above, the image data of the current picture is split into the maximum coding units according to a maximum size of the coding unit, and each of the maximum coding units may include deeper coding units that are split according to depths. Since the maximum coding unit according to an exemplary embodiment is split according to depths, the image data of a spatial domain included in the maximum coding unit may be hierarchically classified according to depths.

A maximum depth and a maximum size of a coding unit, which limit the total number of times a height and a width of the maximum coding unit are hierarchically split, may be predetermined.

The coding unit determiner 120 encodes at least one split region obtained by splitting a region of the maximum coding unit according to depths, and determines a depth to output a finally encoded image data according to the at least one split region. In other words, the coding unit determiner 120 determines a coded depth by encoding the image data in the deeper coding units according to depths, according to the maximum coding unit of the current picture, and selecting a depth having the least encoding error. The determined coded depth and the encoded image data according to the determined coded depth are output to the output unit 130.

The image data in the maximum coding unit is encoded based on the deeper coding units corresponding to at least one depth equal to or below the maximum depth, and results of encoding the image data are compared based on each of the deeper coding units. A depth having the least encoding error may be selected after comparing encoding errors of the deeper coding units. At least one coded depth may be selected for each maximum coding unit.

The size of the maximum coding unit is split as a coding unit is hierarchically split according to depths, and as the number of coding units increases. Also, even if coding units correspond to the same depth in one maximum coding unit, it is determined whether to split each of the coding units corresponding to the same depth to a lower depth by measuring an encoding error of the image data of the each coding unit, separately. Accordingly, even when image data is included in one maximum coding unit, the encoding errors may differ according to regions in the one maximum coding unit, and thus the coded depths may differ according to regions in the image data. Thus, one or more coded depths may be determined in one maximum coding unit, and the image data of the maximum coding unit may be divided according to coding units of at least one coded depth.

Accordingly, the coding unit determiner 120 may determine coding units having a tree structure included in the maximum coding unit. The 'coding units having a tree structure' according to an exemplary embodiment include coding units corresponding to a depth determined to be the coded depth, from among all deeper coding units included in the maximum coding unit. A coding unit of a coded depth may be hierarchically determined according to depths in the same region of the maximum coding unit, and may be independently determined in different regions. Similarly, a coded depth in a current region may be independently determined from a coded depth in another region.

A maximum depth according to an exemplary embodiment is an index related to the number of splitting times from a maximum coding unit to a minimum coding unit. A first maximum depth according to an exemplary embodiment may denote the total number of splitting times from the maximum coding unit to the minimum coding unit. A second maximum depth according to an exemplary embodiment may denote the total number of depth levels from the maximum coding unit to the minimum coding unit. For example, when a depth of the maximum coding unit is 0, a depth of a coding unit, in which the maximum coding unit is split once, may be set to 1, and a depth of a coding unit, in which the maximum coding unit is split twice, may be set to 2. Here, if the minimum coding unit is a coding unit in which the maximum coding unit is split four times, 5 depth levels of depths 0, 1, 2, 3, and 4 exist, and thus the first maximum depth may be set to 4, and the second maximum depth may be set to 5.

Prediction encoding and transformation may be performed according to the maximum coding unit. The prediction encoding and the transformation are also performed based on the deeper coding units according to a depth equal to or depths less than the maximum depth, according to the maximum coding unit.

Since the number of deeper coding units increases whenever the maximum coding unit is split according to depths, encoding, including the prediction encoding and the transformation, is performed on all of the deeper coding units generated as the depth deepens. For convenience of description, the prediction encoding and the transformation will now be described based on a coding unit of a current depth, in a maximum coding unit.

The video encoding apparatus 100 may variously select a size or shape of a data unit for encoding the image data. In order to encode the image data, operations, such as prediction encoding, transformation, and entropy encoding, are performed, and at this time, the same data unit may be used for all operations or different data units may be used for each operation.

For example, the video encoding apparatus 100 may select not only a coding unit for encoding the image data, but also a data unit different from the coding unit so as to perform the prediction encoding on the image data in the coding unit.

In order to perform prediction encoding in the maximum coding unit, the prediction encoding may be performed based on a coding unit corresponding to a coded depth, i.e., based on a coding unit that is no longer split into coding units corresponding to a lower depth. Hereinafter, the coding unit that is no longer split and becomes a basis unit for prediction encoding will now be referred to as a 'prediction unit'. A partition obtained by splitting the prediction unit may include a prediction unit or a data unit obtained by splitting at least one selected from a height and a width of the prediction unit. A partition is a data unit where a prediction unit of a coding unit is split, and a prediction unit may be a partition having the same size as a coding unit.

For example, when a coding unit of 2Nx2N (where N is a positive integer) is no longer split and becomes a prediction unit of 2Nx2N, and a size of a partition may be 2Nx2N, 2NxN, Nx2N, or NxN. Examples of a partition type include symmetrical partitions that are obtained by symmetrically splitting a height or width of the prediction unit, partitions obtained by asymmetrically splitting the height or width of the prediction unit, such as 1:n or n: 1, partitions that are obtained by geometrically splitting the prediction unit, and partitions having arbitrary shapes.

A prediction mode of the prediction unit may be at least one selected from an intra mode, a inter mode, and a skip mode. For example, the intra mode or the inter mode may be performed on the partition of 2Nx2N, 2NxN, Nx2N, or NxN. Also, the skip mode may be performed only on the partition of 2Nx2N. The encoding is independently performed on one prediction unit in a coding unit, thereby selecting a prediction mode having a least encoding error.

The video encoding apparatus 100 may also perform the transformation on the image data in a coding unit based not only on the coding unit for encoding the image data, but also based on a data unit that is different from the coding unit. In order to perform the transformation in the coding unit, the transformation may be performed based on a data unit having a size smaller than or equal to the coding unit. For example, the data unit for the transformation may include a data unit for an intra mode and a data unit for an inter mode.

The transformation unit in the coding unit may be recursively split into smaller sized regions in the similar manner as the coding unit according to the tree structure. Thus, residual data in the coding unit may be divided according to the transformation unit having the tree structure according to transformation depths.

A transformation depth indicating the number of splitting times to reach the transformation unit by splitting the height and width of the coding unit may also be set in the transformation unit. For example, in a current coding unit of 2Nx2N, a transformation depth may be 0 when the size of a transformation unit is 2Nx2N, may be 1 when the size of the transformation unit is NxN, and may be 2 when the size of the transformation unit is N/2xN/2. In other words, the transformation unit having the tree structure may be set according to the transformation depths.

Encoding information according to coding units corresponding to a coded depth requires not only information about the coded depth, but also about information related to prediction encoding and transformation. Accordingly, the coding unit determiner 120 not only determines a coded depth having a least encoding error, but also determines a partition type in a prediction unit, a prediction mode according to prediction units, and a size of a transformation unit for transformation.

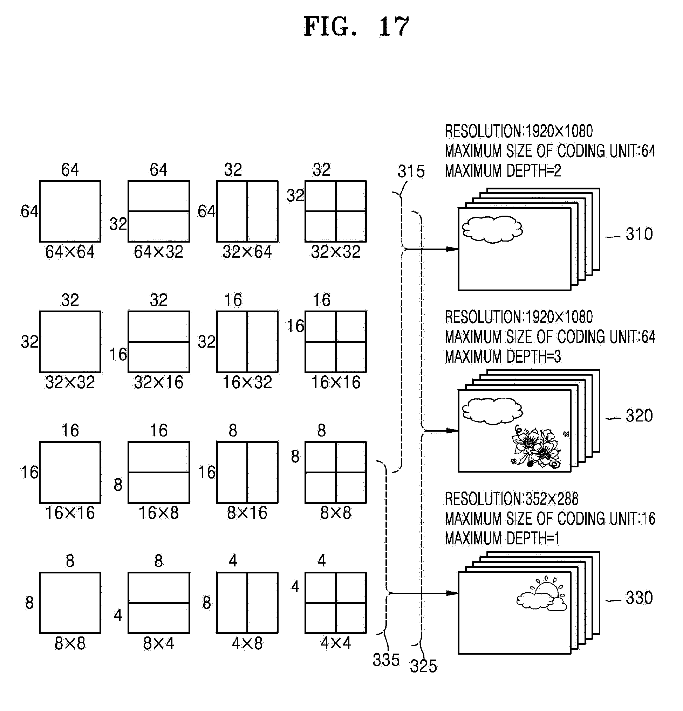

Coding units according to a tree structure in a maximum coding unit and methods of determining a prediction unit/partition, and a transformation unit, according to exemplary embodiments, will be described in detail later with reference to FIGS. 17 through 27.

The coding unit determiner 120 may measure an encoding error of deeper coding units according to depths by using Rate-Distortion Optimization based on Lagrangian multipliers.

The output unit 130 outputs the image data of the maximum coding unit, which is encoded based on the at least one coded depth determined by the coding unit determiner 120, and information about the encoding mode according to the coded depth, in bitstreams.

The encoded image data may be obtained by encoding residual data of an image.

The information about the encoding mode according to coded depth may include information about the coded depth, about the partition type in the prediction unit, the prediction mode, and the size of the transformation unit.

The information about the coded depth may be defined by using split information according to depths, which indicates whether encoding is performed on coding units of a lower depth instead of a current depth. If the current depth of the current coding unit is the coded depth, image data in the current coding unit is encoded and output, and thus the split information may be defined not to split the current coding unit to a lower depth. Alternatively, if the current depth of the current coding unit is not the coded depth, the encoding is performed on the coding unit of the lower depth, and thus the split information may be defined to split the current coding unit to obtain the coding units of the lower depth.

If the current depth is not the coded depth, encoding is performed on the coding unit that is split into the coding unit of the lower depth. Since at least one coding unit of the lower depth exists in one coding unit of the current depth, the encoding is repeatedly performed on each coding unit of the lower depth, and thus the encoding may be recursively performed for the coding units having the same depth.

Since the coding units having a tree structure are determined for one maximum coding unit, and information about at least one encoding mode is determined for a coding unit of a coded depth, information about at least one encoding mode may be determined for one maximum coding unit. Also, a coded depth of the image data of the maximum coding unit may be different according to locations since the image data is hierarchically split according to depths, and thus information about the coded depth and the encoding mode may be set for the image data.

Accordingly, the output unit 130 may assign encoding information about a corresponding coded depth and an encoding mode to at least one of the coding unit, the prediction unit, and a minimum unit included in the maximum coding unit.

The minimum unit according to an exemplary embodiment is a square data unit obtained by splitting the minimum coding unit constituting the lowermost depth by 4. Alternatively, the minimum unit according to an embodiment may be a maximum square data unit that may be included in all of the coding units, prediction units, partition units, and transformation units included in the maximum coding unit.

For example, the encoding information output by the output unit 130 may be classified into encoding information according to deeper coding units, and encoding information according to prediction units. The encoding information according to the deeper coding units may include the information about the prediction mode and about the size of the partitions. The encoding information according to the prediction units may include information about an estimated direction during an inter mode, about a reference image index of the inter mode, about a motion vector, about a chroma component of an intra mode, and about an interpolation method during the intra mode.

Information about a maximum size of the coding unit defined according to pictures, slices, or GOPs, and information about a maximum depth may be inserted into a header of a bitstream, a sequence parameter set, or a picture parameter set.

Information about a maximum size of the transformation unit permitted with respect to a current video, and information about a minimum size of the transformation unit may also be output through a header of a bitstream, a sequence parameter set, or a picture parameter set. The output unit 130 may encode and output reference information, prediction information, and slice type information that are related to prediction.

According to the simplest exemplary embodiment for the video encoding apparatus 100, the deeper coding unit may be a coding unit obtained by dividing a height or width of a coding unit of an upper depth, which is one layer above, by two. In other words, when the size of the coding unit of the current depth is 2Nx2N, the size of the coding unit of the lower depth is NxN. Also, the coding unit with the current depth having a size of 2Nx2N may include a maximum of 4 of the coding units with the lower depth.

Accordingly, the video encoding apparatus 100 may form the coding units having the tree structure by determining coding units having an optimum shape and an optimum size for each maximum coding unit, based on the size of the maximum coding unit and the maximum depth determined considering characteristics of the current picture. Also, since encoding may be performed on each maximum coding unit by using any one of various prediction modes and transformations, an optimum encoding mode may be determined considering characteristics of the coding unit of various image sizes.

Thus, if an image having a high resolution or a large data amount is encoded in a conventional macroblock, the number of macroblocks per picture excessively increases. Accordingly, the number of pieces of compressed information generated for each macroblock increases, and thus it is difficult to transmit the compressed information and data compression efficiency decreases. However, by using the video encoding apparatus 100 according to the present exemplary embodiment, image compression efficiency may be increased since a coding unit is adjusted while considering characteristics of an image while increasing a maximum size of a coding unit while considering a size of the image.

The scalable video encoding apparatus 10 described above with reference to FIG. 1 may include the video encoding apparatuses 100 corresponding to the number of layers so as to encode single layer images in each of the layers of a multilayer video. For example, the base layer encoder 11 may include one video encoding apparatus 100, and the enhancement layer encoder 13 may include the video encoding apparatuses 100 corresponding to the number of enhancement layers.

When the video encoding apparatuses 100 encode base layer images, the coding unit determiner 120 may determine a prediction unit for inter-image prediction for each of coding units of a tree structure according to each maximum coding unit, and may perform the inter-image prediction on each prediction unit.

When the video encoding apparatuses 100 encode enhancement layer images, the coding unit determiner 120 may determine prediction units and coding units of a tree structure according to each maximum coding unit, and may perform inter-prediction on each of the prediction units.

FIG. 16 is a block diagram of a video decoding apparatus based on coding units of a tree structure 200, according to an exemplary embodiment.

The video decoding apparatus involving video prediction based on coding units of the tree structure 200 according to the present exemplary embodiment includes a receiver 210, an image data and encoding information extractor 220, and an image data decoder 230. Hereinafter, for convenience of description, the video decoding apparatus involving video prediction based on coding units of the tree structure 200 according to the present exemplary embodiment is referred as 'video decoding apparatus 200'.

Definitions of various terms, such as a coding unit, a depth, a prediction unit, a transformation unit, and information about various encoding modes, for decoding operations of the video decoding apparatus 200 according to the present exemplary embodiment are identical to those described with reference to FIG. 15 and the video encoding apparatus 100.

The receiver 210 receives and parses a bitstream of an encoded video. The image data and encoding information extractor 220 extracts encoded image data for each coding unit from the parsed bitstream, wherein the coding units have a tree structure according to each maximum coding unit, and outputs the extracted image data to the image data decoder 230. The image data and encoding information extractor 220 may extract information about a maximum size of a coding unit of a current picture, from a header about the current picture, a sequence parameter set, or a picture parameter set.

Also, the image data and encoding information extractor 220 extracts information about a coded depth and an encoding mode for the coding units having a tree structure according to each maximum coding unit, from the parsed bitstream. The extracted information about the coded depth and the encoding mode is output to the image data decoder 230. That is, the image data in a bit stream is split into the maximum coding unit so that the image data decoder 230 decodes the image data for each maximum coding unit.

The information about the coded depth and the encoding mode according to the maximum coding unit may be set for information about at least one coding unit corresponding to the coded depth, and information about an encoding mode may include information about a partition type of a corresponding coding unit corresponding to the coded depth, about a prediction mode, and a size of a transformation unit. Also, splitting information according to depths may be extracted as the information about the coded depth.

The information about the coded depth and the encoding mode according to each maximum coding unit extracted by the image data and encoding information extractor 220 is information about a coded depth and an encoding mode determined to generate a minimum encoding error when an encoder, such as the video encoding apparatus 100, repeatedly performs encoding for each deeper coding unit according to depths according to each maximum coding unit. Accordingly, the video decoding apparatus 200 may reconstruct an image by decoding the image data according to a coded depth and an encoding mode that generates the minimum encoding error.

Since encoding information about the coded depth and the encoding mode may be assigned to a predetermined data unit from among a corresponding coding unit, a prediction unit, and a minimum unit, the image data and encoding information extractor 220 may extract the information about the coded depth and the encoding mode according to the predetermined data units. If information about a coded depth and encoding mode of a corresponding maximum coding unit is recorded according to predetermined data units, the predetermined data units to which the same information about the coded depth and the encoding mode is assigned may be inferred to be the data units included in the same maximum coding unit.

The image data decoder 230 reconstructs the current picture by decoding the image data in each maximum coding unit based on the information about the coded depth and the encoding mode according to the maximum coding units. In other words, the image data decoder 230 may decode the encoded image data based on the extracted information about the partition type, the prediction mode, and the transformation unit for each coding unit from among the coding units having the tree structure included in each maximum coding unit. A decoding process may include a prediction including intra prediction and motion compensation, and an inverse transformation.

The image data decoder 230 may perform intra prediction or motion compensation according to a partition and a prediction mode of each coding unit, based on the information about the partition type and the prediction mode of the prediction unit of the coding unit according to coded depths.

In addition, the image data decoder 230 may read information about a transformation unit according to a tree structure for each coding unit so as to perform inverse transformation based on transformation units for each coding unit, for inverse transformation for each maximum coding unit. Via the inverse transformation, a pixel value of a spatial domain of the coding unit may be reconstructed.

The image data decoder 230 may determine a coded depth of a current maximum coding unit by using split information according to depths. If the split information indicates that image data is no longer split in the current depth, the current depth is a coded depth. Accordingly, the image data decoder 230 may decode encoded data in the current maximum coding unit by using the information about the partition type of the prediction unit, the prediction mode, and the size of the transformation unit for each coding unit corresponding to the coded depth.

In other words, data units containing the encoding information including the same split information may be gathered by observing the encoding information set assigned for the predetermined data unit from among the coding unit, the prediction unit, and the minimum unit, and the gathered data units may be considered to be one data unit to be decoded by the image data decoder 230 in the same encoding mode. As such, the current coding unit may be decoded by obtaining the information about the encoding mode for each coding unit.

The scalable video decoding apparatus 20 described above with reference to FIG. 2 may include the video decoding apparatuses 200 corresponding to the number of views, so as to decode a received base layer image stream and a received enhancement layer image stream and to reconstruct base layer images and enhancement layer images.

When the base layer image stream is received, the image data decoder 230 of the video decoding apparatus 200 may split samples of the base layer images, which are extracted from the base layer image stream by an extractor 220, into coding units according to a tree structure of a maximum coding unit. The image data decoder 230 may perform motion compensation, based on prediction units for the inter-image prediction, on each of the coding units according to the tree structure of the samples of the base layer images, and may reconstruct the base layer images.

When the enhancement layer image stream is received, the image data decoder 230 of the video decoding apparatus 200 may split samples of the enhancement layer images, which are extracted from the enhancement layer image stream by the extractor 220, into coding units according to a tree structure of a maximum coding unit. The image data decoder 230 may perform motion compensation, based on prediction units for the inter-image prediction, on each of the coding units of the samples of the enhancement layer images, and may reconstruct the enhancement layer images.

Thus, the video decoding apparatus 200 may obtain information about at least one coding unit that generates the minimum encoding error when encoding is recursively performed for each maximum coding unit, and may use the information to decode the current picture. That is, the coding units having the tree structure determined to be the optimum coding units in each maximum coding unit may be decoded.

Accordingly, even if an image has high resolution or has an excessively large data amount, the image may be efficiently decoded and reconstructed by using a size of a coding unit and an encoding mode, which are adaptively determined according to characteristics of the image, by using information about an optimum encoding mode received from an encoder.

FIG. 17 is a diagram for describing a concept of coding units according to an exemplary embodiment.

A size of a coding unit may be expressed by width x height, and may be 64x64, 32x32, 16x16, and 8x8. A coding unit of 64x64 may be split into partitions of 64x64, 64x32, 32x64, or 32x32, and a coding unit of 32x32 may be split into partitions of 32x32, 32x16, 16x32, or 16x16, a coding unit of 16x16 may be split into partitions of 16x16, 16x8, 8x16, or 8x8, and a coding unit of 8x8 may be split into partitions of 8x8, 8x4, 4x8, or 4x4.

In video data 310, a resolution is 1920x1080, a maximum size of a coding unit is 64, and a maximum depth is 2. In video data 320, a resolution is 1920x1080, a maximum size of a coding unit is 64, and a maximum depth is 3. In video data 330, a resolution is 352x288, a maximum size of a coding unit is 16, and a maximum depth is 1. The maximum depth shown in FIG. 17 denotes the total number of splits from a maximum coding unit to a minimum decoder.

If a resolution is high or a data amount is large, a maximum size of a coding unit may be large so as to not only increase encoding efficiency but also to accurately reflect characteristics of an image. Accordingly, the maximum size of the coding unit of the video data 310 and 320 having a higher resolution than the video data 330 may be 64.

Since the maximum depth of the video data 310 is 2, coding units 315 of the vide data 310 may include a maximum coding unit having a long axis size of 64, and coding units having long axis sizes of 32 and 16 since depths are deepened to two layers by splitting the maximum coding unit twice. On the other hand, since the maximum depth of the video data 330 is 1, coding units 335 of the video data 330 may include a maximum coding unit having a long axis size of 16, and coding units having a long axis size of 8 since depths are deepened to one layer by splitting the maximum coding unit once.

Since the maximum depth of the video data 320 is 3, coding units 325 of the video data 320 may include a maximum coding unit having a long axis size of 64, and coding units having long axis sizes of 32, 16, and 8 since the depths are deepened to 3 layers by splitting the maximum coding unit three times. As a depth deepens, an expression capability with respect to detailed information may be improved.

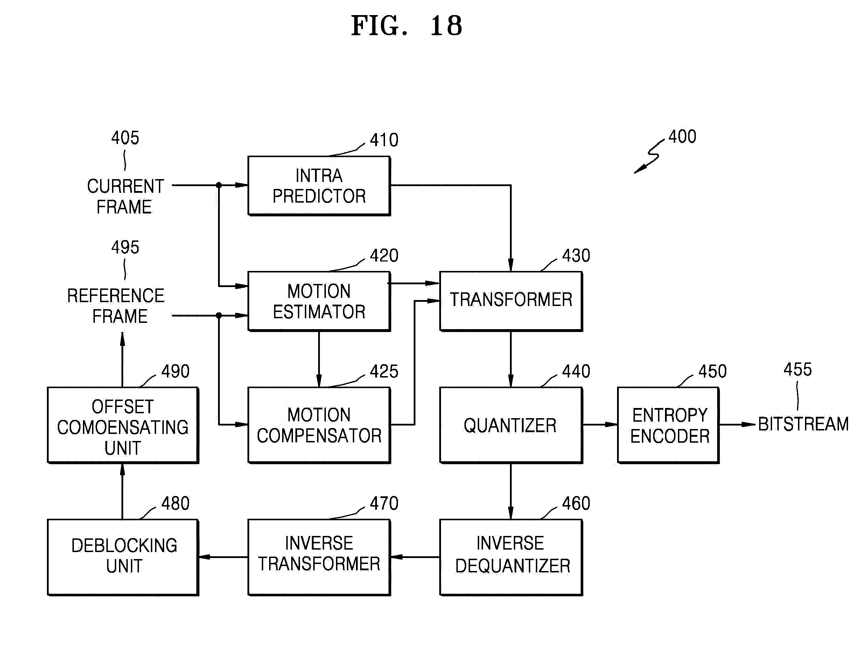

FIG. 18 is a block diagram of an image encoder 400 based on coding units, according to an exemplary embodiment.

The image encoder 400 performs operations of the coding unit determiner 120 of the video encoding apparatus 100 to encode image data. In other words, an intra predictor 410 performs intra prediction on coding units in an intra mode, from among a current frame 405, and a motion estimator 420 and a motion compensator 425 respectively perform inter estimation and motion compensation on coding units in an inter mode from among the current frame 405 by using the current frame 405, and a reference frame 495.

Data output from the intra predictor 410, the motion estimator 420, and the motion compensator 425 is output as a quantized transformation coefficient through a transformer 430 and a quantizer 440. The quantized transformation coefficient is reconstructed as data in a spatial domain through an inverse quantizer 460 and an inverse transformer 470, and the reconstructed data in the spatial domain is output as the reference frame 495 after being post-processed through a deblocking unit 480 and an offset compensating unit 490. The quantized transformation coefficient may be output as a bitstream 455 through an entropy encoder 450.

In order for the image encoder 400 to be applied in the video encoding apparatus 100, all elements of the image encoder 400, i.e., the intra predictor 410, the motion estimator 420, the motion compensator 425, the transformer 430, the quantizer 440, the entropy encoder 450, the inverse quantizer 460, the inverse transformer 470, the deblocking unit 480, and the offset compensating unit 490 perform operations based on each coding unit among coding units having a tree structure while the maximum depth of each maximum coding unit is considered.

In particular, the intra predictor 410, the motion estimator 420, and the motion compensator 425 determine partitions and a prediction mode of each coding unit from among the coding units having a tree structure while considering the maximum size and the maximum depth of a current maximum coding unit, and the transformer 430 determines the size of the transformation unit in each coding unit from among the coding units having a tree structure.

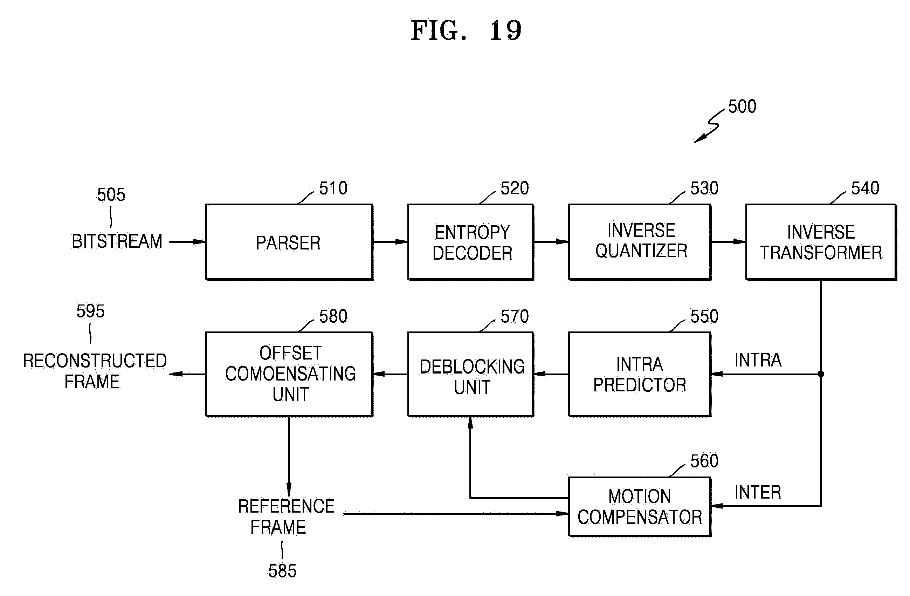

FIG. 19 is a block diagram of an image decoder 500 based on coding units, according to an exemplary embodiment.

A parser 510 parses encoded image data to be decoded and information about encoding required for decoding from a bitstream 505. The encoded image data is output as inverse quantized data through an entropy decoder 520 and an inverse quantizer 530, and the inverse quantized data is reconstructed to image data in a spatial domain through an inverse transformer 540.

An intra predictor 550 performs intra prediction on coding units in an intra mode with respect to the image data in the spatial domain, and a motion compensator 560 performs motion compensation on coding units in an inter mode by using a reference frame 585.

The image data in the spatial domain, which passed through the intra predictor 550 and the motion compensator 560, may be output as a reconstructed frame 595 after being post-processed through a deblocking unit 570 and an offset compensating unit 580. Also, the image data that is post-processed through the deblocking unit 570 and the offset compensating unit 580 may be output as the reference frame 585.

In order to decode the image data in the image data decoder 230 of the video decoding apparatus 200, the image decoder 500 may perform operations that are performed after the parser 510.

In order for the image decoder 500 to be applied in the video decoding apparatus 200, all elements of the image decoder 500, i.e., the parser 510, the entropy decoder 520, the inverse quantizer 530, the inverse transformer 540, the intra predictor 550, the motion compensator 560, the deblocking unit 570, and the offset compensating unit 580 perform operations based on coding units having a tree structure for each maximum coding unit.

In particular, the intra predictor 550 and the motion compensator 560 have to determine partitions and a prediction mode for each of the coding units having a tree structure, and the inverse transformer 540 have to determine a size of a transformation unit for each coding unit.

The encoding operation of FIG. 18 and the decoding operation of FIG. 19 are described as a video stream encoding operation and a video stream decoding operation, respectively, in a single layer. Therefore, if the scalable video encoding apparatus 10 of FIG. 1 encodes a video stream having at least two layers, the base layer encoder 11 may include the image encoder 400 for each of layers. Similarly, if the scalable video decoding apparatus 20 of FIG. 2 decodes a video stream having at least two layers, the enhancement layer decoder 23 may include the image decoder 500 for each of layers.

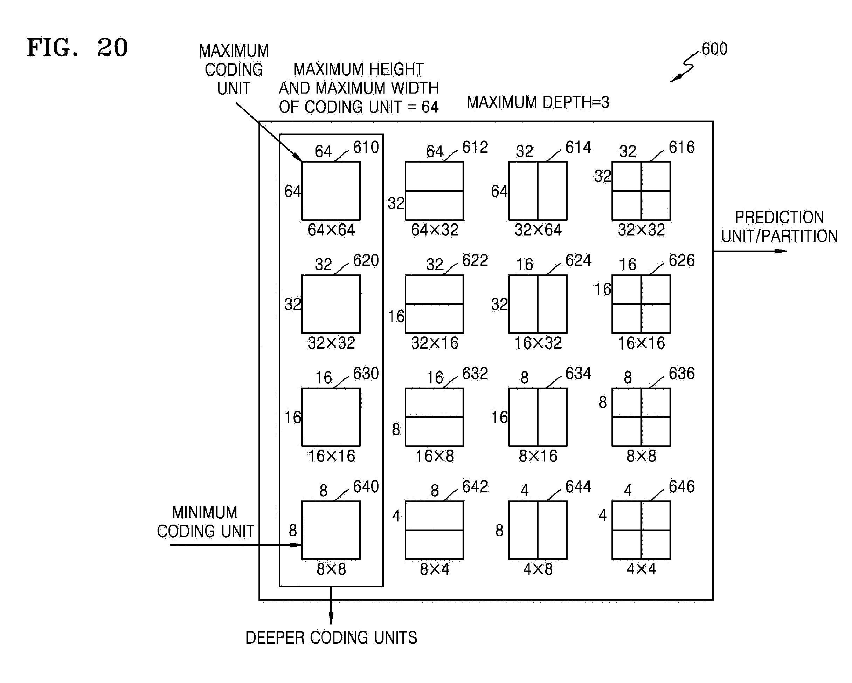

FIG. 20 is a diagram illustrating deeper coding units according to depths, and partitions, according to an exemplary embodiment.

The video encoding apparatus 100 and the video decoding apparatus 200 use hierarchical coding units so as to consider characteristics of an image. A maximum height, a maximum width, and a maximum depth of coding units may be adaptively determined according to the characteristics of the image, or may be differently set by a user. Sizes of deeper coding units according to depths may be determined according to the predetermined maximum size of the coding unit.

In a hierarchical structure 600 of coding units, according to an exemplary embodiment, the maximum height and the maximum width of the coding units are each 64, and the maximum depth is 3. In this case, the maximum depth refers to a total number of times the coding unit is split from the maximum coding unit to the minimum coding unit. Since a depth deepens along a vertical axis of the hierarchical structure 600, a height and a width of the deeper coding unit are each split. Also, a prediction unit and partitions, which are bases for prediction encoding of each deeper coding unit, are shown along a horizontal axis of the hierarchical structure 600.

In other words, a coding unit 610 is a maximum coding unit in the hierarchical structure 600, wherein a depth is 0 and a size, i.e., a height by width, is 64x64. The depth deepens along the vertical axis, and a coding unit 620 having a size of 32x32 and a depth of 1, a coding unit 630 having a size of 16x16 and a depth of 2, and a coding unit 640 having a size of 8x8 and a depth of 3. The coding unit 640 having the size of 8x8 and the depth of 3 is a minimum coding unit.

The prediction unit and the partitions of a coding unit are arranged along the horizontal axis according to each depth. In other words, if the coding unit 610 having a size of 64x64 and a depth of 0 is a prediction unit, the prediction unit may be split into partitions include in the encoder 610, i.e. a partition 610 having a size of 64x64, partitions 612 having the size of 64x32, partitions 614 having the size of 32x64, or partitions 616 having the size of 32x32.

Similarly, a prediction unit of the coding unit 620 having the size of 32x32 and the depth of 1 may be split into partitions included in the coding unit 620, i.e. a partition 620 having a size of 32x32, partitions 622 having a size of 32x16, partitions 624 having a size of 16x32, and partitions 626 having a size of 16x16.

Similarly, a prediction unit of the coding unit 630 having the size of 16x16 and the depth of 2 may be split into partitions included in the coding unit 630, i.e. a partition having a size of 16x16 included in the coding unit 630, partitions 632 having a size of 16x8, partitions 634 having a size of 8x16, and partitions 636 having a size of 8x8.

Similarly, a prediction unit of the coding unit 640 having the size of 8x8 and the depth of 3 may be split into partitions included in the coding unit 640, i.e. a partition having a size of 8x8 included in the coding unit 640, partitions 642 having a size of 8x4, partitions 644 having a size of 4x8, and partitions 646 having a size of 4x4.

In order to determine the at least one coded depth of the coding units constituting the maximum coding unit 610, the coding unit determiner 120 of the video encoding apparatus 100 performs encoding for coding units corresponding to each depth included in the maximum coding unit 610.

The number of deeper coding units according to depths including data in the same range and the same size increases as the depth deepens. For example, four coding units corresponding to a depth of 2 are required to cover data that is included in one coding unit corresponding to a depth of 1. Accordingly, in order to compare encoding results of the same data according to depths, the coding unit corresponding to the depth of 1 and four coding units corresponding to the depth of 2 are each encoded.

In order to perform encoding for a current depth from among the depths, a least encoding error that is a representative encoding error may be selected for the current depth by performing encoding for each prediction unit in the coding units corresponding to the current depth, along the horizontal axis of the hierarchical structure 600. Alternatively, the minimum encoding error may be searched for by comparing representative encoding errors according to depths, by performing encoding for each depth as the depth deepens along the vertical axis of the hierarchical structure 600. A depth and a partition having the minimum encoding error in the coding unit 610 may be selected as the coded depth and a partition type of the coding unit 610.

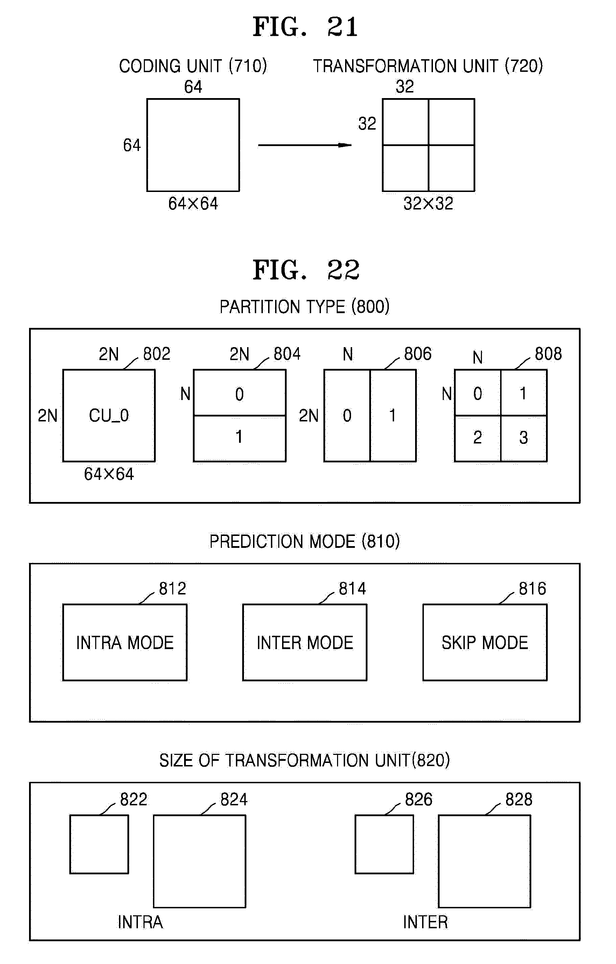

FIG. 21 is a diagram for describing a relationship between a coding unit 710 and transformation units 720, according to an exemplary embodiment.

The video encoding apparatus 100 or the video decoding apparatus 200 encodes or decodes an image according to coding units having sizes smaller than or equal to a maximum coding unit for each maximum coding unit. Sizes of transformation units for transformation during encoding may be selected based on data units that are not larger than a corresponding coding unit.

For example, in the video encoding apparatus 100 or the video decoding apparatus 200, if a size of the coding unit 710 is 64x64, transformation may be performed by using the transformation units 720 having a size of 32x32.

Also, data of the coding unit 710 having the size of 64x64 may be encoded by performing the transformation on each of the transformation units having the size of 32x32, 16x16, 8x8, and 4x4, which are smaller than 64x64, and then a transformation unit having the least coding error with respect to an original image may be selected.

FIG. 22 illustrates a plurality of pieces of encoding information according to depths, according to an exemplary embodiment.

The output unit 130 of the video encoding apparatus 100 may encode and transmit partition type information 800, prediction mode information 810, and transformation unit size information 820 for each coding unit corresponding to a coded depth, as information about an encoding mode.

The partition type information 800 indicates information about a shape of a partition obtained by splitting a prediction unit of a current coding unit, wherein the partition is a data unit for prediction encoding the current coding unit. For example, a current coding unit CU_0 having a size of 2Nx2N may be split into any one of a partition 802 having a size of 2Nx2N, a partition 804 having a size of 2NxN, a partition 806 having a size of Nx2N, and a partition 808 having a size of NxN. Here, the partition type information 800 is set to indicate one of the partition 804 having a size of 2NxN, the partition 806 having a size of Nx2N, and the partition 808 having a size of NxN.

The prediction mode information 810 indicates a prediction mode of each partition. For example, the prediction mode information 810 may indicate a mode of prediction encoding performed on a partition indicated by the partition type information 800, i.e., an intra mode 812, an inter mode 814, or a skip mode 816.

The transformation unit size information 820 indicates a transformation unit to be based on when transformation is performed on a current coding unit. For example, the transformation unit may be a first intra transformation unit 822, a second intra transformation unit 824, a first inter transformation unit 826, or a second inter transformation unit 828.

The image data and encoding information extractor 220 of the video decoding apparatus 200 may extract and use the partition type information 800, the prediction mode information 810, and the transformation unit size information 820 for decoding, according to each deeper coding unit.

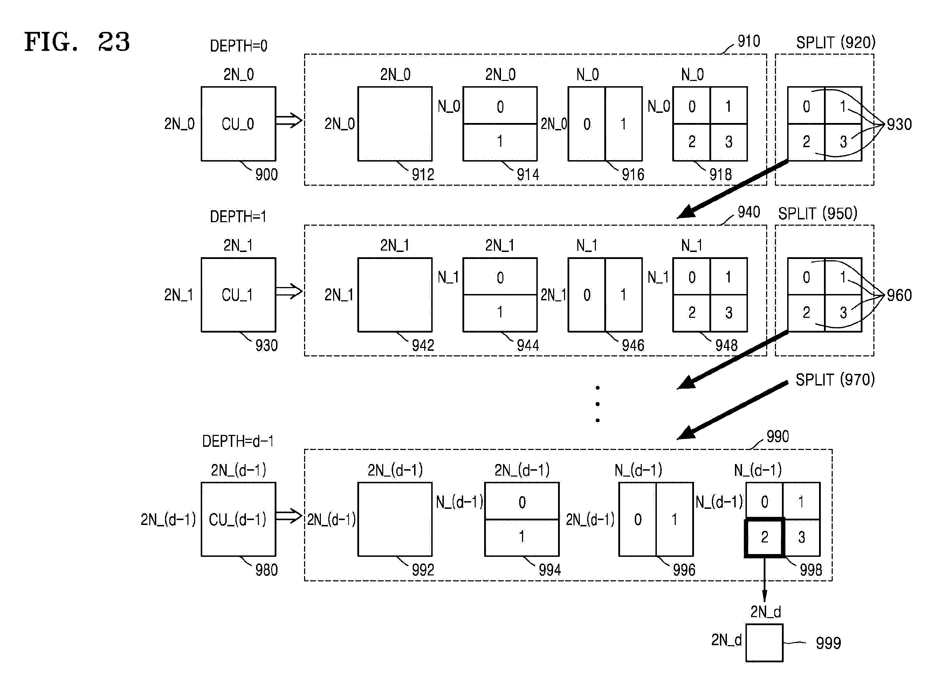

FIG. 23 is a diagram of deeper coding units according to depths, according to an exemplary embodiment.

Split information may be used to indicate a change of a depth. The spilt information indicates whether a coding unit of a current depth is split into coding units of a lower depth.

A prediction unit 910 for prediction encoding a coding unit 900 having a depth of 0 and a size of 2N_0x2N_0 may include partitions of a partition type 912 having a size of 2N_0x2N_0, a partition type 914 having a size of 2N_0xN_0, a partition type 916 having a size of N_0x2N_0, and a partition type 918 having a size of N_0xN_0. FIG. 23 only illustrates the partition types 912 through 918 which are obtained by symmetrically splitting the prediction unit 910, but a partition type is not limited thereto, and the partitions of the prediction unit 910 may include asymmetrical partitions, partitions having a predetermined shape, and partitions having a geometrical shape.

Prediction encoding is repeatedly performed on one partition having a size of 2N_0x2N_0, two partitions having a size of 2N_0xN_0, two partitions having a size of N_0x2N_0, and four partitions having a size of N_0xN_0, according to each partition type. The prediction encoding in an intra mode and an inter mode may be performed on the partitions having the sizes of 2N_0x2N_0, N_0x2N_0, 2N_0xN_0, and N_0xN_0. The prediction encoding in a skip mode is performed only on the partition having the size of 2N_0x2N_0.

If an encoding error is smallest in one of the partition types 912, 914, and 916 having the sizes of 2N_0x2N_0, 2N_0xN_0 and N_0x2N_0, the prediction unit 910 may not be split into a lower depth.

If the encoding error is the smallest in the partition type 918 having the size of N_0xN_0, a depth is changed from 0 to 1 to split the partition type 918 in operation 920, and encoding is repeatedly performed on coding units 930 having a depth of 2 and a size of N_0xN_0 to search for a minimum encoding error.

A prediction unit 940 for prediction encoding the coding unit 930 having a depth of 1 and a size of 2N_1x2N_1 (=N_0xN_0) may include partitions of a partition type 942 having a size of 2N_1x2N_1, a partition type 944 having a size of 2N_1xN_1, a partition type 946 having a size of N_1x2N_1, and a partition type 948 having a size of N_1xN_1.

If an encoding error is the smallest in the partition type 948 having the size of N_1xN_1, a depth is changed from 1 to 2 to split the partition type 948 in operation 950, and encoding is repeatedly performed on coding units 960, which have a depth of 2 and a size of N_2xN_2 to search for a minimum encoding error.

When a maximum depth is d, split operation according to each depth may be performed up to when a depth becomes d-1, and split information may be encoded as up to when a depth is one of 0 to d-2. In other words, when encoding is performed up to when the depth is d-1 after a coding unit corresponding to a depth of d-2 is split in operation 970, a prediction unit 990 for prediction encoding a coding unit 980 having a depth of d-1 and a size of 2N_(d)x2N_(d-1) may include partitions of a partition type 992 having a size of 2N_(d)x2N_(d-1), a partition type 994 having a size of 2N_(d)xN_(d-1), a partition type 996 having a size of N_(d-1)x2N_(d-1), and a partition type 998 having a size of N_(d-1)xN_(d-1).

Prediction encoding may be repeatedly performed on one partition having a size of 2N_(d-1)x2N_(d-1), two partitions having a size of 2N_(d)xN_(d-1), two partitions having a size of N_(d-1)x2N_(d-1), four partitions having a size of N_(d-1)xN_(d-1) from among the partition types 992 through 998 to search for a partition type having a minimum encoding error.

Even when the partition type 998 having the size of N_(d-1)xN_(d-1) has the minimum encoding error, since a maximum depth is d, a coding unit CU_(d-1) having a depth of d-1 is no longer split into a lower depth, and a coded depth for the coding units constituting a current maximum coding unit 900 is determined to be d-1 and a partition type of the current maximum coding unit 900 may be determined to be N_(d-1)xN_(d-1). Also, since the maximum depth is d, split information for the minimum coding unit 980 is not set.

A data unit 999 may be a 'minimum unit' for the current maximum coding unit. A minimum unit according to the present embodiment may be a square data unit obtained by splitting a minimum coding unit 980 having a lowermost coded depth by 4. By performing the encoding repeatedly, the video encoding apparatus 100 according to the present exemplary embodiment may select a depth having the least encoding error by comparing encoding errors according to depths of the coding unit 900 to determine a coded depth, and set a corresponding partition type and a prediction mode as an encoding mode of the coded depth.

As such, the minimum encoding errors according to depths are compared in all of the depths of 0, 1, ..., d-1, d, and a depth having the least encoding error may be determined as a coded depth. The coded depth, the partition type of the prediction unit, and the prediction mode may be encoded and transmitted as information about an encoding mode. Also, since a coding unit is split from a depth of 0 to a coded depth, only split information of the coded depth is set to '0', and split information of depths excluding the coded depth is set to '1'.

The image data and encoding information extractor 220 of the video decoding apparatus 200 according to the present exemplary embodiment may extract and use the information about the coded depth and the prediction unit of the coding unit 900 to decode the partition 912. The video decoding apparatus 200 according to the present exemplary embodiment may determine a depth, in which split information is '0', as a coded depth by using split information according to depths, and use information about an encoding mode of the corresponding depth for decoding.

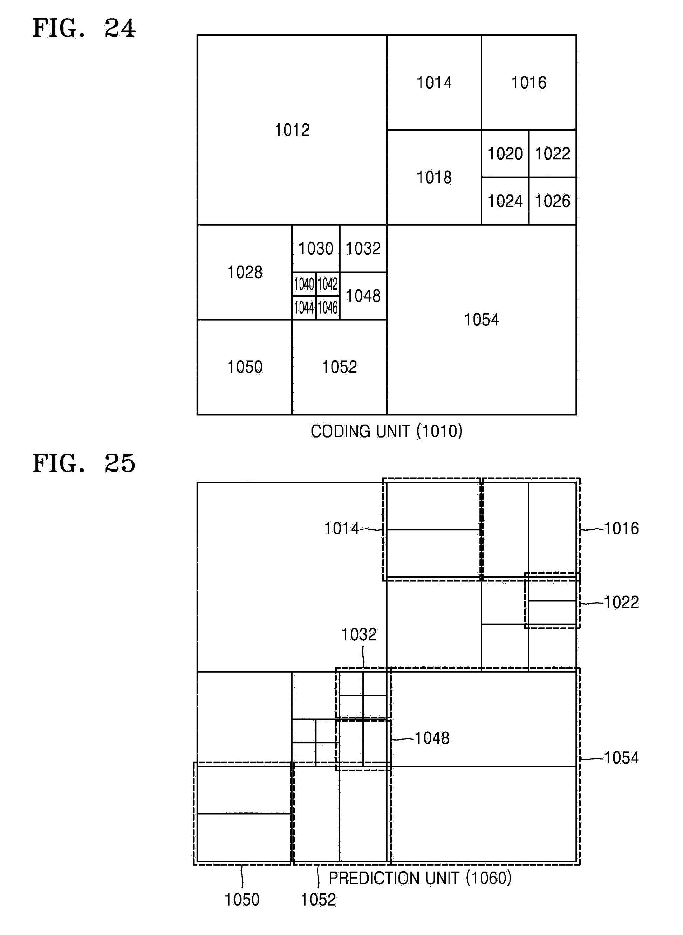

FIGS. 24, 25, and 26 are diagrams for describing a relationship between coding units, prediction units, and transformation units, according to exemplary embodiments.

Coding units 1010 are deeper coding units according to depths determined by the video encoding apparatus 100, in a maximum coding unit. Prediction units 1060 are partitions of prediction units of each of the coding units 1010, and transformation units 1070 are transformation units of each of the coding units 1010.

When a depth of a maximum coding unit is 0 in the coding units 1010, depths of coding units 1012 and 1054 are 1, depths of coding units 1014, 1016, 1018, 1028, 1050, and 1052 are 2, depths of coding units 1020, 1022, 1024, 1026, 1030, 1032, and 1048 are 3, and depths of coding units 1040, 1042, 1044, and 1046 are 4.

In the prediction units 1060, some encoders 1014, 1016, 1022, 1032, 1048, 1050, 1052, and 1054 are obtained by splitting the coding units in the encoders 1010. That is, partition types in the coding units 1014, 1022, 1050, and 1054 have a size of 2NxN, partition types in the coding units 1016, 1048, and 1052 have a size of Nx2N, and a partition type of the coding unit 1032 has a size of NxN. Prediction units and partitions of the coding units 1010 are smaller than or equal to each coding unit.

Transformation or inverse transformation is performed on image data of the coding unit 1052 in the transformation units 1070 in a data unit that is smaller than the coding unit 1052. Also, the coding units 1014, 1016, 1022, 1032, 1048, 1050, and 1052 in the transformation units 1070 are different from those in the prediction units 1060 in terms of sizes and shapes. In other words, the video encoding apparatus 100 and the video decoding apparatus 200 according to the exemplary embodiments may perform intra prediction / motion estimation / motion compensation / and transformation/inverse transformation individually on a data unit in the same coding unit.

Accordingly, encoding is recursively performed on each of coding units having a hierarchical structure in each region of a maximum coding unit to determine an optimum coding unit, and thus coding units having a recursive tree structure may be obtained. Encoding information may include split information about a coding unit, information about a partition type, information about a prediction mode, and information about a size of a transformation unit. Table 1 below shows the encoding information that may be set by the video encoding apparatus 100 and the video decoding apparatus 200 according to the exemplary embodiments.

[Table 1]

| Split Information 0 (Encoding on Coding Unit having Size of 2Nx2N and Current Depth of d) | | | | | Split Information 1 |
|---|---|---|---|---|---|
| Prediction Mode | Partition Type | | Size of Transformation Unit | | Repeatedly Encode Coding Units having Lower Depth of d+1 |
| Intra Inter Skip (Only 2Nx2N) | Symmetrical Partition Type | Asymmetrical Partition Type | Split Information 0 of Transformation Unit | Split Information 1 of Transformation Unit | |
| | 2Nx2N 2NxN Nx2N NxN | 2NxnU 2NxnD nLx2N nRx2N | 2Nx2N | NxN (Symmetrical Partition Type) N/2xN/2 (Asymmetrical Partition Type) | |

The output unit 130 of the video encoding apparatus 100 according to the exemplary embodiment may output the encoding information about the coding units having a tree structure, and the image data and encoding information extractor 220 of the video decoding apparatus 200 according to the exemplary embodiment may extract the encoding information about the coding units having a tree structure from a received bitstream.

Split information indicates whether a current coding unit is split into coding units of a lower depth. If split information of a current depth d is 0, a depth, in which a current coding unit is no longer split into a lower depth, is a coded depth, and thus information about a partition type, prediction mode, and a size of a transformation unit may be defined for the coded depth. If the current coding unit is further split according to the split information, encoding is independently performed on four split coding units of a lower depth.

A prediction mode may be one of an intra mode, an inter mode, and a skip mode. The intra mode and the inter mode may be defined in all partition types, and the skip mode is defined only in a partition type having a size of 2Nx2N.

The information about the partition type may indicate symmetrical partition types having sizes of 2Nx2N, 2NxN, Nx2N, and NxN, which are obtained by symmetrically splitting a height or a width of a prediction unit, and asymmetrical partition types having sizes of 2NxnU, 2NxnD, nLx2N, and nRx2N, which are obtained by asymmetrically splitting the height or width of the prediction unit. The asymmetrical partition types having the sizes of 2NxnU and 2NxnD may be respectively obtained by splitting the height of the prediction unit in 1:3 and 3:1, and the asymmetrical partition types having the sizes of nLx2N and nRx2N may be respectively obtained by splitting the width of the prediction unit in 1:3 and 3:1.

The size of the transformation unit may be set to be two types in the intra mode and two types in the inter mode. In other words, if split information of the transformation unit is 0, the size of the transformation unit may be 2Nx2N, which is the size of the current coding unit. If split information of the transformation unit is 1, the transformation units may be obtained by splitting the current coding unit. Also, if a partition type of the current coding unit having the size of 2Nx2N is a symmetrical partition type, a size of a transformation unit may be NxN, and if the partition type of the current coding unit is an asymmetrical partition type, the size of the transformation unit may be N/2xN/2.

The encoding information about coding units having a tree structure according to the exemplary embodiment may be assigned to at least one of a coding unit corresponding to a coded depth, a prediction unit, and a minimum unit. The coding unit corresponding to the coded depth may include at least one of a prediction unit and a minimum unit containing the same encoding information.

Accordingly, it is determined whether adjacent data units are included in the same coding unit corresponding to the coded depth by comparing encoding information of the adjacent data units. Also, a corresponding coding unit corresponding to a coded depth is determined by using encoding information of a data unit, and thus a distribution of coded depths in a maximum coding unit may be determined.

Accordingly, if a current coding unit is predicted based on encoding information of adjacent data units, encoding information of data units in deeper coding units adjacent to the current coding unit may be directly referred to and used.

In another exemplary embodiment, if a current coding unit is predicted based on encoding information of adjacent data units, data units adjacent to the current coding unit are searched using encoded information of the data units, and the searched adjacent coding units may be referred for predicting the current coding unit.

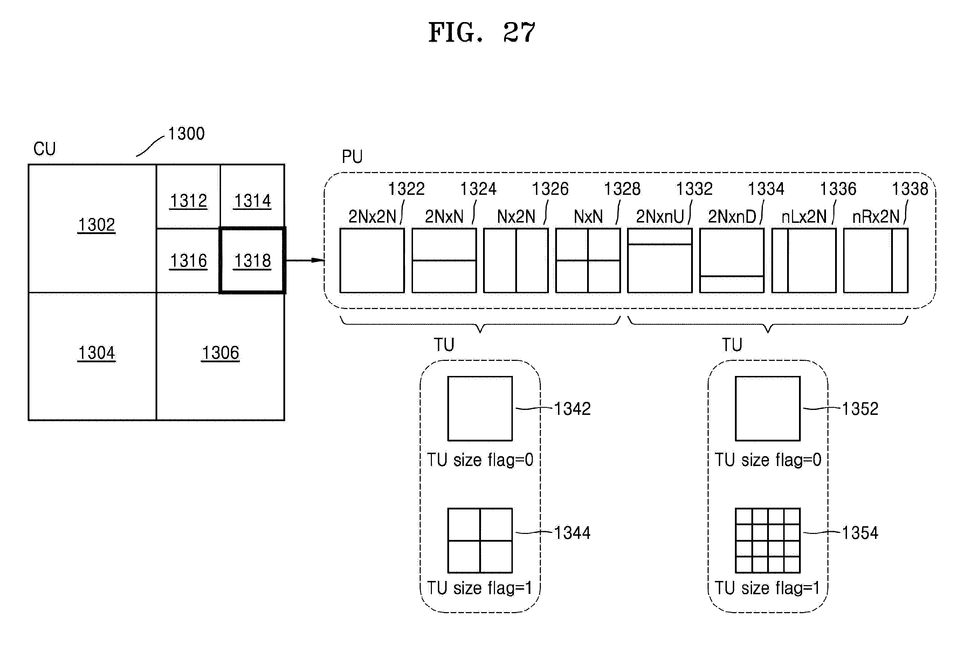

FIG. 27 is a diagram for describing a relationship between a coding unit, a prediction unit, and a transformation unit, according to encoding mode information of Table 1.

A maximum coding unit 1300 includes coding units 1302, 1304, 1306, 1312, 1314, 1316, and 1318 of coded depths. Here, since the coding unit 1318 is a coding unit of a coded depth, split information may be set to 0. Information about a partition type of the coding unit 1318 having a size of 2Nx2N may be set to be one of partition types including 2Nx2N 1322, 2NxN 1324, Nx2N 1326, NxN 1328, 2NxnU 1332, 2NxnD 1334, nLx2N 1336, and nRx2N 1338.

Transformation unit split information (TU size flag) is a type of a transformation index. A size of a transformation unit corresponding to the transformation index may be changed according to a prediction unit type or partition type of the coding unit.

For example, when the information about the partition type is set to be one of symmetrical partition types 2Nx2N 1322, 2NxN 1324, Nx2N 1326, and NxN 1328, if the transformation unit split information is 0, a transformation unit 1342 having a size of 2Nx2N is set, and if the transformation unit split information is 1, a transformation unit 1344 having a size of NxN is set.

When the information about the partition type is set to be one of asymmetrical partition types 2NxnU 1332, 2NxnD 1334, nLx2N 1336, and nRx2N 1338, if the transformation unit split information is 0, a transformation unit 1352 having a size of 2Nx2N may be set, and if the transformation unit split information is 1, a transformation unit 1354 having a size of N/2xN/2 may be set.

As described above with reference to FIG. 27, the transformation unit split information (TU size flag) is a flag having a value or 0 or 1, but the transformation unit split information is not limited to a flag having 1 bit, and the transformation unit may be hierarchically split while the transformation unit split information increases in a manner of 0, 1, 2, 3.. etc., according to setting. The transformation unit split information may be an example of the transformation index.

In this case, the size of a transformation unit that has been actually used may be expressed by using the transformation unit split information according to the embodiment, together with a maximum size of the transformation unit and a minimum size of the transformation unit. The video encoding apparatus 100 according to the exemplary embodiment is capable of encoding maximum transformation unit size information, minimum transformation unit size information, and maximum transformation unit split information. The result of encoding the maximum transformation unit size information, the minimum transformation unit size information, and the maximum transformation unit split information may be inserted into an SPS. The video decoding apparatus 200 according to the exemplary embodiment may decode video by using the maximum transformation unit size information, the minimum transformation unit size information, and the maximum transformation unit split information.

For example, (a) if the size of a current coding unit is 64x64 and a maximum transformation unit size is 32x32, (a-1) then the size of a transformation unit may be 32x32 when a TU size flag is 0, (a-2) may be 16x16 when the TU size flag is 1, and (a-3) may be 8x8 when the TU size flag is 2.

As another example, (b) if the size of the current coding unit is 32x32 and a minimum transformation unit size is 32x32, (b-1) then the size of the transformation unit may be 32x32 when the TU size flag is 0. Here, the TU size flag cannot be set to a value other than 0, since the size of the transformation unit cannot be less than 32x32.

As another example, (c) if the size of the current coding unit is 64x64 and a maximum TU size flag is 1, then the TU size flag may be 0 or 1. Here, the TU size flag cannot be set to a value other than 0 or 1.

Thus, if it is defined that the maximum TU size flag is 'MaxTransformSizeIndex', a minimum transformation unit size is 'MinTransformSize', and a transformation unit size is 'RootTuSize' when the TU size flag is 0, then a current minimum transformation unit size 'CurrMinTuSize' that can be determined in a current coding unit may be defined by Equation (1):

[00405]  $\text{CurrMinTuSize}$

$$= \max \left( \text{MinTransformSize}, \text{RootTuSize}/(2^{\wedge}\text{MaxTransformSizeIndex}) \right) \dots (1)$$

Compared to the current minimum transformation unit size 'CurrMinTuSize' that can be determined in the current coding unit, a transformation unit size 'RootTuSize' when the TU size flag is 0 may denote a maximum transformation unit size that can be selected in the system. That is, in Equation (1), 'RootTuSize/(2^MaxTransformSizeIndex)' denotes a transformation unit size when the transformation unit size 'RootTuSize', when the TU size flag is 0, is split by the number of times corresponding to the maximum TU size flag, and 'MinTransformSize' denotes a minimum transformation size. Thus, a smaller value from among 'RootTuSize/(2^MaxTransformSizeIndex)' and 'MinTransformSize' may be the current minimum transformation unit size 'CurrMinTuSize' that can be determined in the current coding unit.

According to an exemplary embodiment, the maximum transformation unit size RootTuSize may vary according to the type of a prediction mode.

For example, if a current prediction mode is an inter mode, then 'RootTuSize' may be determined by using Equation (2) below. In Equation (2), 'MaxTransformSize' denotes a maximum transformation unit size, and 'PUSize' denotes a current prediction unit size.

$$RootTuSize = min(MaxTransformSize, PUSize) \quad......... (2)$$

That is, if the current prediction mode is the inter mode, the transformation unit size 'RootTuSize', when the TU size flag is 0, may be a smaller value from among the maximum transformation unit size and the current prediction unit size.

If a prediction mode of a current partition unit is an intra mode, 'RootTuSize' may be determined by using Equation (3) below. In Equation (3), 'PartitionSize' denotes the size of the current partition unit.

$$RootTuSize = min(MaxTransformSize, PartitionSize) \quad...........(3)$$

That is, if the current prediction mode is the intra mode, the transformation unit size 'RootTuSize' when the TU size flag is 0 may be a smaller value from among the maximum transformation unit size and the size of the current partition unit.

However, the current maximum transformation unit size 'RootTuSize' that varies according to the type of a prediction mode in a partition unit is just an exemplary embodiment, and a factor for determining the current maximum transformation unit size is not limited thereto.

According to the video encoding method based on coding units of a tree structure described above with reference to FIGS. 15 through 27, image data in a spatial domain is encoded in each of the coding units of the tree structure, and the image data in the spatial domain is reconstructed in a manner that decoding is performed on each maximum coding unit according to the video decoding method based on the coding units of the tree structure, so that a video that is formed of pictures and pictures sequences may be reconstructed. The reconstructed video may be reproduced by a reproducing apparatus, may be stored in a storage medium, or may be transmitted via a network.

The one or more exemplary embodiments can be written as computer programs and can be implemented in general-use digital computers that execute the programs using a computer readable recording medium. Examples of the computer readable recording medium include magnetic storage media (e.g., ROM, floppy disks, hard disks, etc.), optical recording media (e.g., CD-ROMs, or DVDs), etc.

For convenience of description, the scalable video encoding methods and/or the video encoding method, which are described with reference to FIGS. 1 through 27, will be collectively referred to as 'the video encoding method'. Also, the scalable video decoding methods and/or the video decoding method, which are described with reference to FIGS. 1 through 27, will be collectively referred to as 'the video decoding method'.

Also, a video encoding apparatus including the scalable video encoding apparatus 10, the video encoding apparatus 100, or the image encoder 400, which is described with reference to FIGS. 1 through 27, will be collectively referred as a 'video encoding apparatus'. Also, a video decoding apparatus including the scalable video decoding apparatus 20, the video decoding apparatus 200, or the image decoder 500, which is described with reference to FIGS. 1 through 27, will be referred to as a 'video decoding apparatus'.

A computer-readable recording medium storing a program, e.g., a disc 26000, according to an exemplary embodiment will now be described in detail.

FIG. 28 is a diagram of a physical structure of the disc 26000 in which a program is stored, according to an exemplary embodiment. The disc 26000, which is a storage medium, may be a hard drive, a compact disc-read only memory (CD-ROM) disc, a Blu-ray disc, or a digital versatile disc (DVD). The disc 26000 includes a plurality of concentric tracks Tr that are each divided into a specific number of sectors Se in a circumferential direction of the disc 26000. In a specific region of the disc 26000, a program that executes the quantized parameter determining method, the video encoding method, and the video decoding method described above may be assigned and stored.

A computer system embodied using a storage medium that stores a program for executing the video encoding method and the video decoding method as described above will now be described with reference to FIG. 29.

FIG. 29 is a diagram of a disc drive 26800 for recording and reading a program by using the disc 26000. A computer system 26700 may store a program that executes at least one of a video encoding method and a video decoding method according to an exemplary embodiment, in the disc 26000 via the disc drive 26800. To run the program stored in the disc 26000 in the computer system 26700, the program may be read from the disc 26000 and be transmitted to the computer system 26700 by using the disc drive 26800.

The program that executes at least one of a video encoding method and a video decoding method according to an exemplary embodiment may be stored not only in the disc 26000 illustrated in FIGS. 28 and 29 but also may be stored in a memory card, a ROM cassette, or a solid state drive (SSD).

A system to which the video encoding method and the video decoding method described above are applied will be described below.

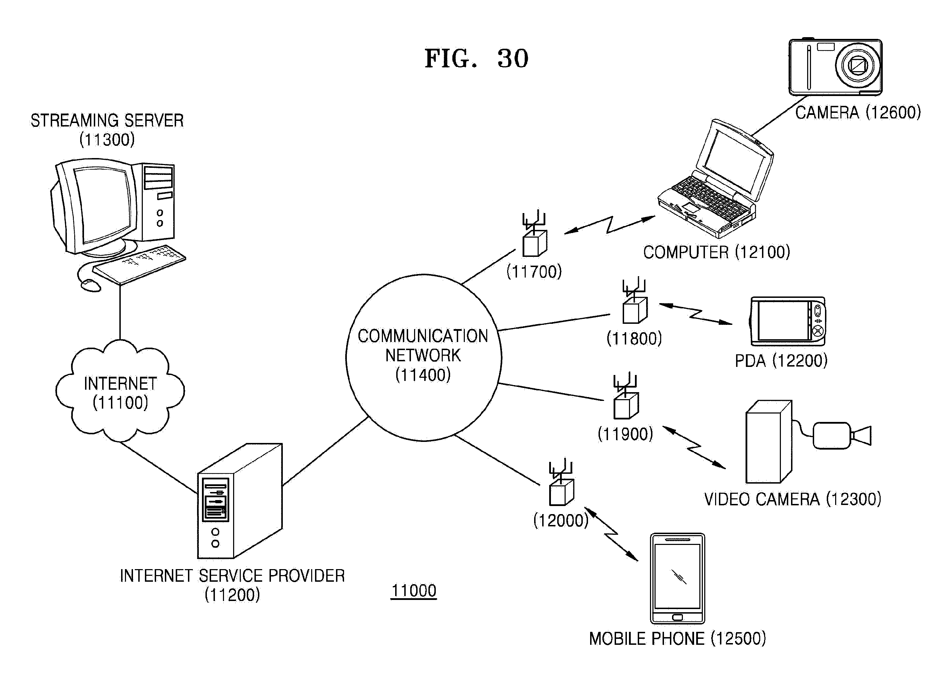

FIG. 30 is a diagram of an overall structure of a content supply system 11000 for providing a content distribution service. A service area of a communication system is divided into predetermined-sized cells, and wireless base stations 11700, 11800, 11900, and 12000 are installed in these cells, respectively.

The content supply system 11000 includes a plurality of independent devices. For example, the plurality of independent devices, such as a computer 12100, a personal digital assistant (PDA) 12200, a video camera 12300, and a mobile phone 12500, are connected to the Internet 11100 via an internet service provider 11200, a communication network 11400, and the wireless base stations 11700, 11800, 11900, and 12000.

However, the content supply system 11000 is not limited to as illustrated in FIG. 30, and devices may be selectively connected thereto. The plurality of independent devices may be directly connected to the communication network 11400, not via the wireless base stations 11700, 11800, 11900, and 12000.

The video camera 12300 is an imaging device, e.g., a digital video camera, which is capable of capturing video images. The mobile phone 12500 may employ at least one communication method from among various protocols, e.g., Personal Digital Communications (PDC), Code Division Multiple Access (CDMA), Wideband-Code Division Multiple Access (W-CDMA), Global System for Mobile Communications (GSM), and Personal Handyphone System (PHS).

The video camera 12300 may be connected to a streaming server 11300 via the wireless base station 11900 and the communication network 11400. The streaming server 11300 allows content received from a user via the video camera 12300 to be streamed via a real-time broadcast. The content received from the video camera 12300 may be encoded using the video camera 12300 or the streaming server 11300. Video data captured by the video camera 12300 may be transmitted to the streaming server 11300 via the computer 12100.

Video data captured by a camera 12600 may also be transmitted to the streaming server 11300 via the computer 12100. The camera 12600 is an imaging device capable of capturing both still images and video images, similar to a digital camera. The video data captured by the camera 12600 may be encoded using the camera 12600 or the computer 12100. Software that performs encoding and decoding video may be stored in a computer-readable recording medium, e.g., a CD-ROM disc, a floppy disc, a hard disc drive, an SSD, or a memory card, which may be accessible by the computer 12100.

If video data is captured by a camera built in the mobile phone 12500, the video data may be received from the mobile phone 12500.

The video data may also be encoded by a large scale integrated circuit (LSI) system installed in the video camera 12300, the mobile phone 12500, or the camera 12600.

The content supply system 11000 may encode content data recorded by a user using the video camera 12300, the camera 12600, the mobile phone 12500, or another imaging device, e.g., content recorded during a concert, and transmit the encoded content data to the streaming server 11300. The streaming server 11300 may transmit the encoded content data in a type of a streaming content to other clients that request the content data.

The clients are devices capable of decoding the encoded content data, e.g., the computer 12100, the PDA 12200, the video camera 12300, or the mobile phone 12500. Thus, the content supply system 11000 allows the clients to receive and reproduce the encoded content data. Also, the content supply system 11000 allows the clients to receive the encoded content data and decode and reproduce the encoded content data in real time, thereby enabling personal broadcasting.

Encoding and decoding operations of the plurality of independent devices included in the content supply system 11000 may be similar to those of a video encoding apparatus and a video decoding apparatus according to exemplary embodiments.

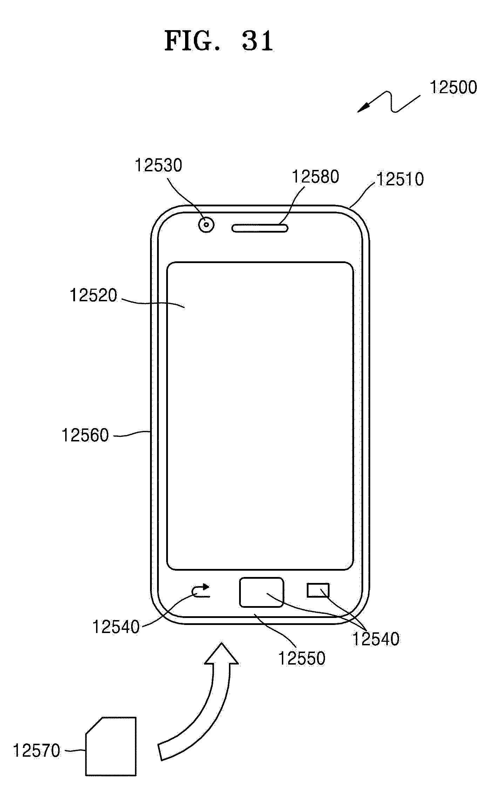

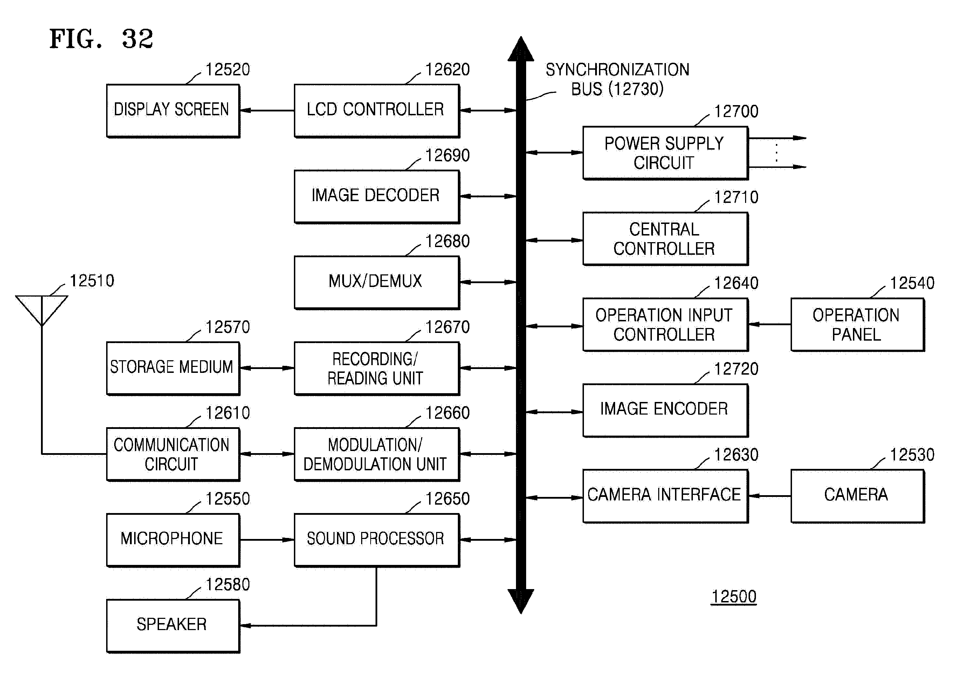

With reference to FIGS. 31 and 32, the mobile phone 12500 included in the content supply system 11000 according to an exemplary embodiment will now be described in detail.

FIG. 31 illustrates an external structure of the mobile phone 12500 to which a video encoding method and a video decoding method are applied, according to an exemplary embodiment. The mobile phone 12500 may be a smart phone, the functions of which are not limited and a large number of the functions of which may be changed or expanded.

The mobile phone 12500 includes an internal antenna 12510 via which a radio-frequency (RF) signal may be exchanged with the wireless base station 12000, and includes a display screen 12520 for displaying images captured by a camera 12530 or images that are received via the antenna 12510 and decoded, e.g., a liquid crystal display (LCD) or an organic light-emitting diode (OLED) screen. The mobile phone 12500 includes an operation panel 12540 including a control button and a touch panel. If the display screen 12520 is a touch screen, the operation panel 12540 further includes a touch sensing panel of the display screen 12520. The mobile phone 12500 includes a speaker 12580 for outputting voice and sound or another type of a sound output unit, and a microphone 12550 for inputting voice and sound or another type of a sound input unit. The mobile phone 12500 further includes the camera 12530, such as a charge-coupled device (CCD) camera, to capture video and still images. The mobile phone 12500 may further include a storage medium 12570 for storing encoded/decoded data, e.g., video or still images captured by the camera 12530, received via email, or obtained according to various ways; and a slot 12560 via which the storage medium 12570 is loaded into the mobile phone 12500. The storage medium 12570 may be a flash memory, e.g., a secure digital (SD) card or an electrically erasable and programmable read only memory (EEPROM) included in a plastic case.

FIG. 32 illustrates an internal structure of the mobile phone 12500. In order to systemically control parts of the mobile phone 12500 including the display screen 12520 and the operation panel 12540, a power supply circuit 12700, an operation input controller 12640, an image encoder 12720, a camera interface 12630, an LCD controller 12620, an image decoder 12690, a multiplexer/demultiplexer 12680, a recording/reading unit 12670, a modulation/demodulation unit 12660, and a sound processor 12650 are connected to a central controller 12710 via a synchronization bus 12730.

If a user operates a power button and sets from a 'power off state to a 'power on' state, the power supply circuit 12700 supplies power to all the parts of the mobile phone 12500 from a battery pack, thereby setting the mobile phone 12500 to an operation mode.

The central controller 12710 includes a central processing unit (CPU), a ROM, and a RAM.

While the mobile phone 12500 transmits communication data to the outside, a digital signal is generated by the mobile phone 12500 under control of the central controller 12710. For example, the sound processor 12650 may generate a digital sound signal, the image encoder 12720 may generate a digital image signal, and text data of a message may be generated via the operation panel 12540 and the operation input controller 12640. When a digital signal is transmitted to the modulation/demodulation unit 12660 by control of the central controller 12710, the modulation/demodulation unit 12660 modulates a frequency band of the digital signal, and a communication circuit 12610 performs digital-to-analog conversion (DAC) and frequency conversion on the frequency band-modulated digital sound signal. A transmission signal output from the communication circuit 12610 may be transmitted to a voice communication base station or the wireless base station 12000 via the antenna 12510.

For example, when the mobile phone 12500 is in a conversation mode, a sound signal obtained via the microphone 12550 is transformed into a digital sound signal by the sound processor 12650, by control of the central controller 12710. The digital sound signal may be transformed into a transformation signal via the modulation/demodulation unit 12660 and the communication circuit 12610, and may be transmitted via the antenna 12510.

When a text message, e.g., email, is transmitted during a data communication mode, text data of the text message is input via the operation panel 12540 and is transmitted to the central controller 12610 via the operation input controller 12640. By control of the central controller 12610, the text data is transformed into a transmission signal via the modulation/demodulation unit 12660 and the communication circuit 12610 and is transmitted to the wireless base station 12000 via the antenna 12510.

In order to transmit image data during the data communication mode, image data captured by the camera 12530 is provided to the image encoder 12720 via the camera interface 12630. The captured image data may be directly displayed on the display screen 12520 via the camera interface 12630 and the LCD controller 12620.

A structure of the image encoder 12720 may correspond to that of the video encoding apparatus 100 described above. The image encoder 12720 may transform the image data received from the camera 12530 into compressed and encoded image data according to the aforementioned video encoding method, and then output the encoded image data to the multiplexer/demultiplexer 12680. During a recording operation of the camera 12530, a sound signal obtained by the microphone 12550 of the mobile phone 12500 may be transformed into digital sound data via the sound processor 12650, and the digital sound data may be transmitted to the multiplexer/demultiplexer 12680.

The multiplexer/demultiplexer 12680 multiplexes the encoded image data received from the image encoder 12720, together with the sound data received from the sound processor 12650. A result of multiplexing the data may be transformed into a transmission signal via the modulation/demodulation unit 12660 and the communication circuit 12610, and may then be transmitted via the antenna 12510.

While the mobile phone 12500 receives communication data from the outside, frequency recovery and ADC are performed on a signal received via the antenna 12510 to transform the signal into a digital signal. The modulation/demodulation unit 12660 modulates a frequency band of the digital signal. The frequency-band modulated digital signal is transmitted to the video decoder 12690, the sound processor 12650, or the LCD controller 12620, according to the type of the digital signal.

During the conversation mode, the mobile phone 12500 amplifies a signal received via the antenna 12510, and obtains a digital sound signal by performing frequency conversion and ADC on the amplified signal. A received digital sound signal is transformed into an analog sound signal via the modulation/demodulation unit 12660 and the sound processor 12650, and the analog sound signal is output via the speaker 12580, by control of the central controller 12710.

When during the data communication mode, data of a video file accessed at an Internet website is received, a signal received from the wireless base station 12000 via the antenna 12510 is output as multiplexed data via the modulation/demodulation unit 12660, and the multiplexed data is transmitted to the multiplexer/demultiplexer 12680.

In order to decode the multiplexed data received via the antenna 12510, the multiplexer/demultiplexer 12680 demultiplexes the multiplexed data into an encoded video data stream and an encoded audio data stream. Via the synchronization bus 12730, the encoded video data stream and the encoded audio data stream are provided to the video decoder 12690 and the sound processor 12650, respectively.

A structure of the image decoder 12690 may correspond to that of the video decoding apparatus described above. The image decoder 12690 may decode the encoded video data to obtain reconstructed video data and provide the reconstructed video data to the display screen 12520 via the LCD controller 12620, by using the aforementioned video decoding method according to the exemplary embodiment.

Thus, the data of the video file accessed at the Internet website may be displayed on the display screen 12520. At the same time, the sound processor 12650 may transform audio data into an analog sound signal, and provide the analog sound signal to the speaker 12580. Thus, audio data contained in the video file accessed at the Internet website may also be reproduced via the speaker 12580.

The mobile phone 12500 or another type of communication terminal may be a transceiving terminal including both a video encoding apparatus and a video decoding apparatus according to an exemplary embodiment, may be a transmitting terminal including only the video encoding apparatus, or may be a receiving terminal including only the video decoding apparatus.

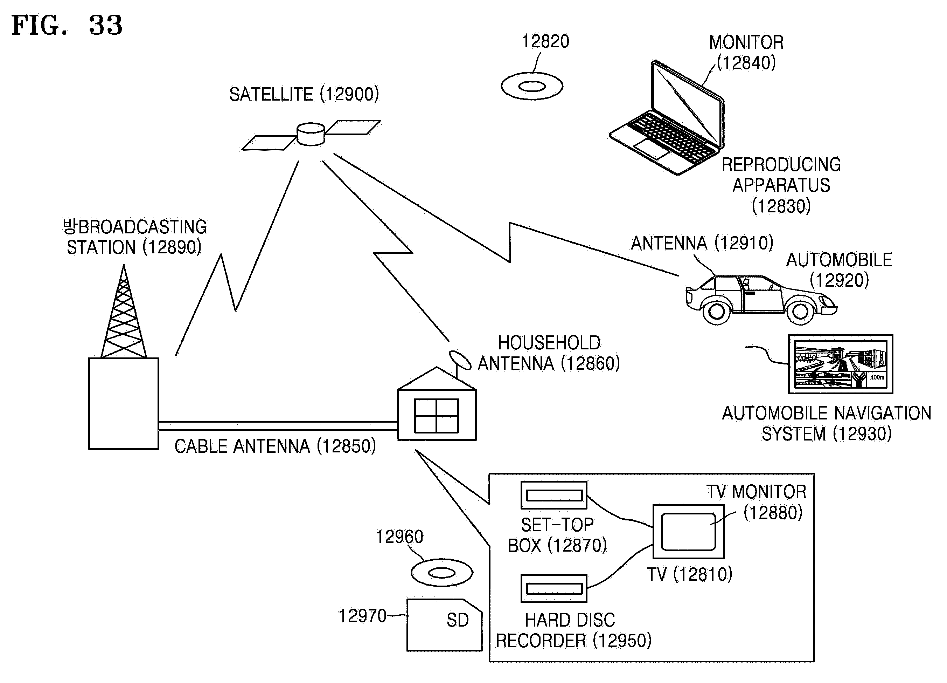

A communication system according to an exemplary embodiment is not limited to the communication system described above with reference to FIG. 30. For example, FIG. 33 illustrates a digital broadcasting system employing a communication system, according to an exemplary embodiment. The digital broadcasting system of FIG. 33 may receive a digital broadcast transmitted via a satellite or a terrestrial network by using the video encoding apparatus and the video decoding apparatus according to the exemplary embodiments.

In more detail, a broadcasting station 12890 transmits a video data stream to a communication satellite or a broadcasting satellite 12900 by using radio waves. The broadcasting satellite 12900 transmits a broadcast signal, and the broadcast signal is transmitted to a satellite broadcast receiver via a household antenna 12860. In every house, an encoded video stream may be decoded and reproduced by a TV receiver 12810, a set-top box 12870, or another device.

When the video decoding apparatus according to the exemplary embodiment is implemented in a reproducing apparatus 12830, the reproducing apparatus 12830 may parse and decode an encoded video stream recorded on a storage medium 12820, such as a disc or a memory card to reconstruct digital signals. Thus, the reconstructed video signal may be reproduced, for example, on a monitor 12840.

In the set-top box 12870 connected to the antenna 12860 for a satellite/terrestrial broadcast or a cable antenna 12850 for receiving a cable television (TV) broadcast, the video decoding apparatus according to the exemplary embodiment may be installed. Data output from the set-top box 12870 may also be reproduced on a TV monitor 12880.

As another example, the video decoding apparatus according to the exemplary embodiment may be installed in the TV receiver 12810 instead of the set-top box 12870.

An automobile 12920 that has an appropriate antenna 12910 may receive a signal transmitted from the satellite 12900 or the wireless base station 11700. A decoded video may be reproduced on a display screen of an automobile navigation system 12930 installed in the automobile 12920.

A video signal may be encoded by the video encoding apparatus according to the exemplary embodiment and may then be stored in a storage medium. In more detail, an image signal may be stored in a DVD disc 12960 by a DVD recorder or may be stored in a hard disc by a hard disc recorder 12950. As another example, the video signal may be stored in an SD card 12970. If the hard disc recorder 12950 includes the video decoding apparatus according to the exemplary embodiment, a video signal recorded on the DVD disc 12960, the SD card 12970, or another storage medium may be reproduced on the TV monitor 12880.

The automobile navigation system 12930 may not include the camera 12530, the camera interface 12630, and the image encoder 12720 of FIG. 32. For example, the computer 12100 and the TV receiver 12810 may not include the camera 12530, the camera interface 12630, and the image encoder 12720 of FIG. 32.

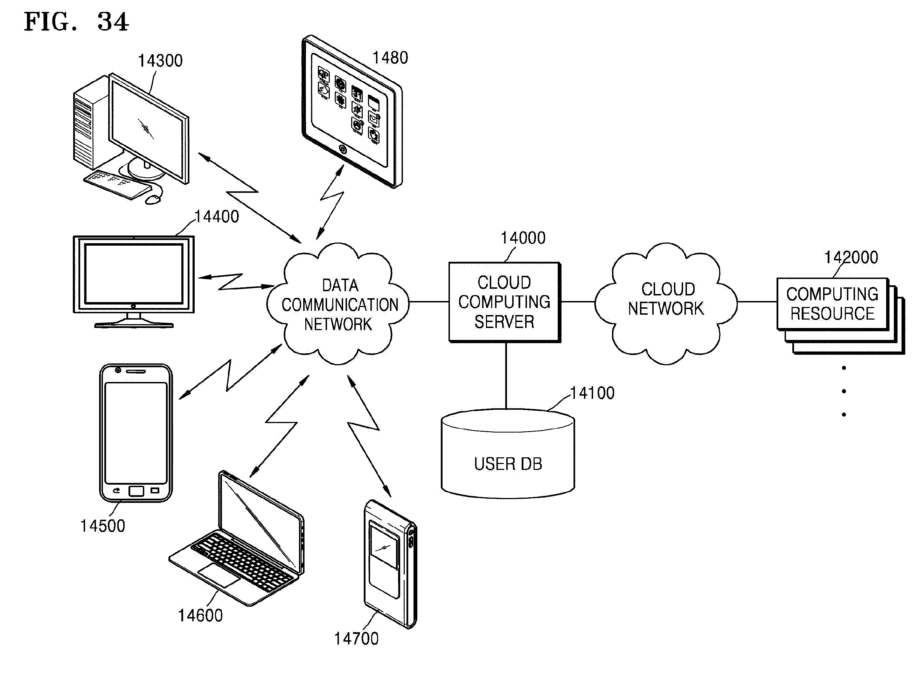

FIG. 34 is a diagram illustrating a network structure of a cloud computing system using a video encoding apparatus and a video decoding apparatus, according to an exemplary embodiment.

The cloud computing system may include a cloud computing server 14000, a user database (DB) 14100, a plurality of computing resources 14200, and a user terminal.

The cloud computing system provides an on-demand outsourcing service of the plurality of computing resources 14200 via a data communication network, e.g., the Internet, in response to a request from the user terminal. Under a cloud computing environment, a service provider provides users with desired services by combining computing resources at data centers located at physically different locations by using virtualization technology. A service user does not have to install computing resources, e.g., an application, a storage, an operating system (OS), and security software, into his/her own terminal in order to use them, but may select and use desired services from among services in a virtual space generated through the virtualization technology, at a desired point in time.

A user terminal of a specified service user is connected to the cloud computing server 14000 via a data communication network including the Internet and a mobile telecommunication network. User terminals may be provided cloud computing services, and particularly video reproduction services, from the cloud computing server 14000. The user terminals may be various types of electronic devices capable of being connected to the Internet, e.g., a desktop PC 14300, a smart TV 14400, a smart phone 14500, a notebook computer 14600, a portable multimedia player (PMP) 14700, a tablet PC 14800, and the like.

The cloud computing server 14000 may combine the plurality of computing resources 14200 distributed in a cloud network and provide user terminals with a result of combining. The plurality of computing resources 14200 may include various data services, and may include data uploaded from user terminals. As described above, the cloud computing server 14000 may provide user terminals with desired services by combining video database distributed in different regions according to the virtualization technology.

User information about users who have subscribed for a cloud computing service is stored in the user DB 14100. The user information may include logging information, addresses, names, and personal credit information of the users. The user information may further include indexes of videos. Here, the indexes may include a list of videos that have already been reproduced, a list of videos that are being reproduced, a pausing point of a video that was being reproduced, and the like.

Information about a video stored in the user DB 14100 may be shared between user devices. For example, when a video service is provided to the notebook computer 14600 in response to a request from the notebook computer 14600, a reproduction history of the video service is stored in the user DB 14100. When a request to reproduce the video service is received from the smart phone 14500, the cloud computing server 14000 searches for and reproduces the video service, based on the user DB 14100. When the smart phone 14500 receives a video data stream from the cloud computing server 14000, a process of reproducing video by decoding the video data stream is similar to an operation of the mobile phone 12500 described above with reference to FIGS. 31 and 32.

The cloud computing server 14000 may refer to a reproduction history of a desired video service, stored in the user DB 14100. For example, the cloud computing server 14000 receives a request to reproduce a video stored in the user DB 14100, from a user terminal. If this video was being reproduced, then a method of streaming this video, performed by the cloud computing server 14000, may vary according to the request from the user terminal, i.e., according to whether the video will be reproduced, starting from a start thereof or a pausing point thereof. For example, if the user terminal requests to reproduce the video, starting from the start thereof, the cloud computing server 14000 transmits streaming data of the video starting from a first frame thereof to the user terminal. If the user terminal requests to reproduce the video, starting from the pausing point thereof, the cloud computing server 14000 transmits streaming data of the video starting from a frame corresponding to the pausing point, to the user terminal.

In this case, the user terminal may include the video decoding apparatus as described above with reference to FIGS. 1 through 27. In another example, the user terminal may include the video encoding apparatus as described above with reference to FIGS. 1 through 27. Alternatively, the user terminal may include both the video decoding apparatus and the video encoding apparatus as described above with reference to FIGS. 1 through 27.

Various applications of the video encoding method, the video decoding method, the video encoding apparatus, and the video decoding apparatus according to the exemplary embodiments described above with reference to FIGS. 1 through 27 are described above with reference to FIGS. 28 through 34. However, methods of storing the video encoding method and the video decoding method in a storage medium or methods of implementing the video encoding apparatus and the video decoding apparatus in a device described above with reference to FIGS. 1 through 27 are not limited to the exemplary embodiments described above with reference to FIGS. 28 through 34.

While this disclosure has been particularly shown and described with reference to exemplary embodiments thereof, it will be understood by those of ordinary skill in the art that various changes in form and details may be made therein without departing from the spirit and scope of the following claims. The exemplary embodiments should be considered in a descriptive sense only and not for purposes of limitation. Therefore, the scope of the disclosure is defined not by the detailed description of the disclosure but by the appended claims, and all differences within the scope will be construed as being included in the disclosure.

## Claims

1. A scalable video encoding method comprising:

   determining a reference layer image from among base layer images so as to perform inter-layer prediction on an enhancement layer image;
   generating an upsampled reference layer image by performing inter-layer (IL) interpolation filtering on the determined reference layer image; and
   when the upsampled reference layer image is determined via the IL interpolation filtering, determining, using the enhancement layer image, not to perform inter prediction on enhancement layer images, and encoding a residue component between the upsampled reference layer image and the enhancement layer image.

2. The scalable video encoding method of claim 1, wherein the determining of the reference layer image comprises:

performing motion compensation (MC) interpolation filtering four times on the base layer images, wherein the MC interpolation filtering performed four times comprises horizontal-direction interpolation filtering and vertical-direction interpolation filtering in each of L0 and L1 prediction directions, wherein the generating of the upsampled reference layer image comprises:

performing the IL interpolation filtering two times on the determined reference layer image, wherein the IL interpolation filtering performed two times comprises the IL interpolation filtering in a horizontal direction and the IL interpolation filtering in a vertical direction, and wherein interpolation filtering for the inter-layer prediction using the enhancement layer image is limited to the MC interpolation filtering performed four times and the IL interpolation filtering performed two times.

3. The scalable video encoding method of claim 2, further comprising:

determining whether or not to perform the inter prediction, based on a size and shape of a block and a prediction direction, in the enhancement layer image, and limiting a computational quantity of the interpolation filtering for the inter-layer prediction using the enhancement layer image, so that the computational quantity is not greater than a total sum of a first computational quantity of MC interpolation filtering for inter prediction using the base layer images and a second computational quantity of MC interpolation filtering for inter prediction using the enhancement layer images.

4. The scalable video encoding method of claim 1, wherein the encoding of the residue component comprises encoding a reference index indicating that a reference image used for the enhancement layer image is the upsampled reference layer image, and encoding a motion vector to indicate 0, wherein the motion vector is for the inter prediction using the enhancement layer images.

5. The scalable video encoding method of claim 3, wherein interpolation filtering on a block having a size of 8x8 or larger is limited to i) a combination of 8-tap MC interpolation filtering performed two times or ii) a combination of 8-tap MC interpolation filtering performed one time and 8-tap IL interpolation filtering performed one time, wherein interpolation filtering on a block having a size of 4x8 or larger is limited to iii) 8-tap IL interpolation filtering performed one time, iv) a combination of 6-tap IL interpolation filtering performed two times, v) a combination of 4-tap IL interpolation filtering performed two times, or vi) a combination of 2-tap IL interpolation filtering performed three times, and wherein interpolation filtering on a block having a size of 8x16 or larger is limited to vii) a combination of 8-tap MC interpolation filtering performed two times and 4-tap IL interpolation filtering performed one time, viii) a combination of 2-tap MC interpolation filtering performed four times and 2-tap IL interpolation filtering performed four times, ix) a combination of 8-tap MC interpolation filtering performed two times and 2-tap IL interpolation filtering performed two times, or x) a combination of 8-tap MC interpolation filtering performed two times and 8-tap IL interpolation filtering performed one time.

6. A scalable video decoding method comprising:

obtaining a reference index indicating a residue component and a reference layer image for inter-layer prediction using an enhancement layer image; based on the reference index, determining not to perform inter-prediction on enhancement layer images and determining the reference layer image from among base layer images; generating an upsampled reference layer image by performing inter-layer (IL) interpolation filtering on the determined reference layer image; and reconstructing the enhancement layer image by using the residue component with respect to the inter-layer prediction and the upsampled reference layer image.

7. The scalable video decoding method of claim 6, wherein the determining of the reference layer image comprises:

performing motion compensation (MC) interpolation filtering four times on the base layer images, wherein the MC interpolation filtering performed four times comprises horizontal-direction interpolation filtering and vertical-direction interpolation filtering in each of L0 and L1 prediction directions, wherein the generating of the upsampled reference layer image comprises:

performing the IL interpolation filtering two times on the determined reference layer image, wherein the IL interpolation filtering performed two times comprises the IL interpolation filtering in a horizontal direction and the IL interpolation filtering in a vertical direction, and

wherein interpolation filtering for the inter-layer prediction using the enhancement layer image is limited to the MC interpolation filtering performed four times and the IL interpolation filtering performed two times.

8. The scalable video decoding method of claim 7, wherein a computational quantity of the interpolation filtering for the inter-layer prediction using the enhancement layer image is not greater than a total sum of a first computational quantity of MC interpolation filtering for inter prediction using the base layer images and a second computational quantity of MC interpolation filtering for inter prediction using the enhancement layer images.

9. The scalable video decoding method of claim 6, wherein, when a reference index of the enhancement layer image indicates the upsampled reference layer image, the determining of the reference layer image comprises determining a motion vector as 0, wherein the motion vector is for inter prediction using the enhancement layer images.

10. The scalable video decoding method of claim 7, further comprising:

determining whether or not to perform inter prediction, based on at least one of a size and shape of a block and a prediction direction in the enhancement layer image; and
limiting the number of times the MC interpolation filtering is performed and the number of times the IL interpolation filtering is performed, based on at least one of the number of taps of an MC interpolation filter for the MC interpolation filtering for the inter prediction using the enhancement layer image, the number of taps of an IL interpolation filter for the IL interpolation filtering, and a size of a prediction unit of the enhancement layer image.

11. The scalable video decoding method of claim 10, wherein interpolation filtering on a block having a size of 8x8 or larger is limited to i) a combination of 8-tap MC interpolation filtering performed two times or ii) a combination of 8-tap MC interpolation filtering performed one time and 8-tap IL interpolation filtering performed one time,
wherein interpolation filtering on a block having a size of 4x8 or larger is limited to iii) 8-tap IL interpolation filtering performed one time, iv) a combination of 6-tap IL interpolation filtering performed two times, v) a combination of 4-tap IL interpolation filtering performed two times, or vi) a combination of 2-tap IL interpolation filtering performed three times, and
wherein interpolation filtering on a block having a size of 8x16 or larger is limited to vii) a combination of 8-tap MC interpolation filtering performed two times and 4-tap IL interpolation filtering performed one time, viii) a combination of 2-tap MC interpolation filtering performed four times and 2-tap IL interpolation filtering performed four times, ix) a combination of 8-tap MC interpolation filtering performed two times and 2-tap IL interpolation filtering performed two times, or x) a combination of 8-tap MC interpolation filtering performed two times and 8-tap IL interpolation filtering performed one time.

12. A scalable video encoding apparatus comprising:

a base layer encoder configured to perform inter prediction on base layer images; and
an enhancement layer encoder configured to:

determine, using an enhancement layer image, not to perform inter prediction on enhancement layer images when an upsampled reference layer image is determined by performing inter-layer (IL) interpolation filtering on a determined reference layer image, and
encode a residue component between the upsampled reference layer image and the enhancement layer image.

13. A scalable video decoding apparatus comprising:

a base layer decoder configured to reconstruct base layer images by performing motion compensation; and
an enhancement layer decoder configured to:

obtain a reference index indicating a residue component and a reference layer image for inter-layer prediction using an enhancement layer image,
determine, based on the reference index, not to perform inter-prediction on enhancement layer images,
generate an upsampled reference layer image by performing inter-layer (IL) interpolation filtering on the reference layer image determined from among the base layer images, and

reconstruct the enhancement layer image by using the residue component with respect to the inter-layer prediction and the upsampled reference layer image.

**14.** A computer-readable recording medium having recorded thereon a computer program for executing the scalable video encoding method of claim 1.

**15.** A computer-readable recording medium having recorded thereon a computer program for executing the scalable video decoding method of claim 6.

# FIG. 1

10

BASE LAYER
ENCODER
11

ENHANCEMENT
LAYER ENCODER
13

# FIG. 2

20

BASE LAYER
DECODER
21

ENHANCEMENT
LAYER DECODER
23

# FIG. 3

# FIG. 4

# FIG. 5

EL IL L1    55
EL MC L1    52
EL MC L1    51
EL          50
EL MC L0    53
EL MC L0    54
EL IL L0    56

INTER-LAYER PREDICTION

INTER-LAYER PREDICTION

BL MC L1    47
BL MC L1    46
BL          45
BL MC L0    48
BL MC L0    49

EP 2 961 167 A1

# FIG. 6

# FIG. 7

FIG. 8

| PREDICTION MODE | bi | bi | bi | bi | bi | uni | bi | uni |
|---|---|---|---|---|---|---|---|---|
| PARTITION TYPE | 4x8 | 8x4 | 8x8 | 4x16 | 16x4 | 4x8 | 8x16 | 8x4 |

←———— NO USE ————→ | ———— DECREASE IN MEMORY BANDWIDTH ————→

FIG. 9

| PARTITION TYPE | 4x8 | 8x4 | 8x8 | 4x16 | 16x4 | 8x16 | 8x32 |
|---|---|---|---|---|---|---|---|

———— DECREASE IN MEMORY BANDWIDTH ————→

# FIG. 10

| | TWO-LAYER INDIVIDUAL CODING | TWO-LAYER REFERENCE CODING | |
|---|---|---|---|
| | | REGULAR INTER PREDICTION REFERENCE IMAGE | INTER-LAYER PREDICTION REFERENCE IMAGE |
| ENHANCEMENT LAYER INTER PREDICTION | ENHANCEMENT LAYER L0 MOTION COMPENSATION • HORIZONTAL MC INTERPOLATION FILTERING • VERTICAL MC INTERPOLATION FILTERING ENHANCEMENT LAYER L1 MOTION COMPENSATION • HORIZONTAL MC INTERPOLATION FILTERING • VERTICAL MC INTERPOLATION FILTERING | | |
| INTER-LAYER PREDICTION | N/A | N/A | GENERATION OF INTER-LAYER REFERENCE IMAGE (UPSAMPLING) • HORIZONTAL IL INTERPOLATION FILTERING • VERTICAL IL INTERPOLATION FILTERING |
| BASE LAYER INTER PREDICTION | BASE LAYER L0 MOTION COMPENSATION • HORIZONTAL MC INTERPOLATION FILTERING • VERTICAL MC INTERPOLATION FILTERING BASE LAYER L1 MOTION COMPENSATION • HORIZONTAL MC INTERPOLATION FILTERING • VERTICAL MC INTERPOLATION FILTERING | | |

## FIG. 11

| | TWO-LAYER INDIVIDUAL CODING | TWO-LAYER REFERENCE CODING | |
| --- | --- | --- | --- |
| | | REGULAR INTER PREDICTION REFERENCE IMAGE | INTER-LAYER PREDICTION REFERENCE IMAGE |
| ENHANCEMENT LAYER INTER PREDICTION | ENHANCEMENT LAYER L0 MOTION COMPENSATION • HORIZONTAL MC INTERPOLATION FILTERING • VERTICAL MC INTERPOLATION FILTERING ENHANCEMENT LAYER L1 MOTION COMPENSATION • HORIZONTAL MC INTERPOLATION FILTERING • VERTICAL MC INTERPOLATION FILTERING | ENHANCEMENT LAYER L0 MOTION COMPENSATION • HORIZONTAL MC INTERPOLATION FILTERING • VERTICAL MC INTERPOLATION FILTERING ENHANCEMENT LAYER L1 MOTION COMPENSATION • HORIZONTAL MC INTERPOLATION FILTERING •VERTICAL MC INTERPOLATION FILTERINg | L0, L1 DIRECTIONS MVx=MVy=0 (MC INTERPOLATION FILTERING IS SKIPPED) |
| INTER-LAYER PREDICTION | N/A | N/A | INTER-LAYER REFERENCE IMAGE IS GENERATED (UPSAMPLING) • HORIZONTAL IL INTERPOLATION FILTERING • VERTICAL IL INTERPOLATION FILTERING |
| BASE LAYER INTER PREDICTION | BASE LAYER L0 MOTION COMPENSATION • HORIZONTAL MC INTERPOLATION FILTERING • VERTICAL MC INTERPOLATION FILTERING BASE LAYER L1 MOTION COMPENSATION • HORIZONTAL MC INTERPOLATION FILTERING • VERTICAL MC INTERPOLATION FILTERING | | |

EP 2 961 167 A1

## FIG. 12

| INTER PREDICTION | | INTER-LAYER PREDICTION | | ALLOWED MINIMUM BLOCK SIZE | REMARK |
|---|---|---|---|---|---|
| NUMBER OF TAPS OF INTERPOLATION FILTERING (L, CH) | NUMBER OF TIMES OF FILTERING | NUMBER OF TAPS OF INTERPOLATION FILTERING (L, CH) | NUMBER OF TIMES OF FILTERING | | |
| 8, 4 | 2 | NA | 0 | 8x8 | H.265/HEVC bi-pred MC |
| 6, 2 | 2 | NA | 0 | 4x4 | H.264 INTERPOLATION FILTER |
| NA | 0 | 8, 4 | 2 | 8x8 | 8X8 IL INTERPOLATION FILTERING IS AVAILABLE TWO TIMES |
| 8, 4 | 1 | 8, 4 | 1 | 8x8 | COMBINATION OF MC INTERPOLATION FILTERING PERFORMED ONE TIME AND IL INTERPOLATION FILTERING PERFORMED ONE TIME |
| NA | 0 | 8, 4 | 1 | 4x8 | IL INTERPOLATION FILTERING PERFORMED ONE TIME |
| NA | 0 | 6, 2 | 2 | 4x8 | IL INTERPOLATION FILTERING PERFORMED TWO TIMES |
| NA | 0 | 4, 2 | 2 | 4x8 | IL INTERPOLATION FILTERING PERFORMED TWO TIMES |
| NA | 0 | 2, 2 | 3 | 4x8 | IL INTERPOLATION FILTERING PERFORMED THREE TIMES |
| 8, 4 | 2 | 4, 2 (2, 2) | 1 | 8x16 | COMBINATION OF MC INTERPOLATION FILTERING PERFORMED TWO TIMES AND IL INTERPOLATION FILTERING PERFORMED ONE TIME |
| 2, 2 | 4 | 2, 2 | 2 | 8x16 | COMBINATION OF MC INTERPOLATION FILTERING PERFORMED FOUR TIMES AND IL INTERPOLATION FILTERING PERFORMED TWO TIMES |
| 8, 4 | 2 | 2, 2 | 2 | 8x16 | COMBINATION OF MC INTERPOLATION FILTERING PERFORMED TWO TIMES AND IL INTERPOLATION FILTERING PERFORMED TWO TIMES |
| 8, 4 | 2 | 8, 4 | 1 | 8x16 | COMBINATION OF MC INTERPOLATION FILTERING PERFORMED TWO TIMES AND IL INTERPOLATION FILTERING PERFORMED ONE TIME |

EP 2 961 167 A1

# FIG. 13

START

DETERMINE REFERENCE LAYER IMAGE
FROM AMONG BASE LAYER IMAGES —131

GENERATE UPSAMPLED REFERENCE LAYER
IMAGE VIA IL INTERPOLATION FILTERING —133

ENCODE RESIDUE COMPONENT BETWEEN UPSAMPLED
REFERENCE LAYER IMAGE AND ENHANCEMENT
LAYER IMAGE, WITHOUT INTER PREDICTION USING
ENHANCEMENT LAYER IMAGES —135

END

# FIG. 14

START

OBTAIN RESIDUE COMPONENT AND REFERENCE
INDEX FOR INTER-LAYER PREDICTION —141

DETERMINE REFERENCE LAYER IMAGE FROM AMONG
BASE LAYER IMAGES, WITHOUT INTER PREDICTION
USING ENHANCEMENT LAYER IMAGES, BASED ON
REFERENCE INDEX —143

GENERATE UPSAMPLED REFERENCE LAYER
IMAGE VIA IL INTERPOLATION FILTERING —145

RECONSTRUCT ENHANCEMENT LAYER IMAGE BY USING
RESIDUE COMPONENT AND UPSAMPLED REFERENCE
LAYER IMAGE —147

END

# FIG. 15

100

110
MAXIMUM
CODING UNIT
SPLITTER

120
CODING
UNIT
DETERMINER

130
OUTPUT UNIT

# FIG. 16

200

210
RECEIVER

220
IMAGE DATA AND
ENCODING
INFORMATION
EXTRACTOR

230
IMAGE DATA
DECODER

# FIG. 17

|64|64|32|32|
|---|---|---|---|

64×64    64×32    32×64    32×32

32×32    32×16    16×32    16×16

16×16    16×8    8×16    8×8

8×8    8×4    4×8    4×4

315

335  325

RESOLUTION:1920×1080
MAXIMUM SIZE OF CODING UNIT:64
MAXIMUM DEPTH=2

— 310

RESOLUTION:1920×1080
MAXIMUM SIZE OF CODING UNIT:64
MAXIMUM DEPTH=3

— 320

RESOLUTION:352×288
MAXIMUM SIZE OF CODING UNIT:16
MAXIMUM DEPTH=1

— 330

# FIG. 18

400

405 CURRENT FRAME

410 INTRA PREDICTOR

420 MOTION ESTIMATOR

425 MOTION COMPENSATOR

430 TRANSFORMER

440 QUANTIZER

450 ENTROPY ENCODER

455 BITSTREAM

460 INVERSE DEQUANTIZER

470 INVERSE TRANSFORMER

480 DEBLOCKING UNIT

490 OFFSET COMOENSATING UNIT

495 REFERENCE FRAME

# FIG. 19

EP 2 961 167 A1

**FIG. 20**

MAXIMUM CODING UNIT

MAXIMUM HEIGHT AND MAXIMUM WIDTH OF CODING UNIT = 64    MAXIMUM DEPTH=3

600

64 / 610 — 64 — 64×64

64 / 612 — 32 — 64×32

32 / 614 — 64 — 32×64

32 / 616 — 32 — 32×32

32 / 620 — 32 — 32×32

32 / 622 — 16 — 32×16

16 / 624 — 32 — 16×32

16 / 626 — 16 — 16×16

16 / 630 — 16 — 16×16

16 / 632 — 8 — 16×8

8 / 634 — 16 — 8×16

8 / 636 — 8 — 8×8

8 / 640 — 8 — 8×8

8 / 642 — 4 — 8×4

4 / 644 — 8 — 4×8

4 / 646 — 4 — 4×4

PREDICTION UNIT/PARTITION

MINIMUM CODING UNIT

DEEPER CODING UNITS

EP 2 961 167 A1

# FIG. 21

CODING UNIT (710)

64

64    64×64

TRANSFORMATION UNIT (720)

32

32    32×32

# FIG. 22

PARTITION TYPE (800)

2N  802    2N  804    N  806    N  808

2N  CU_0    N  0 / 1    2N  0 | 1    N  0 | 1 / 2 | 3

64×64

PREDICTION MODE (810)

812    814    816

INTRA MODE    INTER MODE    SKIP MODE

SIZE OF TRANSFORMATION UNIT(820)

822    824    826    828

INTRA    INTER

# FIG. 23

EP 2 961 167 A1

DEPTH=0

SPLIT (920)

910

2N_0

| 2N_0 | |
|---|---|
| 2N_0 | CU_0 |

900

2N_0

| 2N_0 | |
|---|---|
| 2N_0 | |

912

2N_0

| 2N_0 | N_0 |
|---|---|
| 0 | |
| 1 | |

914

N_0

| N_0 | |
|---|---|
| 2N_0 | 0 | 1 |

916

N_0

| N_0 | |
|---|---|
| N_0 | 0 | 1 |
| | 2 | 3 |

918

| 0 | 1 |
|---|---|
| 2 | 3 |

930

DEPTH=1

SPLIT (950)

940

2N_1

| 2N_1 | |
|---|---|
| 2N_1 | CU_1 |

930

2N_1

| 2N_1 | |
|---|---|
| 2N_1 | |

942

2N_1

| 2N_1 | N_1 |
|---|---|
| 0 | |
| 1 | |

944

N_1

| N_1 | |
|---|---|
| 2N_1 | 0 | 1 |

946

N_1

| N_1 | |
|---|---|
| N_1 | 0 | 1 |
| | 2 | 3 |

948

| 0 | 1 |
|---|---|
| 2 | 3 |

960

SPLIT (970)

· · ·

DEPTH=d-1

990

2N_(d-1)

| 2N_(d-1) | |
|---|---|
| 2N_(d-1) | CU_(d-1) |

980

2N_(d-1)

| 2N_(d-1) | |
|---|---|
| 2N_(d-1) | |

992

2N_(d-1)

| 2N_(d-1) | N_(d-1) |
|---|---|
| 0 | |
| 1 | |

994

N_(d-1)

| N_(d-1) | |
|---|---|
| 2N_(d-1) | 0 | 1 |

996

N_(d-1)

| N_(d-1) | |
|---|---|
| N_(d-1) | 0 | 1 |
| | 2 | 3 |

998

2N_d

| 2N_d | |
|---|---|
| 2N_d | |

999

FIG. 24

```
                        1014        1016
           1012
                              1020  1022
                    1018
                              1024  1026

                1030  1032
     1028
                1040 1042  1048
                1044 1046
                                    1054
     1050       1052
```

CODING UNIT (1010)

FIG. 25

1014 — 1016

1022

1032

1048

1054

1050   1052

PREDICTION UNIT (1060)

# FIG. 26

1014 — 1016 — 1022 — 1032 — 1048 — 1054 — 1050 — 1052 — TRANSFORMATION UNIT (1070)

# FIG. 27

CU — 1300

| 1302 | 1312 | 1314 |
| | 1316 | **1318** |
| 1304 | 1306 | |

PU

1322   1324   1326   1328   1332   1334   1336   1338

2Nx2N   2NxN   Nx2N   NxN   2NxnU   2NxnD   nLx2N   nRx2N

TU

TU size flag=0 — 1342

TU size flag=1 — 1344

TU

TU size flag=0 — 1352

TU size flag=1 — 1354

EP 2 961 167 A1

FIG. 28

Se

Tr

DISC (26000)

FIG. 29

26700

26800

26000

FIG. 30

# FIG. 31

12500

12530

12580

12510

12520

12560

12540

12550

12540

12570

# FIG. 32

DISPLAY SCREEN — 12520

LCD CONTROLLER — 12620

IMAGE DECODER — 12690

MUX/DEMUX — 12680

STORAGE MEDIUM — 12570

RECORDING/READING UNIT — 12670

COMMUNICATION CIRCUIT — 12610

MODULATION/DEMODULATION UNIT — 12660

MICROPHONE — 12550

SOUND PROCESSOR — 12650

SPEAKER — 12580

12510

SYNCHRONIZATION BUS (12730)

POWER SUPPLY CIRCUIT — 12700

CENTRAL CONTROLLER — 12710

OPERATION INPUT CONTROLLER — 12640

OPERATION PANEL — 12540

IMAGE ENCODER — 12720

CAMERA INTERFACE — 12630

CAMERA — 12530

12500

# FIG. 33

SATELLITE (12900)

12820

MONITOR
(12840)

REPRODUCING
APPARATUS
(12830)

방BROADCASTING
STATION (12890)

ANTENNA (12910)

AUTOMOBILE
(12920)

HOUSEHOLD
ANTENNA (12860)

AUTOMOBILE NAVIGATION
SYSTEM (12930)

CABLE ANTENNA (12850)

TV MONITOR
(12880)

SET-TOP
BOX (12870)

12960

TV (12810)

12970 SD

HARD DISC
RECORDER (12950)

EP 2 961 167 A1

# FIG. 34

EP 2 961 167 A1

| INTERNATIONAL SEARCH REPORT | International application No. |
|---|---|
| | **PCT/KR2014/001516** |

**A. CLASSIFICATION OF SUBJECT MATTER**

*H04N 19/187(2014.01)i, H04N 19/30(2014.01)i*

According to International Patent Classification (IPC) or to both national classification and IPC

**B. FIELDS SEARCHED**

Minimum documentation searched (classification system followed by classification symbols)
H04N 19/187; H04N 19/109; H04N 7/26; H04N 19/105; H04B 1/66; H04N 7/36; H04N 19/30

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: improvement layer, inter prediction, encoding

**C. DOCUMENTS CONSIDERED TO BE RELEVANT**

| Category* | Citation of document, with indication, where appropriate, of the relevant passages | Relevant to claim No. |
|---|---|---|
| Y | KR 10-2009-0039795 A (LG ELECTRONICS INC.) 22 April 2009<br>See abstract, paragraphs [34]-[48], [67]-[70] and figure 1. | 1,4,6,10,12-15 |
| A | | 2-3,5,7-9,11 |
| Y | KR 10-2007-0116872 A (SHARP KABUSHIKI KAISHA) 11 December 2007<br>See paragraphs [38]-[40], claim 1 and figure 3. | 1,4,6,10,12-15 |
| A | KR 10-2013-0000334 A (KWANGWOON UNIVERSITY INDUSTRY-ACADEMIC<br>COLLABORATION FOUNDATION et al.) 02 January 2013<br>See abstract, paragraphs [0125]-[0211], claims 1-7 and figures 8-13. | 1-15 |
| A | KR 10-2010-0074283 A (QUALCOMM INCORPORATED) 01 July 2010<br>See abstract, claims 1-4 and figures 2-6. | 1-15 |
| A | WO 2013-006310 A1 (VIDYO, INC.) 10 January 2013<br>See abstract, pages 9-15 and figures 6-9. | 1-15 |

☐ Further documents are listed in the continuation of Box C.  ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 23 MAY 2014 (23.05.2014) | **23 MAY 2014 (23.05.2014)** |

| Name and mailing address of the ISA/KR | Authorized officer |
|---|---|
| Korean Intellectual Property Office<br>Government Complex-Daejeon, 189 Seonsa-ro, Daejeon 302-701,<br>Republic of Korea | |
| Facsimile No. 82-42-472-7140 | Telephone No. |

Form PCT/ISA/210 (second sheet) (July 2009)

INTERNATIONAL SEARCH REPORT
Information on patent family members

International application No.

**PCT/KR2014/001516**

| Patent document cited in search report | Publication date | Patent family member | Publication date |
|---|---|---|---|
| KR 10-2009-0039795 A | 22/04/2009 | EP 1980107 A1 | 15/10/2008 |
| | | EP 1980107 A4 | 13/01/2010 |
| | | EP 1985121 A1 | 29/10/2008 |
| | | EP 1985121 A4 | 13/01/2010 |
| | | EP 2082580 A1 | 29/07/2009 |
| | | EP 2082580 A4 | 13/01/2010 |
| | | JP 2009-538084 A | 29/10/2009 |
| | | JP 2009-538085 A | 29/10/2009 |
| | | JP 2009-538086 A | 29/10/2009 |
| | | KR 10-0896289 B1 | 07/05/2009 |
| | | KR 10-0896290 B1 | 07/05/2009 |
| | | KR 10-0896291 B1 | 07/05/2009 |
| | | KR 10-2008-0093425 A | 21/10/2008 |
| | | KR 10-2008-0093426 A | 21/10/2008 |
| | | KR 10-2008-0099245 A | 12/11/2008 |
| | | US 2009-0010331 A1 | 08/01/2009 |
| | | US 2009-0010332 A1 | 08/01/2009 |
| | | US 2009-0060040 A1 | 05/03/2009 |
| | | US 2010-0158116 A1 | 24/06/2010 |
| | | US 7742524 B2 | 22/06/2010 |
| | | US 7742532 B2 | 22/06/2010 |
| | | US 8184698 B2 | 22/05/2012 |
| | | US 8229274 B2 | 24/07/2012 |
| | | WO 2008-060125 A1 | 22/05/2008 |
| | | WO 2008-060126 A1 | 22/05/2008 |
| | | WO 2008-060127 A1 | 22/05/2008 |
| KR 10-2007-0116872 A | 11/12/2007 | CN 102075755 A | 25/05/2011 |
| | | EP 1859388 A2 | 28/11/2007 |
| | | EP 1859388 A4 | 08/09/2010 |
| | | JP 2008-533908 A | 21/08/2008 |
| | | JP 2010-022020 A | 28/01/2010 |
| | | KR 10-0937272 B1 | 18/01/2010 |
| | | US 2006-0210185 A1 | 21/09/2006 |
| | | US 2012-0213296 A1 | 23/08/2012 |
| | | US 8175168 B2 | 08/05/2012 |
| | | WO 2006-101681 A2 | 28/09/2006 |
| | | WO 2006-101681 A3 | 16/04/2009 |
| KR 10-2013-0000334 A | 02/01/2013 | KR 10-2012-0138712 A | 26/12/2012 |
| | | WO 2012-173439 A2 | 20/12/2012 |
| | | WO 2012-173439 A3 | 04/04/2013 |
| | | WO 2012-173440 A2 | 20/12/2012 |
| | | WO 2012-173440 A3 | 04/04/2013 |
| KR 10-2010-0074283 A | 01/07/2010 | CN 101828399 A | 08/09/2010 |
| | | EP 2213100 A1 | 04/08/2010 |
| | | JP 2011-501571 A | 06/01/2011 |
| | | KR 10-2012-0060921 A | 12/06/2012 |

Form PCT/ISA/210 (patent family annex) (July 2009)

**INTERNATIONAL SEARCH REPORT**
Information on patent family members

International application No.

**PCT/KR2014/001516**

| Patent document cited in search report | Publication date | Patent family member | Publication date |
|---|---|---|---|
| | | TW 200934252 A | 01/08/2009 |
| | | US 2009-0097558 A1 | 16/04/2009 |
| | | WO 2009-052205 A1 | 23/04/2009 |
| WO 2013-006310 A1 | 10/01/2013 | US 2013-163660 A1 | 27/06/2013 |

Form PCT/ISA/210 (patent family annex) (July 2009)